# EUROPÄISCHE PATENTSCHRIFT

(11) **EP 0 848 660 B1**
(45) Veröffentlichungstag und Bekanntmachung des Hinweises auf die Patenterteilung: **17.10.2001**
(21) Anmeldenummer: 96930046.6
(22) Anmeldetag: 16.08.1996
(51) Int. Cl.: B29D 31/00, B29C 69/00, B29B 17/00

(54) **VERFAHREN ZUR HERSTELLUNG VON PROFILMATERIAL, INSBESONDERE FÜR DIE FENSTER- UND TÜRPRODUKTION**
PROCESS FOR PRODUCING PROFILED MATERIALS, IN PARTICULAR FOR DOOR AND WINDOW PRODUCTION
PROCEDE DE FABRICATION DE MATERIAUX PROFILES UTILES NOTAMMENT POUR FABRIQUER DES PORTES ET DES FENETRES

(30) Priorität: 17.08.1995 DE 19530270
(43) Veröffentlichungstag der Anmeldung: 24.06.1998
(73) Patentinhaber: Meeth, Ernst Josef, D-54531 Wallscheid (DE)
(72) Erfinder: Meeth, Ernst Josef, D-54531 Wallscheid (DE)
(74) Vertreter: Herzog, Markus, Dipl.-Phys. Dr.
(86) Internationale Anmeldenummer: EP9603611
(87) Internationale Veröffentlichungsnummer: WO9706942

(56) Entgegenhaltungen:
- CH-A- 642 901
- DE-A- 1 906 012
- DE-A- 2 334 645
- DE-A- 3 616 444
- FR-A- 2 579 926
- GB-A- 2 087 307
- GB-A- 2 173 563
- US-A- 4 247 508
- US-A- 4 546 022
- US-A- 5 087 189
- PATENT ABSTRACTS OF JAPAN vol. 015, no. 150 (C-0824), 16.April 1991 & JP,A,03 028252 (TAKIRON CO LTD), 6.Februar 1991,
- PATENT ABSTRACTS OF JAPAN vol. 015, no. 373 (C-0869), 19.September 1991 & JP,A,03 149244 (SEKISUI CHEM CO LTD), 25.Juni 1991,

## Beschreibung

Die Erfindung betrifft ein Verfahren zur Herstellung von, insbesondere zur Weiterverarbeitung in der Fenster- und Türproduktion geeignetem, Profilmaterial unter Verwendung von thermoplastischem Werkstoff durch Thermoplastifizieren des Werkstoffs und Strangverformung des thermoplastifizierten Werkstoffs umfassend die folgenden Maßnahmen:
a) es wird eine erste Mischkomponente aus thermoplastischen Kunststoffabfällen gebildet;
b) es wird eine zweite Mischkomponente mit einem Gehalt von Zuschlagstoffen bereitgestellt;
c) die erste und die zweite Mischkomponente werden intensiv miteinander vermischt, kompaktiert und durch Thermoplastifizieren der ersten Mischkomponente zu einem strangbildungsfähigen Gemisch vermischt.

In der klassischen Fenster- und Türproduktion werden die den Blendrahmen und den Flügelrahmen bildenden Profilschenkel regelmäßig aus Holz durch spanabhebende Bearbeitung hergestellt. Nach Beendigung der spanabhebenden Bearbeitung sind die Profilschenkel zum Zusammenbau der Flügel- und Blendrahmen fertig.

Daneben ist es seit vielen Jahren bekannt, Profilmaterial für die Herstellung von Flügelrahmen und Blendrahmen der Fenster-und Türherstellung aus thermoplastischem Kunststoff durch Extrudieren herzustellen. Hierzu wird der thermoplastische Kunststoff, insbesondere PVC, mittels eines Schneckenextruders durch eine Strangdüse getrieben, wobei vor dem Durchtritt durch die Strangdüse ein thermoplastischer Zustand des Kunststoffs erreicht wird und der aus der Düse austretende Strang hinter der Düse abgekühlt wird. Charakteristisch für dieses Verfahren ist es, daß das aus der Strangdüse gewonnene und abgekühlte, ggf. zwischengelagerte, Profilmaterial fertig zur Weiterverarbeitung für Flügelrahmen und Blendrahmen ist.

Es ist weiter bekannt, Profilmaterial für Flügel- und Blendrahmenfertigung aus Leichtmetall zu extrudieren. Hierbei wird das Leichtmetall unter Kaltverformung durch eine Ziehdüse getrieben. Das am Ausgang der Ziehdüse erhaltene Profilmaterial wird nach Abkühlung von der durch die Verformungswärme erreichten Temperatur auf Zimmertemperatur zu Flügelrahmen und Blendrahmen weiterverarbeitet.

Allen bekannten Verfahren ist gemeinsam, daß die Profilausbildung in einem einzigen Profilgebungsvorgang erzielt wird
bei Holzverarbeitung durch Fräsen und/oder Verleimen,
bei Kunststoffverarbeitung durch Extrudieren des Kunststoffs und
bei Leichtmetallverarbeitung ebenfalls durch Extrudieren.

Jedes der bekannten Verfahren hat seine Vorteile und seine Nachteile.

Bei der Verwendung von Holz als Ausgangsmaterial werden in der Regel durch spanabhebende Bearbeitung Vollprofile gewonnen, die ohne irgendwelche Versteifungsmaßnahmen zur Herstellung von Flügelrahmen und Blendrahmen geeignet sind. Die Beschläge zur Verbindung von Flügelrahmen und Blendrahmen und auch etwaige Beschläge zum Einbau der Blendrahmen in Maueröffnungen können an jeder Stelle des jeweiligen Blend- bzw. Flügelrahmens durch Holzschrauben oder Nägel befestigt werden. Nachteilig ist, daß das Holz, auch wenn es gut getrocknet ist, einen erheblichen langfristigen Schwund besitzt, der mindestens teilweise nach Fertigstellung des jeweiligen Fensters bzw. der jeweiligen Tür und auch nach Einbau in die jeweilige Maueröffnung eintritt mit der Folge, daß zwischen Flügelrahmen und Blendrahmen Undichtigkeiten und Schwergängigkeiten auftreten können und Nachjustierungen erforderlich werden und daß im Anlagebereich von Blendrahmen und Mauerwerk Putzschäden oder Spalten auftreten können. Nachteilig ist weiter, daß das Holz einer Oberflächenbehandlung, insbesondere als Witterungsschutz, bedarf, die während der Gebrauchszeit mehrmals wiederholt werden muß.

Die Herstellung von Flügelrahmen und Blendrahmen aus Leichtmetall ist kostenaufwendig. Flügelrahmen und Blendrahmen aus Leichtmetall kommen in der Regel nur bei Bauwerken gehobener Qualität zum Einsatz. Die hohe Wärmeleitfähigkeit von Leichtmetall erfordert aufwendige Maßnahmen, um Wärme- und Kältebrücken zwischen Außenraum und Innenraum zu vermeiden. Die Profile werden in der Regel als Hohlprofile hergestellt, die relativ dünnwandig sein müssen, um die Flügel- und Blendrahmen auf ein akzeptables Gewicht zu bringen. Die Dünnwandigkeit der Profilwände führt zu Problemen in der Befestigung der Beschläge mit der Folge, daß komplizierte formschlüssige Befestigungslösungen bei der Befestigung der Beschläge angewandt werden müssen, die das Endprodukt verteuern. Vorteilhaft ist, daß die so hergestellten Fenster und Türen auch ohne besondere Schutzmaßnahmen witterungsbeständig sind.

Die Herstellung von Flügelrahmen und Blendrahmen aus extrudiertem Kunststoff, insbesondere extrudiertem PVC, ist kostengünstig, sowohl in der ursprünglichen Fertigung als auch während des Gebrauchs, da Witterungsschäden kaum zu erwarten sind. Aus Gründen der Geringhaltung des Materialeinsatzes und des Gewichts werden die Kunststoffprofile als relativ dünnwandige Hohlprofile hergestellt mit der Folge, daß in aller Regel nachträglich in die Kunststoffprofile Verstärkungseinlagen aus Metall eingebaut werden müssen, um den Profilen die geforderte Biegesteifigkeit und den Flügelrahmen und Blendrahmen die notwendige Verwindungssteifigkeit zu verleihen. Die Anbringung von Beschlägen ist auf starkwandige und mehrfachwandige Bereiche sowie auf solche Bereiche beschränkt, in denen Metallverstärkungen vorhanden sind. Insoweit als Beschläge in Bereichen mit Metallverstärkung montiert werden, tritt eine Erschwerung des Setzens von Befestigungsschrauben ein.

Aus der CH-A-642 901 ist ein Verfahren zum Extrudieren von Stäben bekannt, bei welchem PVC-Abfälle für einen neuen Produktionsprozeß wiederverwendet werden. Dabei wird dem Extruder feuchtes PVC-Mahlgut zugeführt. In dem PVC-Mahlgut können bis zu 25 Gew.% Fremdstoffe, z.B. andere Kunststoffe, Metallspäne, Gummi und handelsübliche Füllstoffe, enthalten sein. Auch der Armierung dienende Stoffe, beispielsweise Glasfasern, können zugesetzt werden, welche zu einer Verbesserung des Verfahrenserzeugnisses beitragen können.

Aus der DE-A-1 906 012 ist es bekannt, bei einem Verfahren zum kontinuierlichen Herstellen maßgenauer Profile aus thermoplastischen Kunststoffen unmittelbar im Anschluß an einen Extruder Mehrstufenmatritzenschneidwerkzeuge anzuordnen, welche von dem extrudierten Profil sofort nach dessen Erstarren durchlaufen und dabei spanend nachbearbeitet werden. Dabei sollen die bei der spanenden Nachbearbeitung auftretenden Schneidkräfte von den beim Extrudieren auftretenden Kräften ferngehalten werden. Hierzu kann die Profilabzugsgeschwindigkeit konstant gehalten werden, während die Schneidgeschwindigkeit unabhängig davon eingestellt wird. Es bleibt aber dabei, daß der aus dem Extruder kommende Strang ungeteilt durch die Mehrstufenmatritzenschneidwerkzeuge hindurch läuft.

Der Erfindung liegt die Aufgabe zugrunde, ein Verfahren zur Herstellung von Profilmaterial, insbesondere für die Fenster-und Türproduktion, anzugeben, das wesentliche Nachteile der bekannten Verfahren vermeidet und wesentliche Vorteile dieser bekannten Verfahren miteinander vereint.

Erfindungsgemäß werden zur Lösung dieser Aufgabe die folgenden weitern Maßnahmen vorgeschlagen:
d) das strangbildungsfähige Gemisch wird unter Druck in einen Vorprofilbildungskanal bis zu dessen Auffüllung eingeleitet, dort zu einem starkwandigen Vorprofil ausgeformt, durch Abkühlung wenigstens teilweise ausgehärtet und danach aus dem Vorprofilbildungskanal als ein der Länge des Vorprofilbildungskanals entsprechender Längsabschnitt entnommen;
e) das Vorprofil wird während einer Verweilzeit abschnittweise einem Schwundprozeß überlassen, welche Verweilzeit ausreicht, um einen wesentlichen Teil des insgesamt zu erwartenden Schwunds eintreten zu lassen;
f) nach Ablauf dieser Verweilzeit wird das Vorprofil abschnittweise durch spanabhebende Materialabtragung auf mindestens Teilen seines Umfangs zu einem Zwischenprofil ausgeformt;
g) das Zwischenprofil wird wenigstens auf einem Teil seines Profilumfangs mit einer Oberflächenvergütungsschicht beschichtet.

Dabei kann die Verweilzeit beispielsweise ca. 5 bis 10 Stunden betragen.

Die Verarbeitung von thermoplastischen Kunststoffabfällen gemäß Merkmal a) ist an sich bei der Herstellung von untergeordneten Produkten bekannt. Die Verarbeitung thermoplastischer Kunststoffabfälle zu Profilmaterial für die Fenster- und Türproduktion wurde bisher nicht in Betracht gezogen, weil man in Kenntnis der bisherigen Fertigung von Tür- und Fensterprofilen aus Kunststoff bei Einsatz von Kunststoffabfällen mit unzureichenden Festigkeitseigenschaften und vor allem unzureichender Oberflächenqualität rechnen mußte.

Dadurch, daß erfindungsgemäß entsprechend Merkmal d) das Vorprofil als starkwandiges Profil und insbesondere als Vollprofil hergestellt wird und daß gemäß Merkmal b) eine zweite Mischkomponente zu den Kunststoffabfällen zugeführt wird, welche wesentlichen Anteile von gewichtsreduzierenden und/oder festigkeitserhöhenden Zuschlagstoffen enthält, wird es möglich, trotz der geringeren Qualität des eingesetzten Kunststoffs ausreichende Festigkeit bei akzeptablem Gewicht zu erhalten und gleichzeitig ein Profil bereitzustellen, welches an beliebigen Stellen die Anbringung von Beschlagteilen mittels herkömmlicher Befestigungsmittel, insbesondere Holzschrauben, erlaubt.

Der auf den ersten Blick ungewöhnlich erscheinende, in den Merkmalen d) und f) ausgedrückte Gedanke, Profile für die Fenster-und Türproduktion einem mehrfachen Profilierungsvorgang zu unterwerfen, nämlich einem Profilierungsvorgang durch Strangbildung und einem zweiten Profilierungsvorgang durch spanabhebende Bearbeitung, ermöglicht es, durch Einschaltung einer Verweilzeit zwischen den beiden Profilierungsvorgängen einen wesentlichen Teil des zu erwartenden Schwunds in eine Zeitspanne vor der endgültigen Profilierung durch spanabhebende Bearbeitung zu legen, so daß der nach erfolgter spanabhebender Profilbearbeitung noch verbleibende Restschwund ohne wesentliche Auswirkung auf das Zusammenwirken von Flügelrahmen und Blendrahmen und auf das Zusammenspiel von Blendrahmen und Mauerwerk bleibt. Dies ist ein sehr wesentlicher Gesichtspunkt des erfindungsgemäßen Verfahrens, insbesondere auch bei Berücksichtigung der nachfolgenden Überlegungen: Würde man sauber sortiertes Neu-Kunststoffmaterial einsetzen, so könnte man dessen Schrumpf- oder Schwundeigenschaften bei der Profilgebung, d.h. bei der Festlegung von Extruderdüsen oder sonstigen formgebenden Teile, so berücksichtigen, daß Flügelrahmen und Blendrahmen nach eingetretenem Schwund in gewünschter Weise zueinander passen. Man könnte dann entweder auf eine spanabhebende Nachbearbeitung überhaupt verzichten oder aber die spanabhebende Nachbearbeitung unmittelbar im Anschluß an die Aushärtung des Vorprofils durchführen. Bei Verarbeitung von Kunststoffabfällen gemäß Merkmal a) muß man aber nun mit einer starken Streuung hinsichtlich der Schrumpf- oder Schwundeigenschaften rechnen, so daß es praktisch nicht möglich ist, einen bestimmten zu erwartenden Schwund von vorneherein so ins Kalkül zu ziehen, daß nach eingetretenem Schwund an den Profilteilen des Flügelrahmens und an den Profilteilen des Blendrahmens diese beiden Rahmen in gewünschter Weise zusammenpassen. Hier schafft die erfindungsgemäße Arbeitsweise Abhilfe insofern, als sie gemäß Merkmal e) eine Verweilzeit zwischen der strangbildenden Profilierung und der spanabhebenden Profilierung einschaltet. Es wurde nämlich erkannt, daß auch bei stark streuenden Schwundeigenschaften infolge unterschiedlicher Zusammensetzung des aus verschiedenen Ressourcen kommenden Abfallkunststoffs auch bei Zusetzen von gewichtsreduzierenden und/oder festigkeitserhöhenden Zuschlagstoffen ein wesentlicher Teil des zu erwartenden Gesamtschwunds in einer verhältnismäßig kurzen Zeit von beispielsweise ca. 5 bis ca. 10 Stunden nach der Strangverformung eintritt, so daß der Schwund, der nach dieser Verweilzeit und nach der an diese Verweilzeit anschließenden spanabhebenden Bearbeitung noch eintritt, entweder unbeachtlich oder aber weitgehend unabhängig von den jeweils eingesetzten Kunststoffabfällen so kalkulierbar ist, daß das gewünschte Zusammenspiel von Flügelrahmen und Blendrahmen am fertigen Fenster bzw. an der fertigen Tür über lange Zeit hinweg erhalten bleibt und auch an der Trennstelle zwischen Blendrahmen und Maueröffnung kein störender Schwund mehr eintritt.

Dadurch daß nach erfolgter spanabhebender Materialabtragung das dann erhaltene Zwischenprofil gemäß Merkmal g) wenigstens auf einem Teil seines Profilumfangs mit einer Oberflächenvergütungsschicht beschichtet wird, werden die zunächst befürchteten unzureichenden Oberflächeneigenschaften mechanischer, insbesondere aber optischer Art beseitigt, und es wird ein Profilmaterial letztlich erhalten, welches in seinen optischen Oberflächeneigenschaften denen von Leichtmetallprofilen, Neu-Kunststoffprofilen und oberflächenbehandelten Holzprofilen zumindest gleichwertig ist.

Die Verwendung von thermoplastischen Kunststoffabfällen gemäß Merkmal a) führt zum einen zu einer Verbilligung der Fenster-und Türproduktion, weil solche Kunststoffabfälle aus unterschiedlichen Ressourcen in großem Umfang billig zur Verfügung stehen, beispielsweise in Form von Industrie-Kunststoffabfällen, insbesondere aber auch in der Form von Kommunal- und Haushaltskunststoffabfällen, die nach grober Sortierung, beispielsweise nach dem DSD-System, gewonnen werden. Daneben löst die erfindungsgemäße Verfahrensweise, indem sie thermoplastische Kunststoffabfälle zum Einsatz bringt, auch das Problem der Entsorgung der in großem Umfang anfallenden Kunststoffabfälle.

Wenn billige Neu-Kunststoffe, beispielsweise aus einer Überschußproduktion von Kunststoffen zur Verfügung stehen, so können auch diese zur Durchführung des erfindungsgemäßen Verfahrens zum Einsatz gebracht werden. Dadurch vereinfachen sich verschiedene Teilvorgänge im Rahmen des Gesamtverfahrens. Das gleiche gilt für den Fall, daß einheitliche, nicht verunreinigte Kunststoffabfälle, beispielsweise Schnittabfälle aus der Verarbeitung von Kunststoffen zu anderen Produkten zur Verfügung stehen.

Durch die Beigabe von gewichtsreduzierenden und/oder festigkeitserhöhenden Zuschlagstoffen in unterschiedlicher Menge können die mechanischen Eigenschaften in großer Bandbreite nach Wunsch eingestellt werden, insbesondere unter den Gesichtspunkten Volumeneinheitsgewicht, des kompakten, kavitätenfreien Profilmaterials, der Biegesteifigkeit des Profilmaterials und der Ausreißfestigkeit der zum Befestigen von Beschlagteilen dienenden Befestigungselemente.

Die Zuschlagstoffe können darüberhinaus auch in Abhängigkeit vom Standort variiert werden je nachdem, welche Zuschlagstoffe am jeweiligen Produktionsstandort in ausreichender Menge zu akzeptablem Preis zur Verfügung stehen.

Bevorzugt werden als Kunststoffabfälle überwiegend Kunststoffabfälle auf Polyolefin-Basis, insbesondere PE-Basis oder/und PP-Basis, verwendet, alternativ aber auch solche auf ABS-Basis, oder Gemische davon. Diese Kunststoffabfälle zeichnen sich nicht nur durch günstige Verarbeitungseigenschaften im Rahmen des erfindungsgemäßen Verfahrens aus, sondern sind darüberhinaus vorteilhaft im Hinblick auf die spätere Entsorgung der Fenster und Türen, wenn diese entweder nach Ablauf ihrer üblichen Gebrauchsdauer oder durch vorher eintretende Ereignisse entsorgt werden. Man kann die Profile bzw. die aus ihnen hergestellten Endprodukte dann entweder erneut zu Rohmaterial für Fensterproduktion oder für weniger anspruchsvolle Einsatzgebiete verwenden. Man kann sie aber auch der Müllverbrennung zuführen, ohne daß Probleme in den Verbrennungsanlagen zu erwarten sind.

Der Gewichtsanteil der zweiten Mischkomponente, bezogen auf das Gesamtgewicht des Vorprofils, kann zwischen 1 und 60 Gew.% betragen.

Für das erfindungsgemäße Verfahren geeignete Kunststoffabfälle stehen insbesondere in Form von Folienabfällen, z.B. als Abfälle von Verpackungsfolien, Abdeckfolien, Bedachungsfolien oder Bechermaterial (Yoghurtbecher), zur Verfügung. Diese Kunststoffabfälle können im wesentlichen ungereinigt und je nach Anlagenaufbau auch unzerkleinert zum Einsatz gebracht werden; sie können in Form von Ballen an den jeweiligen Produktionsstandort gebracht werden, so daß auch das logistische Problem im Vergleich zum Antransport von beispielsweise Holzstäben oder Holzballen wesentlich reduziert ist. Die Kunststoffabfälle können im wesentlichen ungereinigt zum Einsatz kommen; anhaftender Schmutz, etwa Rückstände von Verpackungsgut im Falle von Verpackungsmaterialrückständen, stört im Normalfall nicht und braucht nicht ausgewaschen zu werden. Es ist aber denkbar, daß wiederum in Abhängigkeit von den jeweiligen Ressourcen die Kunststoffabfälle mechanisch oder/und magnetisch von die Profilbildung störenden Fremdteilen befreit werden.

Es ist besonders darauf hinzuweisen, daß die erfindungsgemäß zur Anwendung kommenden Kunststoffabfälle, so wie sie in Industrie, Haushalt oder Kommune anfallen, ggf. zerkleinert, als erste Mischkomponente mit der zweiten Mischkomponente vermischt werden können. Dies soll besagen, daß bei dem erfindungsgemäßen Verfahren nicht notwendigerweise eine Art des Recyclings von Kunststoffabfällen angewandt wird, bei der die Kunststoffabfälle nach Trocknung und Reinigung zwischenthermoplastifiziert, zu einem Strang ausgeformt, wieder abgekühlt und dann zerkleinert werden. Diese Arbeitsweise kann beim erfindungsgemäßen Verfahren vermieden werden, wodurch die Energiebilanz des erfindungsgemäßen Verfahrens wesentlich verbessert wird auch dann, wenn eine Trockenreinigung mechanischer oder magnetischer Art durchgeführt wird, und auch dann, wenn die Kunststoffabfälle zerkleinert werden.

Es empfiehlt sich, daß die Kunststoffabfälle vor der Vermischung mit der zweiten Mischkomponente auf eine Restfeuchte von weniger als 3 Gew.%, vorzugsweise weniger als 1 Gew.%, Wassergehalt getrocknet werden. Trocknung bedeutet dabei insbesondere Entzug von Feuchtigkeit, die den Kunststoffabfällen notwendigerweise aufgrund ihres bisherigen Einsatzes und ihrer Lagerung anhaftet, und in der Regel nicht Trocknung von Waschwasser, welches bevorzugt um der Vermeidung von weiteren Umweltproblemen nicht zur Anwendung kommt. Der "natürliche" Schmutz der Kunststoffabfälle wird also beim Mischvorgang miteinbezogen und stört erstaunlicherweise am Endprofil nicht. Durch das Aufschmelzen der Kunststoffabfälle wird nämlich bei der Bildung des Vorprofils eine Art Matrix um die Zuschlagstoffe und auch um Schmutzteilchen gebildet, so daß im wesentlichen keine freien Schmutzteilchen an der Oberfläche liegen und optische sowie Geruchsprobleme damit vermieden sind, spätenstens aber dann ausgeschaltet werden, wenn die Oberflächenvergütung gemäß Merkmal g) zur Anwendung kommt.

Die Verarbeitung der Kunststoffabfälle kann vereinfacht werden, wenn die Kunststoffabfälle vor der Vermischung mit der zweiten Mischkomponente auf eine Größe von weniger als 20 mm, vorzugsweise weniger als 16 mm, maximaler Achslänge zerkleinert werden. Wenn hier von maximaler Achslänge gesprochen wird, so ist damit folgendes gemeint: Man ordnet einem Kunststoffabfall-Teilchen ein kartesisches Koordinatensystem mit drei Achsen zu und mißt die Ausdehnung des Teilchens in den drei Achsrichtungen des Koordinatensystems. Dabei achtet man darauf, daß in keiner der Meßrichtungen eine größere Ausdehnung als 16 mm auftritt. Handelt es sich um Folienabfälle, so bedeutet dies, daß den Folienabfällen ein Quadrat umschreibbar ist, dessen Seitenlänge geringer ist als 16 mm, oder ein Kreis umschreibbar ist, dessen Durchmesser kleiner ist als 16 mm.

Wenn, wie nach bevorzugter Durchführungsweise des erfindungsgemäßen Verfahrens vorgesehen, die Kunststoffabfälle als stochastisch geformte Teile vorliegen, so empfiehlt es sich, diese Teile unter Kompaktierungsdruck dem Vermischungsort mit der zweiten Mischkomponente zuzuführen, um auf diese Weise wenigstens annähernd konstante Mischungsverhältnisse zwischen Kunststoffabfällen und Zuschlagstoffen zu erreichen. Denkbar ist, daß man für jede Charge von Kunststoffabfällen einerseits und Zuschlagstoffen andererseits Probenentnahmen nach der Kompaktierung, gewünschtenfalls auch nach der Strangbildung, vornimmt und danach die Zuförderung der Komponenten einstellt, um gewünschte Mischungsverhältnisse zu erreichen.

Für die zweite Mischkomponente kommen je nachdem, auf welche Eigenschaften des Endprodukts besonderer Wert gelegt wird, die verschiedensten Zuschlagstoffe in Frage. Es können mineralische Zuschlagstoffe angewandt werden, die jedenfalls den notwendigen Kunststoffeinsatz reduzieren. Bevorzugt wendet man faserige Zuschlagstoffe an, weil durch diese die Festigkeitseigenschaften des schließlich erhaltenen Profils besonders günstig gestaltet werden können.

Nach einer bevorzugten Durchführungsform des erfindungsgemäßen Verfahrens wird die zweite Mischkomponente wenigstens z.T. von nachwachsenden Rohstoffen, gewünschtenfalls in aufbereiteter Form, gebildet. Dadurch erweist sich das erfindungsgemäße Verfahren volkswirtschaftlich auch insofern als wertvoll, als landwirtschaftliche Überschußproduktionen verarbeitet werden können. Hinzu kommt u.U. der logistische Vorteil, daß die nachwachsenden Rohstoffe für die zweite Mischkomponente im Umgebungsort des Profilbildungsstandorts gewonnen werden können. Besonders geeignet ist landwirtschaftliches Erntegut in gemahlener oder zerfaserter Form, beispielsweise Gräser, Flachs und alle Arten von Getreidestroh, das sich als besonders geeignet erwiesen hat. Als geeignet für die zweite Mischkomponente erweist sich auch Chinagras (miskanthus), das vorzugsweise im dritten Jahr nach der Aussaat geerntet worden ist. Dieses Chinagras zeichnet sich in gemahlener und insbesondere zerfaserter Form durch besondere Zugfestigkeit und Oberflächenrauhigkeit der Fasern aus, so daß es im Verbund mit dem aufgeschmolzenen und wieder erhärteten Kunststoff gute Bewehrungswirkung ergibt.

Die zweite Mischkomponente wird vor der Vermischung und ggf. nach der Zerkleinerung bevorzugt auf einen Wassergehalt von höchstens 3 Gew.%, vorzugsweise bis 1 Gew.%, getrocknet. Es soll nicht ausgeschlossen werden, daß die Trocknung auch nach der Vermischung stattfindet; da aber die beiden Mischkomponenten dem Mischungsort aus anderen Gründen, wie schon angegeben, in kompakter Form zugeführt werden und die Mischung dann auch kompaktiert bleibt und weiter kompaktiert wird, empfiehlt es sich, die Trocknung der einzelnen Mischkomponenten vor der Vermischung vorzunehmen.

Die zweite Mischkomponente sollte ebenfalls auf ein definiertes Teilchengrößchenspektrum eingestellt werden, um unabhängig von der jeweiligen Ressource annähernd normierte Eigenschaften zu haben. Demgemäß wird weiter vorgeschlagen, daß die zweite Mischkomponente auf eine Teilchengröße von höchstens 5 mm, vorzugsweise höchstens 3 mm, maximale Achslänge zerkleinert wird.

Auch die zweite Mischkomponente wird bevorzugt unter Kompaktierungsdruck der Mischung mit der ersten Mischkomponente zugeführt wiederum mit dem Ziele, eine möglichst konstante Gewichtsbeziehung zwischen den einzelnen Mischkomponenten herzustellen und darüberhinaus mit dem Ziele, die Kompaktierungsarbeit nach erfolgter Mischung z.B. in einem die Strangbildungsdüse beschickenden Schneckenmischer gering zu halten.

Der Kompaktierungsdruck für die erste oder/und die zweite Mischkomponente kann z.B. dadurch erhalten werden, daß die erste oder/und die zweite Mischkomponente in einem Vorratssilo, vorzugsweise Hochsilo, in unmittelbarer Nähe des Orts der Zusammenführung gelagert wird, so daß der statische Druck der Vorratshöhe in dem jeweiligen Vorratssilo, ggf. unterstützt durch mechanische Kompaktierungsmittel, der Kompaktierung der jeweiligen Mischkomponente am Ort der Zusammenführung dient. In unmittelbarer Nähe des Ortes der Zusammenführung der Mischkomponenten können, falls diese vorher durch große Lagerhöhe oder/und zusätzliche Kompaktierungsmaßnahmen kompaktiert worden sind, auch Rühr- oder Auflockerungseinrichtungen vorgesehen sein, so daß durch einen Kompaktierungsdruck der Produktaustrag nicht behindert wird.

Die beiden Mischkomponenten können gewünschtenfalls über eine vorgeschaltete zusätzliche Vormischstufe einem Schneckenextruder zugeführt werden, welcher der weiteren Mischung und Kompaktierung der beiden Mischkomponenten und der erstmaligen Thermoplastifizierung der ersten Mischkomponente dient.

Alternativ ist es auch möglich, die Mischkomponenten, bevor sie einem Schneckenextruder zum Zwecke der endgültigen Mischung und der Thermoplastifizierung der ersten Mischkomponente, d.h. zum Gewinnen des strangbildungsfähigen Gemisches, zugeführt werden, miteinander einer Misch- und Walk- oder Knetbehandlung zu unterwerfen, bei der die thermoplastische Mischkomponente eine wenigstens teilweise Thermoplastifizierung erfährt, und das so erhaltene Gemisch zu pelletieren. In diesem Fall werden die Pellets dem Schneckenextruder zugeführt. Man kann die Pellets dann mit einem Teil ihrer bei der Pelletierung angenommenen Temperatur in den Schneckenextruder einführen. Hierzu kann man von der Pelletierungstemperatur, die beispielsweise im Falle von Polyolefin-Verarbeitung bei 105°C bis 130°C, vorzugsweise 112°C, liegt, auf 80°C herunterkühlen und die so heruntergekühlten Pellets dann mit 80°C dem Schneckenextruder zuführen. Wenn dabei die Temperaturreduzierung auf die vorgesehene Pellet-Eintragstemperatur in den Schneckenextruder in kürzerer Zeit eintritt, als der Transportzeit von der Pelletierung bis zum Eintritt in den Schnekkenextruder entspricht, so ist es auch denkbar, die Pellets unter Temperaturerhaltung an einer Stelle des Transportwegs von der Pelletierung zum Schneckenextruder zwischenzulagern.

Die Intensivmischung und Pelletierung kann beispielsweise in einer Ringmatrize mit Kollerwalzen erfolgen, welche das in den Innenraum der Matrize eingebrachte Gemisch der Mischkomponenten intensiv miteinander vermischen und kneten und letztlich durch die Löcher der Ringmatrize austreiben. Die aus den Löchern der Ringmatrize austretenden thermoplastifizierten Gemischwürstchen können dann durch ein Schermesser periodisch abgeschnitten werden, wobei das Schermesser in Anlage an der Außenseite der rotierenden Ringmatrize gehalten wird, so daß es bei jedem Vorbeigang einer bestimmten Matrizenöffnung das in der Zwischenzeit durch die Matrizenöffnung hindurchgetretene Würstchen abschneidet und damit Pellets in Form kleiner zylindrischer Stöpsel von vorgegebener Länge bildet. Die so gebildeten Pellets haben dann beispielsweise einen Durchmesser von 3 mm und eine Länge von 5 mm. In diesen Pellets sind die faserigen Zuschlagstoffe der zweiten Mischkomponente in die aufgeschmolzenen Bestandteile der ersten Mischkomponente bereits gut verteilt. Das Volumeneinheitsgewicht dieser Pellets ist bereits relativ groß. Damit reduziert sich die notwendige Kompaktierungsarbeit in der nachfolgenden Extruderschnecke, in welcher das strangbildungsfähige, thermoplastifizierte Gemisch zur Einfüllung in die Vorprofilbildungskanäle gewonnen wird. Der Nachteil, welcher in der zweimaligen Thermoplastifizierung u.U. liegen könnte, wird aufgewogen dadurch, daß die Kompaktierungsarbeit in der Extruderschnecke reduziert werden kann mit der Folge, daß die Extruderschnecke kleiner und damit preisgünstiger gebaut werden kann.

Bezüglich der Zerkleinerungs- und Reinigungsschritte ist noch folgendes nachzutragen: Die Reinigung wird man in der Regel nur dann anwenden, wenn ein stark verschmutztes Ausgangsmaterial als erste Mischkomponente verarbeitet wird. Dabei wird man - wie schon gesagt, möglichst ohne Waschwasser - die Reinigung vor allem auf die Beseitigung von Metallteilchen und anderen Hartteilchen abstellen, die bei der Weiterverarbeitung besonders stören könnten. Demgemäß wird man bevorzugt mechanische oder/und magnetische Reinigungsmittel zum Einsatz brigen. Bevorzugt führt man diese Art der Reinigung durch, nachdem man die erste Mischkomponente auf die oben angegebenen Werte von < 80 mm, vorzugsweise < 20 mm, maximaler Achslänge zerkleinert hat, weil die auszusondernden Hartteilchen dann leichter von den Kunststoffteilchen zu trennen sind. Sieht man eine Trocknungsbehandlung vor, etwa auf die oben angegebenen Werte von weniger als 3 Gew.% Wasser und vorzugsweise weniger als 1 Gew.% Wasser, so kann man auch in der Weise verfahren, daß man nach Zerkleinerung der ersten Mischkomponente diese zunächst einer ersten Reinigungsbehandlung unterwirft, daran anschließend die Trocknungsbehandlung vornimmt und im Anschluß an die Trocknungsbehandlung eine erneute Reinigungsbehandlung vornimmt, worauf die Teilchen der ersten Mischkomponente sodann der Mischung mit den Teilchen der zweiten Mischkomponente zugeführt werden können, entweder in der Pelletierungsmatrize selbst oder in einem der Pelletierungsmatrize vorgeschalteten, zusätzlichen Mischwerk. U.U. ist es vorteilhaft, die bei der Trocknung der ersten oder/und der zweiten Mischkomponente eingebrachte thermische Energie dazu zu benutzen, um die Pelletierung zu unterstützen.

Innerhalb des weiter oben bereits angegebenen Grobbereichs für den Anteil der zweiten Mischkomponente im Endprodukt von 1 - 60 Gew.% kann man bevorzugt Mischverhältnisse einstellen wie folgt: Gewichtsverhältnis zwischen der ersten Mischkomponente und der zweiten Mischkomponente entspricht einem Verhältnis von 6 Gewichtsteilen Kunststoffabfall zu einem Gewichtsteil Zuschlagstoffe bis 4 Gewichtsteile Kunststoffabfall zu 1 Gewichtsteil Zuschlagstoffe, vorzugsweise ca. 5 Gewichtsteile Kunststoffabfall zu 1 Gewichtsteil Zuschlagstoffe.

Das strangbildungsfähige Gemisch wird bevorzugt in einem Schneckenextruder erzeugt, und zwar bevorzugt unter Einführung von Pellets in den Schneckenextruder. Von dem Schneckenextruder gelangt das thermoplastifizierte Gemisch sodann in den Vorprofilbildungskanal.

Als Schneckenextruder wird bevorzugt ein EIN-Schneckenextruder verwendet, jedenfalls dann, wenn der Schneckenextruder mit Pellets gespeist wird.

Der EIN-Schneckenextruder wird bevorzugt mit einer DREI-Stufen-Schnecke ausgeführt, welche eine Einzugszone, eine Kompressionszone und eine Austragszone aufweist. Dabei kann der EIN-Schneckenexstruder mit einem einzigen Schneckengang und folgenden Maßen bevorzugt ausgeführt sein:
konstante Schneckensteigung von 0,8 D
L/D-Verhaltnis 15 : 1
Einzugszone 3 D
Kompressionszone 7 D
Austragszone 5 D,
wobei D der Innendurchmesser des Schneckenzylinders und L die aktive Länge der Schnecke ist.

An den Schneckenextruder kann sich dabei eine Stau- und Mischzone anschließen, in der eine weitergehende Homogenisierung des strangbildungsfähigen Gemisches vor dem Eintritt in den Vorprofilbildungskanal eintritt.

Im Einzugsbereich des Schneckenextruders können Maßnahmen getroffen sein, um ein Mitdrehen des eingebrachten Gemisches mit der rotierenden Schnecke zu vermeiden.

Der Durchflußwiderstand der Staustrecke kann variierbar sein, um zum einen unterschiedliche Homogenisierungsgrade und zum andere unterschiedliche Durchflußwiderstände einstellen zu können. Es empfiehlt sich, den Durchflußwiderstand bei der Zuführung des strangbildungsfähigen Gemisches von der Austragszone der Extruderschnecke zu dem Vorprofilbildungskanal in der Staustrecke einzustellen, um auf diese Weise einen definierten Durchflußwiderstand zu erhalten.

Für die Phase der Auffüllung des Vorprofilbildungskanals empfiehlt es sich, diesen an seinem befüllungsfernen Ende bis zur vollständigen Auffüllung geschlossen zu halten, um definierte Füllmengen zu erhalten. In dem Vorprofilbildungskanal erhält man die Profilform des Vorprofils.

Die Entformung des Vorprofils aus dem Vorprofilbildungskanal kann in der Weise geschehen, daß die Entnahme des wenigstens teilweise ausgehärteten Vorprofils durch Ausschieben mittels einer vom befüllungsseitigen Ende des Vorprofilbildungskanals her einwirkenden Ausschubkraft oder/und durch Ausziehen des Vorprofils mittels einer stromabwärts des befüllungsfernen Endes angelegten Auszugskraft erfolgt. Dabei ist es besonders vorteilhaft, wenn die Entnahme des wenigstens teilweise ausgehärteten Vorprofils teilweise durch erneutes Auffüllen des Vorprofilbildungskanals von seinem befüllungsseitigen Ende her mit strangbildungsfähigem Gemisch erfolgt und teilweise durch Abziehen des bereits teilweise ausgestoßenen Vorprofils. Beispielsweise kann das Ausziehen des wenigstens teilweise ausgehärteten Vorprofils mittels Ausziehwalzen erfolgen.

Im einzelnen kann sich der Füll- und Entformungsvorgang in der Weise abspielen, daß nach Vorbeigang des nachlaufenden Endes eines mindestens teilweise ausgehärteten Vorprofils an einer ausgangsnahen Grenzstelle des Vorprofilbildungskanals der Abzug des Vorprofils mit einer dem Vorrücken der Neuauffüllung des Vorprofilbildungskanals übersteigenden Geschwindigkeit eingeleitet wird, dadurch ein Abstand zwischen dem Nachlaufende des austretenden, wenigstens teilweise ausgehärteten Vorprofils und der Vorlauffront der Neuauffüllung erzeugt wird, im Bereich dieses Abstands das befüllungsferne Ende des Vorprofilbildungskanals abgeschlossen wird und hierauf der Vorprofilbildungskanal bis zum Erreichen eines vorbestimmten Fülldrucks aufgefüllt wird, worauf der Vorprofilbildungskanal an seinem befüllungsseitigen Ende von dem Zufluß weiteren strangbildungsfähigen Gemisches abgetrennt wird und die im Vorprofilbildungskanal enthaltene neue Füllung von strangbildungsfähigem Gemisch der wenigstens teilweisen Aushärtung ausgesetzt wird.

Um einerseits die Ausbildung des thermoplastifizierten, strangbildungsfähigen Gemisches in der Extruderschnecke - ggf. in der Staustrecke - durch Aufrechterhaltung entsprechender Temperaturen zu begünstigen und andererseits in dem nachfolgenden Vorprofilbildungskanal die für das Aushärten erforderliche Temperaturabsenkung ungestört durchführen zu können, wird empfohlen, daß das strangbildungsfähige Gemisch von dem Schneckenextruder kommend durch eine thermische Isolierstrecke hindurch in den Vorprofilbildungskanal eingeleitet wird.

Gerade dann, wenn zum Ausschieben eines ganz oder teilweise ausgehärteten Vorprofils eine weitere Charge von strangbildungsfähigem Gemisch verwendet wird, die Charge nämlich, die ein nächstfolgendes Vorprofil bilden soll, ist es wünschenswert, daß der Vorprofilbildungskanal im Bereich seines befüllungsseitigen Endes zumindest bei Beginn der Einführung einer neuen Charge von strangbildungsfähigem Gemisch derart gekühlt wird, daß eine rasche Durchhärtung des Vorlaufendes der neuen Charge eintritt. Man erreicht damit, daß eine saubere Trennung zwischen aufeinanderfolgenden Vorprofilen eintritt. Außerdem ist die rasche Durchhärtung des Vorlaufendes der neuen Charge in dem Vorprofilbildungskanal wünschenswert, damit beim Anlauf der Anlage ein definierter Aufbau des jeweils ersten Vorprofils eintritt und sich nicht etwa im weniger gekühlten Zentrum des entstehenden Vorprofils eine weiche Zone ausbildet, in der das strangbildungsfähige Gemisch unkontrolliert in Richtung auf das Austrittsende des Vorprofilbildungskanals entweichen kann. Es wird also empfohlen, daß der Vorprofilbildungskanal im Bereich seines befüllungsseitigen Endes stärker gekühlt wird als im stromabwärts anschließenden Teil seiner Länge.

Die Abzugsbewegung des jeweils gebildeten Vorprofils wird bevorzugt dann eingeleitet, wenn das Vorlaufende des jeweils teilweise ausgeschobenen Vorprofils eine vorbestimmte Position überläuft, wobei dieser Zeitpunkt vorzugsweise mittels einer Fotozelle ermittelt wird.

Ist die Abzugsbewegung einmal eingeleitet, so kann das Verschließen des befüllungsfernen Endes des Vorprofilbildungskanals mit vorgegebener Zeitverzögerung nach Beginn der Abzugsbewegung des jeweiligen Vorprofils erfolgen.

Das Abtrennen des Vorprofilbildungskanals vom Zufluß des strangbildungsfähigen Gemisches kann nach Maßgabe des Druckaufbaus im Vorprofilbildungskanal erfolgen, wobei der Druckaufbau vorzugsweise nahe dem befüllungsseitigen Ende des Vorprofilbildungskanals gemessen wird.

Die Notwendigkeit der Abkühlung in dem Vorprofilbildungskanal läßt es, um den Schneckenextruder oder eine sonstige Quelle von strangbilduhgsfähigem Gemisch laufend betreiben zu können, zweckmäßig erscheinen, daß nacheinander in periodischer Wiederholung eine Mehrzahl von Vorprofilbildungskanälen in Anschluß an eine Zuflußstelle von strangbildungsfähigem Gemisch gebracht werden.

Grundsätzlich ist es möglich, daß die an einem Umlaufträger angeordneten mehreren Vorprofilbildungskanäle nacheinander in Flucht zu der Zuflußstelle gebracht werden.

Im Hinblick auf die Vermeidung von Dichtproblemen wird jedoch eine andere Ausführungsform bevorzugt dergestalt, daß das strangbildungsfähige Gemisch von der Zuflußstelle aus in ein Verteilerleitungssystem eingeleitet wird, welches an eine Mehrzahl von Vorprofilbildungskanälen über eine entsprechende Mehrzahl von Anschlußventilen angeschlossen ist, und daß nacheinander, vorzugsweise nach einem periodisch wiederholbaren Programm, jeweils mindestens und vorzugsweise ein Anschlußventil geöffnet wird. Der Vorteil dieser Durchführungsform des Verfahrens liegt darin, daß die Anschlußventile handelsübliche Ventile sein können, die keinerlei Dichtprobleme aufwerfen.

Nach einer bevorzugten Ausführungsform des erfindungsgemäßen Verfahrens wird in der Weise vorgegangen, daß das strangbildungsfähige Gemisch von der Zuflußstelle in eine Verteilerleitung eingeführt wird, zwischen deren zuflußseitigem Ende und deren zuflußfernem Ende in Längsrichtung der Verteilerleitung verteilt eine Mehrzahl von Anschlußventilen vorgesehen sind, daß zu Beginn eines Befüllungszyklus der an die Anschlußventile angeschlossenen Vorprofilbildungskanäle zunächst die Verteilerleitung an ihrem zuflußfernen Ende durch Öffnen eines Reinigungsventils gereinigt wird und hierauf nacheinander von dem zuflußfernen Ende zum zuflußnahen Ende hin fortschreitend die Anschlußventile geöffnet werden, wobei dieser Vorgang bei Vorhandensein eines oder mehrerer weiterer an die Zuflußstelle angeschlossener entsprechender Verteilerleitungen nacheinander für die verschiedenen Verteilerleitungen durchgeführt wird. Durch die'bei dieser Verfahrensweise vorgesehene Reinigung wird sichergestellt, daß jedesmal bei Beginn einer Neubefüllung eines Vorprofilbildungskanals an dessen befüllungsseitigem Ende ein hinreichend thermoplastifiziertes, strangbildungsfähiges Gemisch bereitsteht.

Es wird empfohlen, daß die Vorprofile in dem jeweiligen Vorprofilbildungskanal in einer Länge von ca. 0,5 - 6 m, vorzugsweise ca. 4,5 m, hergestellt werden. Im einzelnen hängt die Länge der Vorprofilbildungskanäle von dem notwendigen Querschnitt und der Leistungsfähigkeit der zur Befüllung des jeweiligen Vorprofilbildungskanals verfügbaren Quelle für strangbildungsfähiges Gemisch ab, also insbesondere von der Leistungsfähigkeit des Schneckenextruders.

Die Vorprofile können mit Vollquerschnitt hergestellt werden. Die Herstellung des Vorprofils mit Vollquerschnitt ist formtechnisch, d.h. bei der Herstellung der Vorprofilbildungskanäle, von Vorteil. Die Zugabe variabler Gewichtsanteile der zweiten Mischkomponente erlaubt es, das für den jeweiligen Einsatzfall, z.B. im Fenster- und Türenbau, gewünschte Gewicht des Vorprofils pro Längeneinheit wunschgemäß einzustellen, auch wenn das Vorprofil als Vollprofil ausgeführt wird. Im übrigen sorgt die Herstellung des Vorprofils als Vollprofil für eine Erleichterung des Anbringens von Beschlägen.

Um für hohe Biege- und Knicksteifigkeit des Vorprofils und damit des endgültigen Profilmaterials zu sorgen, ist vorgesehen, daß die Auffüllung des Vorprofilbildungskanals bei seichen Strömungsverhältnissen des strangbildungsfähigen Gemisches erfolgt, daß im Falle der Anwesenheit länglicher, faserartiger Partikel in der zweiten Mischkomponente diese Partikel sich überwiegend parallel zu der jeweiligen Profillängsrichtung einstellen. Die Orientierung der faserartigen Partikel kann dabei sowohl in dem Vorprofilbildungskanal als auch in der vorgeschalteten Staustrecke begünstigt werden. Für die Parallelisierung der Fasern in dem Vorprofilbildungskanal ist es von Vorteil, wenn. dieser von der Eintrittsstelle zum Austrittsende hin fortschreitend aufgefüllt wird, wofür die verstärkte Kühlung im Eintrittsbereich des Vorprofilbildungskanals wünschenswert ist.

Der weitere Produktionsablauf nach Entformung der Vorprofile kann in der Weise geschehen, daß die Vorprofile im Zuge des Austritts aus dem jeweiligen Vorprofilbildungskanal auf eine Vorprofilablagefläche aufgelegt werden und nach vollständigem Austritt aus dem jeweiligen Vorprofilbildungskanal zu einer spanabhebenden Bearbeitungsstation transportiert und dabei einem Schwundprozeß überlassen werden. Man kann also den Weg der Vorprofile zur spanabhebenden Bearbeitungsstation ausnutzen, um den Schwundprozeß ablaufen zu lassen. Dabei ist es möglich, daß der Transport wenigstens auf einem Teil des Transportwegs in einer Richtung quer zur Längsachse des jeweiligen Vorprofils erfolgt. Auf diese Weise kann der Weg von der Entformung bis zur spanabhebenden Weiterbearbeitung gekürzt werden und die Transportzeit dennoch erreicht werden, indem man die Transportgeschwindigkeit quer zur Längsachse des jeweiligen Vorprofils entsprechend klein hält.

Es wurde weiter oben schon darauf hingewiesen, daß es wünschenswert ist, den Schneckenextruder fortlaufend zu betreiben. Dies steht in einem Konflikt mit der Notwendigkeit, periodisch den Fluß des strangbildungsfähigen Gemisches zu unterbrechen, wenn die Zuführung des Gemisches von einem Vorprofilbildungskanal auf einen anschließend zu befüllenden Vorprofilbildungskanal umgeschaltet wird. Es wird deshalb vorgeschlagen, daß im Bereich des Anschlusses des Schneckenextruders an den Vorprofilbildungskanal bzw. eine Mehrzahl von Vorprofilbildungskanälen ein Puffervolumen vorgesehen ist, welches strangbildungsfähiges Gemisch jeweils dann aufnimmt, wenn der Zufluß des Gemisches zu dem Vorprofilbildungskanal bzw. den Vorprofilbildungskanälen reduziert oder unterbrochen ist.

Es wurde bereits darauf hingewiesen, daß die Pellets in angewärmtem Zustand von beispielsweise 60°C einem Schneckenextruder zugeführt werden können.

Auf diese Weise kann die Energiezufuhr im Schneckenextruder reduziert werden.

Weiterhin ist es möglich, daß die Pellets von ihrer bei der Pelletierung erreichten Temperatur auf eine Extruderbeschikkungstempeatur herabgekühlt und mit dieser Extruderbeschikkungstemperatur dem Extruder zugeführt werden. Auch diese Maßnahme ist von der Energiewirtschaft her günstig, weil ein Teil der zur Aufschmelzung des Kunststoffs notwendigen Energie nur einmal zugeführt werden muß.

Dem strangbildungsfähigen Gemisch können Kleinkomponenten, wie Gleitmittel, Farbpigmente und Stabilisatoren, zugesetzt werden. Dabei ist es grundsätzlich möglich, daß die Kleinkomponenten der ersten oder der zweiten Mischkomponente oder - sofern Pellets gebildet werden - den Pellets zugesetzt werden. In der Regel ist es vorteilhaft, wenn die Kleinkomponenten den Pellets zugeführt werden. Ein wesentlicher Zusatz ist das Farbpigment. Vorzugsweise wird ein schwarzes Farbpigment, insbesondere Ruß, zugesetzt. Ruß zeichnet sich durch geringe Bereitstellungskosten und durch hohe Deckkraft aus. Die hohe Deckkraft führt dazu, daß etwaige nicht spanabhebend bearbeitete Profiloberflächen oder auch spanabhebend bearbeitete und nicht von der Vergütungsschicht bedeckte Profiloberflächen ein günstiges optisches Erscheinungsbild mit dem Eindruck hoher Finish-Qualität ergeben. Dabei erweist sich insbesondere die schwarze Farbe wegen ihrer hohen Lichtabsorption als günstig.

Die spanabhebende Bearbeitung des Vorprofils kann in einer spanabhebenden Bearbeitungsstation mit einer Mehrzahl von über den Umfang des Vorprofils verteilt angeordneten, rotierenden Bearbeitungsköpfen erfolgen, welche gewünschtenfalls in Durchlaufrichtung des Vorprofils hintereinander angeordnet sind. Dabei sollte in der Regel darauf geachtet werden, daß die dem Vorprofil bei der spanabhebenden Bearbeitung zugeführte Zerspanungsleistung derart beschränkt wird, daß im wesentlichen keine Thermoplastifizierung des Thermoplastgehalts in dem jeweils bearbeiteten Vorprofil eintritt. Eine Möglichkeit, um Einfluß auf die Temperatur am Zerspanungsort zu nehmen, besteht darin, Bearbeitungsköpfe großen Durchmessers einzusetzen, so daß der Wärmeaustausch zwischen den Bearbeitungsköpfen und der Umgebungsluft nach Durchlauf durch die jeweilige Bearbeitungsstelle eine Abkühlung des Werkzeugs und damit auch der Bearbeitungsstelle am Werkstück ermöglicht. Der Betreiber der Anlage hat es in der Hand, nach Maßgabe von Temperaturmessungen den optimalen Durchmesser der Bearbeitungsköpfe einzustellen.

Die Oberflächenvergütung durch die Vergütungsschicht kann nach einer ersten Alternative in der Weise erfolgen, daß das durch die zerspanende Bearbeitung gewonnene Zwischenprofil durch einen profilangepaßten Zentrierungskanal einem Beschichtungskanal zugeführt wird, welcher ein der Beschichtungsdicke entsprechendes Übermaß gegenüber dem Vorprofil besitzt und mit mindestens einer Zuführungsleitung für Beschichtungsmasse und gewünschtenfalls Verteilermitteln versehen ist. Dabei kann es für die Egalisierung der Vergütungsschicht von Vorteil sein, wenn das mit Beschichtungsmasse beschichtete Zwischenprofil in einem Nachprofilierungskanal nach teilweiser Aushärtung, insbesondere während des Durchlaufs durch ein Kühlbad, einem oberflächenegalisierenden Unterdruck ausgesetzt wird. Bei dieser Art der Oberflächenvergütung kann man die Beschichtungsmasse in einer Schichtstärke von ca. 0,1 bis ca. 2,0 mm, vorzugsweise 0,7 mm - 0,8 mm, auftragen. Man wird mit Vorteil solche Beschichtungsmasse verwenden, welche eine hohe Affinität zu dem jeweiligen Mischungsbestandteil haben. Deshalb wird man insbesondere in Betracht ziehen, daß eine thermoplastische Beschichtungsmasse etwa auf Polyolefin-Basis, ABS-Basis oder PVC-Basis aufgetragen wird. Dies hat auch einen Vorteil bei der späteren Aufarbeitung der Profile. Die Beschichtungsmasse kann mit einem Gehalt an Farbpigment, insbesondere weißem Farbpigment versetzt werden, so daß die Oberfläche des Zwischenprofils im wesentlichen unsichtbar wird.

Nach einer weiteren bevorzugten Alternative der Oberflächenvergütung ist vorgesehen, daß das Zwischenprofil wenigstens auf einem Teil seines Profilumfangs mit einem Vergütungsprofil belegt wird. Als Vergütungsprofil kann dabei insbesondere ein Metallprofil verwendet werden, etwa ein durch Biegen leicht profilierbares Aluminiumprofil. Bevorzugt besteht das Vergütungsprofil aus einer Trägerschicht, also z.B. Aluminium, und einer Dekorschicht, z.B. einer auf der Aluminiumschicht aufgetragenen Anstrich- oder Lackschicht.

Um Beschädigungen des Vergütungsprofils bis zum Fertigeinbau eines Fensters zu vermeiden, wird vorgeschlagen, daß das Vergütungsprofil auf seiner Sichtseite mit einer Schutzfolie versehen wird. Die Schutzfolie kann dabei durch eine Klebeschicht von solcher Klebkraft fixiert werden, daß sie nach Erfüllung ihrer Schutzfunktion leicht abgezogen werden kann.

Es besteht die Möglichkeit, daß das Vergütungsprofil aus einem flachen Vormaterialband zum Zwischenprofil geformt wird. Es besteht aber auch die Möglichkeit, daß das Vergütungsprofil unmittelbar vor der Aufbringung auf das Zwischenprofil wenigstens teilweise vorgeformt und in vorgeformtem Zustand auf das Zwischenprofil aufgebracht wird. In beiden Fällen wird der große Vorteil erzielt, daß das Vergütungsprofil als Flachband im coil bis an den Ort der Aufbringung gebracht werden kann, so daß Transportraum gespart und die Gefahr vorzeitiger Deformation vermieden wird. Das Ausformen des Aluminiumprofils kann durch eine Vielzahl von in Laufrichtung hinereinander angeordneten Profilwalzen erfolgen, die entweder mit dem jeweils zu beschichtenden Vorprofil oder Zwischenprofil profilgebend zusammenwirken oder mit zugehörigen Gegenwalzen, wenn die Profilbildung zunächst unabhängig von der Vereinigung mit dem Vorprofil oder Zwischenprofil erfolgt.

Das Vergütungsprofil kann auf dem Zwischenprofil oder Vorprofil durch Kleben befestigt werden etwa dadurch, daß Klebstoff als vorgeformte Klebstoffschicht zum Einsatz gebracht wird oder dadurch, daß der Klebstoff als Beschichtung des Vergütungsprofils zum Einsatz gebracht wird. Der Klebstoff kann dabei als gesondertes Bandmaterial zum Einsatz gebracht werden und unmittelbar vor der Vereinigung des Vergütungsprofils mit dem Zwischenprofil entweder auf das Vormaterial des Vergütungsprofils oder auf das Zwischenprofil aufgebracht werden.

Es ist auch möglich, daß das Vergütungsprofil am Zwischenprofil wenigstens teilweise formschlüssig befestigt wird; hierzu kann das Vergütungsprofil an wenigstens einem Rand mit einem Formschlußflansch ausgeführt werden.

Wenn hier von Vergütungsprofilen gesprochen wird, so ist darauf hinzuweisen, daß die Profilwandstärke dieses Vergütungsprofils natürlich sehr viel geringer sein kann als die Profilwandstärken von selbsttragenden Aluminiumprofilen und/oder Kunststoffprofilen. Wenn Aluminiumprofile als Vergütungsschicht zum Einsatz kommen, so kann die Wandstärke des Aluminiumprofils beispielsweise 0,1 - 1,0 mm, vorzugsweise 0,3 - 0,6 mm sein. Die Schichtstärke einer etwaigen Dekorschicht des Vergütungsprofils wird so bemessen, daß sie den üblicherweise im Betrieb auftretenden Schlag- und Kratzbeanspruchungen standhält.

Grundsätzlich kann ein Vergütungsprofil den ganzen Profilumfang oder einen wesentlichen Teil des Profilumfangs des Vorprofils bzw. Zwischenprofils bedecken. Es könnte aber vorteilhaft sein, wenn, insbesondere im Falle von Flügelrahmen- und Blendrahmenprofilen, das Vergütungsprofil in Form von zwei Teilprofilschalen aufgebracht wird, welche an den der Innenumfangsfläche und der Außenumfangsfläche des jeweiligen Rahmens entsprechenden Profilseiten des Zwischenprofils voneinander Abstand haben. Der Vorteil liegt nicht nur in der vereinfachten Aufbringung, sondern insbesondere auch darin, daß im Falle metallischer Vergütungsprofile, wenn auch noch so querschnittsschwacher, eine Kältebrücke verhindert wird.

Die erfindungsgemäße Verfahrensweise bietet auch die Möglichkeit, daß das Vergütungsprofil an mindestens einem seiner Profilränder zur Bildung von Haltekanten, z.B. für Dichtungsoder Kittmaterial, verwendet wird.

Im Falle der Weiterverarbeitung eines durch Aufbringen der Vergütungsschicht gewonnenen Endprofils zu einem Fenster oder einer Tür kann ein Profilmaterialabschnitt des Endprofils an einer jeweiligen Eckbildungsstelle auf Gehrung geschnitten und mit einem entsprechend auf Gehrung geschnittenen, anstoßenden Profilmaterialabschnitt durch mindestens eine die Gehrungsebene querende Schraube verbunden werden, welche gewünschtenfalls die Vergütungsschicht durchsetzt. Dabei kann man an den Gehrungsflächen zusammenstoßender Profilmaterialabschnitte eine härtende Dichtungsmasse vor dem Zusammenschrauben einbringen.

Will man das erfindungsgemäß hergestellte Profilmaterial zu Fenstern oder Türen verarbeiten, so kann man in der Weise vorgehen, daß man das zu einem Endprofil vervollständigte Profilmaterial mit einer Fixiernut für eine Glasscheibe oder sonstige Füllungsplatte herstellt und diese im Zuge der Zusammenfügung der Profilmaterialabschnitte zum jeweiligen Rahmen in den Fixiernuten fixiert. Dabei kann man Beschlagteile an dem jeweiligen Rahmen durch übliche Holzschrauben, gewünschtenfalls ohne Vorbohrung, anbringen. Diese Holzschrauben kann man durch das Vergütungsprofil hindurch in das jeweilige Zwischenprofil einbringen.

Weiter kann man bei der Fenster- und Türenfertigung die von Vergütungsschicht unbedeckten Profilbereiche des Endprofils in dem nach der Vorprofilfertigung oder der Zwischenprofilfertigung erreichten Oberflächenzustand belassen.

Die Verweilzeit, die das wenigstens teilweise Schwinden des Vorprofils vor der spanabhebenden Weiterbearbeitung bewirken soll, kann u.U. bei rasch schwindenden Kunststoffen auch verkürzt werden, ggf. soweit verkürzt werden, daß nach der das Aushärten bewirkenden Abkühlung eine weitere Verweilzeit gar nicht mehr notwendig ist.

Es besteht immer der Vorteil eines leicht zu verarbeitenden Profilmaterials, das in Holzverbindungstechnik weiterverarbeitet werden kann. Es besteht auch je nach Art der Mischkomponenten der Vorteil der Verarbeitung von leicht verfügbaren oder/und entsorgungsbedürftigen Kunststoffabfällen und der Vorteil von nachwachsenden Rohstoffen, deren Verwertung eine Zusatzauslastung für die Landwirtschaft bringt.

Bei Fehlen von Kunststoffabfällen oder billiger Verfügbarkeit von Neu-Kunststoffen, beispielsweise in Form von Granülen, kann das erfindungsgemäße Verfahren auch unter Einsatz von Neu-Kunststoffen durchgeführt werden.

Bei Verwendung von Polyolefinen kann die Zuflußtemperatur des strangbildungsfähigen Gemisches zu den Vorprofilbildungskanälen auf ca. 150 - 195°C eingestellt werden. Der Massedruck des strangbildungsfähigen Gemisches in der Endphase des Füllens eines Vorprofilbildungskanals kann ca 100 bis ca. 220 bar sein, vorzugsweise ca 170 bar. Dieser Massedruck kann auch als Schaltdruck für das Schließen der Form benutzt werden. Ausgehend von der Annahme, daß der Massedruck in der Staustrecke abgebaut wird, bedeutet dies, daß stromoberhalb der Staustrecke ein Massedruck von bis zu 300 bar aufgebaut werden kann, wiederum unter der Voraussetzung, daß das Gemisch als Kunststoffanteile im wesentlichen Polyolefine enthält.

Der zum Entformen eines Vorprofils verwendete Druck des für den nächsten Vorformling zugeführten strangbildungsfähigen Gemisches kann auf etwa 40 - 300 bar eingestellt werden.

Die Qualität der Fertigprodukte, also z.B. Fenster oder Türen, kann u.U. noch dadurch verbessert werden, daß die bereits spanabhebend behandelten und u.U. auch schon mit dem Vergütungsprofil beschichteten Profile noch einer weiteren Verweilzeit bis zur endgültigen Verarbeitung unterworfen werden.

Wenn Kunststoffabfälle benutzt werden, die unerwünschte thermoplastische Fremdstoffe enthalten, so können auch diese ausgesondert werden. Beispielsweise kann es wünschenswert sein, PVC-Anteile abzutrennen, im Hinblick auf eine spätere Aufarbeitung der Profile.

Die Erfindung betrifft weiter eine Einrichtung zur Herstellung eines Profilmaterials, insbesondere eines Vorprofils im Rahmen des vorbeschriebenen Verfahrens, umfassend einen Schneckenextruder mit einer Füllstelle zum Einfüllen der Mischkomponenten eines thermoplastischen Gemisches und mit einer Ausflußstelle zur Abgabe eines strangbildungsfähigen thermoplastifizierten Gemisches.

Diese Einrichtung ist gekennzeichnet durch eine stationäre Verteilerleitung mit einer Zuflußstelle in Verbindung mit der Ausflußstelle des Schneckenextruders, eine Mehrzahl von Kanalbeschickungsanschlüssen an der stationären Verteilerleitung, diese Kanalbeschickungsanschlüsse in Verbindung mit jeweils einem Profilbildungskanal, Anschlußventile zwischen den einzelnen Profilbildungskanälen und der Verteilerleitung, Profilaustrittsschieber an den stromabwärtigen Enden der Profilbildungskanäle, eine Abzugseinrichtung stromabwärts des jeweiligen stromabwärtigen Endes der Profilbildungskanäle sowie Programmsteuerungsmittel mit einer Füllzustands-, Ausschubs-, Abzugs- und Zeitablaufsensorik, welche
- nach Auffüllung eines Profilbildungskanals das jeweilige Anschlußventil schließen;
- nach einer Kühlperiode zur Abkühlung der im Profilbildungskanal enthaltenen Gemischfüllung den zugehörigen Profilaustrittsschieber und das zugehörige Anschlußventil öffnen;
- nach teilweisem Ausschieben des bereits gehärteten Profils durch über das Anschlußventil nachfließendes Gemisch das teilweise ausgeschobene Profil der Einwirkung der Abzugseinrichtung unterwerfen und von der Vorlauffront des nachgefüllten Gemischs trennen;
- nach erfolgter Trennung des Nachlaufendes des Profils und der Vorlauffront des nachfließenden Gemischs den Austrittsschieber innerhalb des so gebildeten Trennspalts schließen und
- den Profilbildungskanal hierauf wieder vollständig auffüllen bis zum Erreichen eines für die Bildung eines weiteren Profils erforderlichen Füllzustands.

Durch die Auffüllung einzelner Profilbildungskanäle erübrigt sich das streng kontinuierliche Durchlaufverfahren. Die Profile fallen zwangsläufig in Form einzelner Profilabschnitte an. Diese einzelnen Profilabschnitte können dann in raumsparender Weise während langer Verweilzeiten gelagert werden, um einen ausreichenden Schwund eintreten zu lassen.

Dabei können die Profilbildungskanäle in einem Kühlflüssigkeitsbad angeordnet sein. Wenn über die Länge der Profilbildungskanäle verteilt ein örtlich variables Temperaturprogramm aufrechterhalten werden soll, so kann das Kühlflüssigkeitsbad in einzelne Sektionen unterschiedlicher Kühlflüssigkeitstemperatur aufgeteilt sein.

Die Steuerung kann weiterhin dahin ausgestaltet sein, daß die Abzugseinrichtung wirksam wird, wenn das Vorlaufende des jeweils der Ausschiebung unterliegenden Profils eine vorbestimmte Stelle stromabwärts des Austrittsschiebers erreicht und daß der Austrittsschieber geschlossen wird, wenn das Nachlaufende des der Ausschiebung unterworfenen Profils einen vorbestimmten Abstand von der Vorlauffront des nachgefüllten Gemisches erreicht hat. Dabei ist weiterhin eine Ausgestaltung der Steuerung dahingehend möglich, daß das Anschlußventil eines Profilbildungskanals geschlossen wird, wenn ein vorbestimmter Fülldruck in dem Profilbildungskanal sensiert wird.

Anschließend an den Austrittsschieber der Profilbildungskanäle kann eine Ablagefläche zur Ablage der jeweils ausgestoßenen Vorprofile vorgesehen sein; an den Ablagetisch kann ggf. unter Zwischenschaltung eines Umsetzgeräts ein Förderer mit quer zur Profilachse verlaufender Fördereinrichtung anschließen.

Die Ausflußstelle des Schneckenextruders kann mit einer Stau- oder Homogenisierungseinrichtung ausgeführt sein, an welche sich die Verteilerleitung anschließt.

Aus den weiter oben bereits angegebenen Gründen der Kleinhaltung des Schneckenextruders kann es vorteilhaft sein, wenn der Schneckenextruder zur Verarbeitung von pelletiertem Gemisch ausgebildet ist. Dabei kann der Schneckenextruder mit einem vorzugsweise nach oben offenen, im wesentlichen radialen und im querschnitt im wesentlichen rechteckigen Beschickungsschacht ausgeführt sein.

Um den Einzug des Schneckenextruders auf ein definiertes Maß pro Zeiteinheit zu bringen, wird empfohlen, daß der Zylinder des Schneckenextruders zumindest im Bereich einer Einzugszone mit Hemm-Mitteln zur Hemmung des Mitdrehens des Beschickungsguts ausgeführt ist. Dabei können die Hemm-Mittel von im wesentlichen axialgerichteten Nuten an der Innenumfangsfläche des Zylinders gebildet sein. Die Nuten können dabei in Achsrichtung des Zylinders an Tiefe abnehmen.

Mit dem zuvor beschriebenen Herstellungsverfahren kann ein Profilmaterial, insbesondere für die Herstellung von Profilrahmen der Fenster- und Türproduktion, erzeugt werden, bestehend aus einem Vollprofil, welches neben thermoplastischen Bestandteilen Füllstoffe enthält und zumindest auf Teilen seines Profilumfangs mit mindestens einer Vergütungsschicht in Form eines Blechprofils versehen ist. Dabei ist das Blechprofil bevorzugt von einem Aluminiumprofil gebildet, welches an seiner Sichtseite mit einer Farb- oder Lackschicht versehen ist.

Das Blechprofil kann man mit dem Vollprofil verkleben; es ist aber auch möglich, daß das Blechprofil mit dem Vollprofil formschlüssig in Eingriff gehalten ist.

Mindestens ein Rand des Blechprofils kann als Haltekante, z.B. für Dicht- oder Kittmaterial, ausgebildet sein.

Das Blechprofil kann von zwei Profilschalen gebildet sein, deren eine - bezugnehmend auf die Gestaltung eines fertigen Fensters - einen rauminneren Bereich der Profiloberfläche und deren andere einen raumäußeren Bereich der Profiloberfläche bedeckt, wobei die beiden Profilschalen im Falle eines Flügelrahmenprofils im Profilbereich des Scheibenbetts und im Profilbereich des Rahmenfalzes voneinander Abstand haben und im Falle eines Blendrahmenprofils im Profilbereich des Blendrahmenfalzes und der maueröffnungsseitigen Umfangsfläche voneinander Abstand haben. Auf diese Weise ist eine Kältebrückenbildung unterbunden.

Die Umfangsfläche des Vollprofils kann dabei in den von dem Blechprofil nicht bedeckten Bereichen unbehandelt oder nur durch spanabhebende Behandlung bearbeitet sein.

Der von dem Blechprofil nicht bedeckte Bereich kann durch entsprechenden Farbpigmentgehalt auf ein farblich einheitliches, insbesondere schwarzes, Farbbild, gestellt sein.

Ein aus dem erfindungsgemäßen Profilmaterial hergestellter Fensterrahmen oder Türrahmen kann in der Weise zusammengesetzt sein, daß aneinander anschließende Profilschenkel auf Gehrung geschnitten aneinander anschließen und miteinander im Gehrungsbereich verschraubt oder verklebt sind.

Zur Herstellung einer Rahmenkombination bestehend aus einem Flügelrahmen und einem Blendrahmen ist es selbstverständlich möglich, für Blendrahmen und Flügelrahmen unterschiedliche Vorprofile herzustellen, die optimal an die jeweilige Endprofilform angepaßt sind, so daß die spanabhebende Bearbeitung mit einem Minimum an Zerspanungsarbeit auskommt. Es ist aber auch möglich, daß für die Herstellung des Flügelrahmens und des 3lendrahmens einheitliche Vollprofile verwendet sind, die sich voneinander nur durch unterschiedliche spanabhebende Bearbeitung oder/und unterschiedliche Beschichtung mit Blechprofilen unterscheiden. Von dieser Möglichkeit macht man insbesondere dann Gebrauch, wenn im Hinblick auf die Investitionskosten einer Profilbildungsanlage zunächst nur eine solche Anlage für Blendrahmen- und Flügelrahmenprofile eingesetzt werden soll.

Das erfindungsgemäße Verfahren zur Herstellung von Profilmaterial erlaubt es auch, Profilmaterial für andere Einsatzzwecke als Türen- und Fensterbau herzustellen, beispielsweise für Möbelbau, Hausbau, Verpackungskonstruktionen, Paletten u. dgl.

Die beiliegenden Figuren erläutern die Erfindung anhand eines Ausführungsbeispiels; es stellen dar:
- Fig. 1: den Querschnitt eines Vorprofils, hergestellt nach einer ersten Formgebungsstufe des erfindungsgemäßen Verfahrens;
- Fig. 2: den Querschnitt eines Zwischenprofils, hergestellt nach einer zweiten Formgebungsstufe des erfindungsgemäßen Verfahrens;
- Fig. 3: den Querschnitt des Endprofils, hergestellt nach einer Beschichtungsstufe des erfindungsgemäßen Verfahrens;
- Fig. 4: eine Übersichtszeichnung zur Darstellung der Zusammengehörigkeit der nachfolgenden Figuren 4A und 4B;
- Fig. 4A: den materialflußaufwärtigen Teil der ersten Formgebungsstufe;
- Fig. 4B: den materialflußabwärtigen Teil der ersten Formgebungsstufe;
- Fig. 5: den Übergang von der ersten Formgebungsstufe zu der zweiten Formgebungsstufe;
- Fig. 6: die Beschichtungsstufe;
- Fig. 7: eine Übersichtszeichnung zur Darstellung der Zusammengehörigkeit der nachfolgenden Figuren 7A-7C;
- Fig. 7A: den materialflußaufwärtigen Teil der Kunststoffaufbereitung;
- Fig. 7B: den materialflußmittleren Teil der Kunststoffaufbereitung;
- Fig. 7C: den materialflußabwärtigen Teil der Kunststoffaufbereitung;
- Fig. 8: die Aufbereitung der Zuschlagstoffe;
- Fig. 9: einen Flügelrahmen eines Fensters, hergestellt aus Profilstäben, wie sie gemäß Fig. 1-6 gewonnen wurden;
- Fig. 10: ein Flußschema einer weiteren Durchführungsform des erfindungsgemäßen Verfahrens;
- Fig. 11: eine Pelletierungseinrichtung zur Verwendung in dem Verfahren nach Anspruch 10;
- Fig. 12: eine Extrudierschnecke für das Verfahren nach Anspruch 10 mit nachgeschalteter Stau- und Homogenisierungseinrichtung sowie einer Verteilereinrichtung;
- Fig. 13: Details zu der Stau- und Homogenisierungseinrichtung nach Fig. 12;
- Fig. 13a: eine Endansicht eines Staukörpers gemäß Fig. 13 in Pfeilrichtung XIIIa der Fig. 13;
- Fig. 14: die Verteilereinrichtung nach Fig. 12 mit nachgeschalteten Vorprofilbildungskanälen und einer Abnahmestation zur Abnahme der Vorprofile aus den Vorprofilbildungskanälen;
- Fig. 15: die Kombination eines Flügelrahmenprofils und eines Blendrahmenprofils;
- Fig. 15a: ein gemeinsames Vorprofil zur Gewinnung der Profile gemäß Fig. 15;
- Fig. 15b: den Schichtaufbau einer Vergütungsprofilschale;
- Fig. 16: die Kombination gemäß Fig. 15, ausgerüstet mit den wesentlichen Teilen eines Fensters und
- Fig. 17: eine Teilprofilschale von dem Blendrahmenprofil gemäß Fig. 15 und 16.

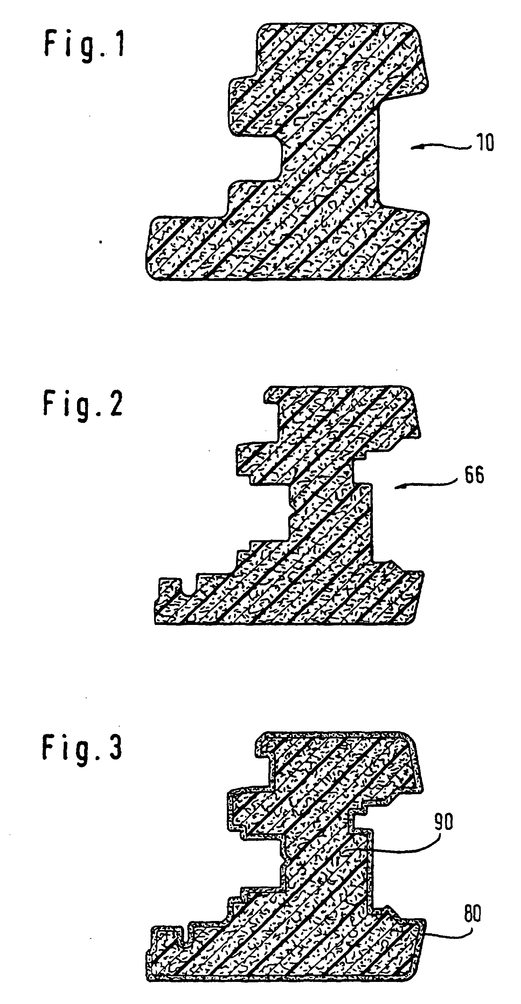

In Fig. 1 ist der Querschnitt durch ein Vorprofil dargestellt, aus dem nach weiterer, im folgenden noch zu beschreibender Bearbeitung ein Endprofil zur Herstellung von Flügelrahmen oder Blendrahmen für Fenster entsteht. Das Vorprofil ist mit 10 bezeichnet. Es ist im Querschnitt größer als das letztlich zur Fensterherstellung verwendete Endprofil. Es handelt sich um ein Vollprofil, welches aus 5 Gewichtsteilen thermoplastischem Kunststoff, z.B. Polyethylen oder Polypropylen oder ABS oder einem Gemisch davon und aus 1 Gewichtsteil Zuschlagstoffen, nämlich Miskanthus, besteht. Die Zuschlagstoffe sind gleichmäßig über den Querschnitt verteilt. Der Kunststoffanteil bildet eine Matrix, in welcher einzelne Fasern der Zuschlagstoffe oder kleinere Gruppen von Einzelfasern eingeschlossen sind. Die Fasern sind länglich und haben eine Längserstreckung von ca.
3 mm. Für den Fall, daß in dem Kunststoffanteil je nach Provenienz Fremdstoffe enthalten waren, sind auch diese im wesentlichen matrixartig von Kunststoff umschlossen.

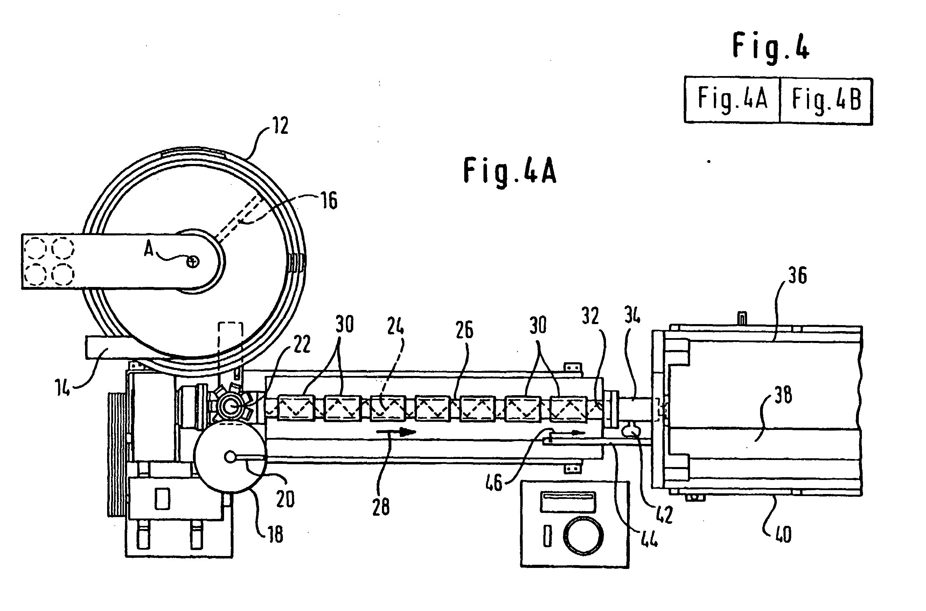

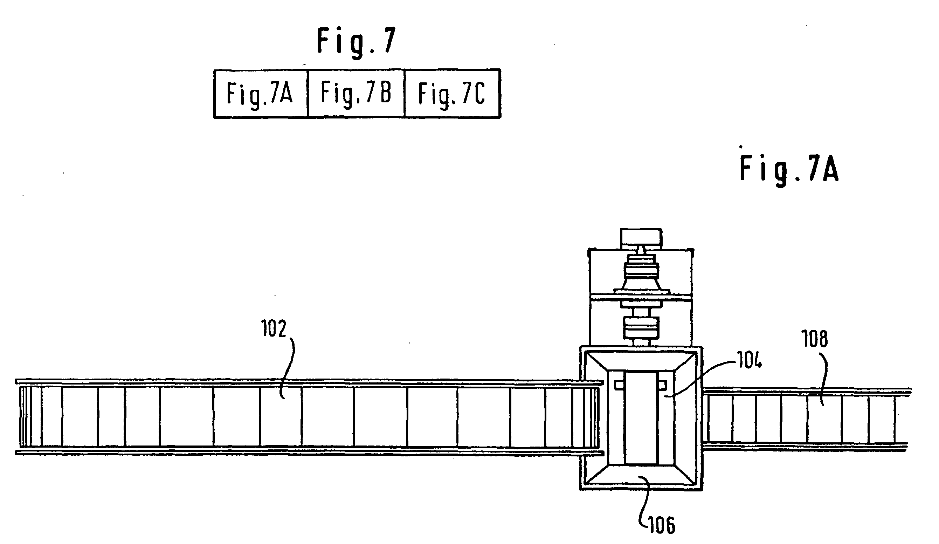

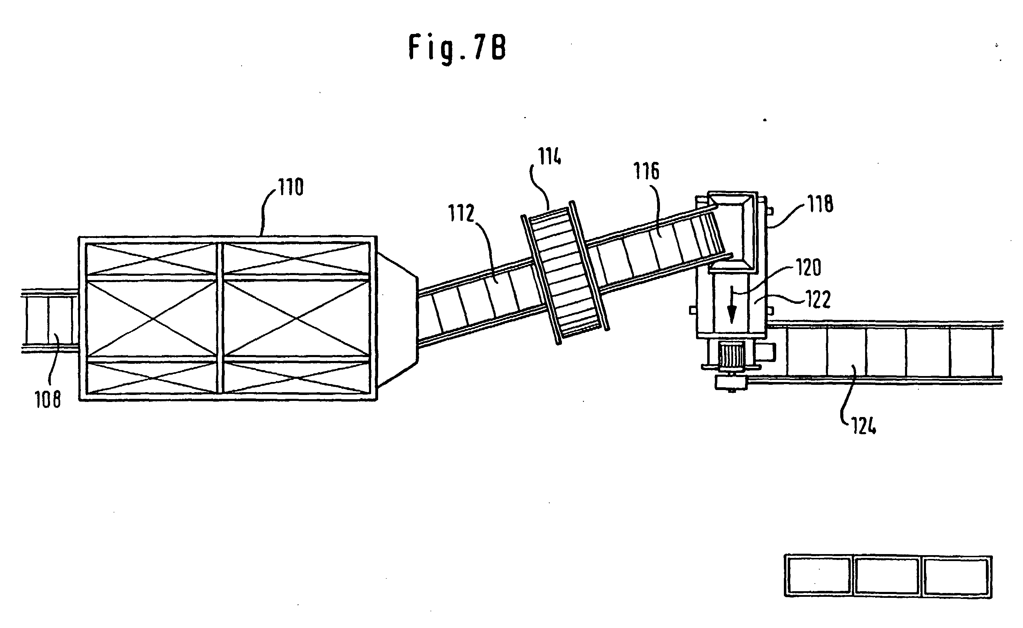

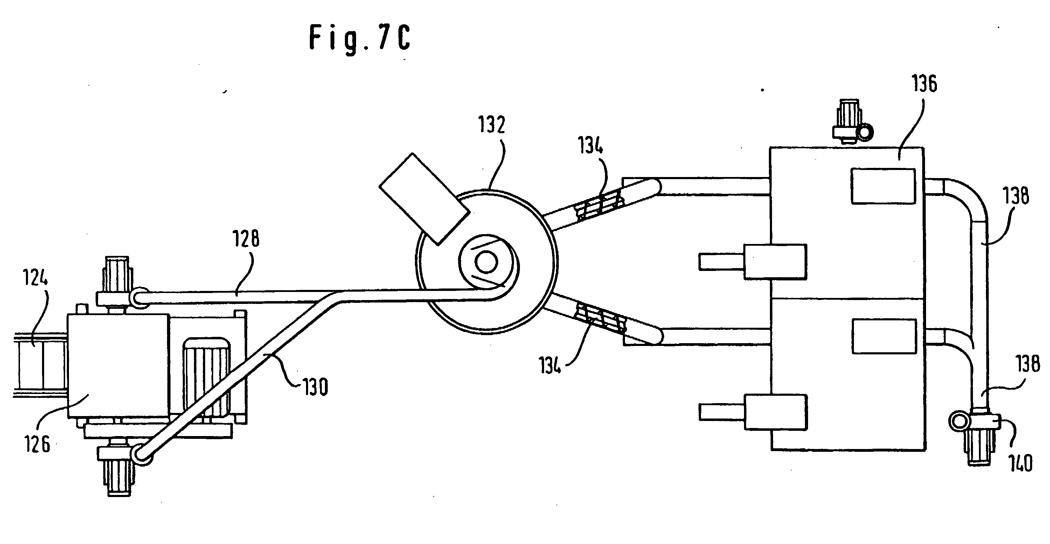

Zur Herstellung dieses Vorprofils 10 wird nun auf die Fig. 4A-4B verwiesen. In Fig. 4A erkennt man einen Vorratssilo 12, der durch eine Leitung 14 über ein Fördergebläse mit verarbeitungsfähigem Kunststoff beschickt wird. Die Gewinnung des verarbeitungsfähigen Kunststoffs wird später unter Bezugnahme auf die Fig. 7A-7C beschrieben werden. Hier ist zur Struktur des verarbeitungsfähigen Kunststoffs nur festzustellen, daß dieser in Form von Teilchen unregelmäßiger Größe vorliegt, die - wenn sie lose aufeinanderliegen - eine geringe Pankungsdichte ergeben, welche von Ort zu Ort stark schwankt. Der Vorratssilo 12 ist als ein Hochsilo ausgebildet, so daß durch das Eigengewicht der Kunststoffteilchen im Bodenbereich eine natürliche Verdichtung eintritt. Diese natürliche Verdichtung kann noch durch einen um die Achse A rotierenden Förderstern 16 unterstützt werden, der durch Schrägstellung seiner Schaufel eine Verdichtungswirkung nach unten erzeugt. Man erkennt ferner ein Hochsilo 18, welches von einer Aufbereitungsstation her mit verarbeitungsfähigem Zuschlagstoff beschickt wird, und zwar im Beispielsfall mit gemahlenem oder zerfasertem Miskanthus-Erntegut, welches frühestens 3 Jahre nach der Aussaat erstmals geerntet wurde. Es handelt sich hierbei um eine perennierende Pflanze, die mehrmals geschnitten werden kann.

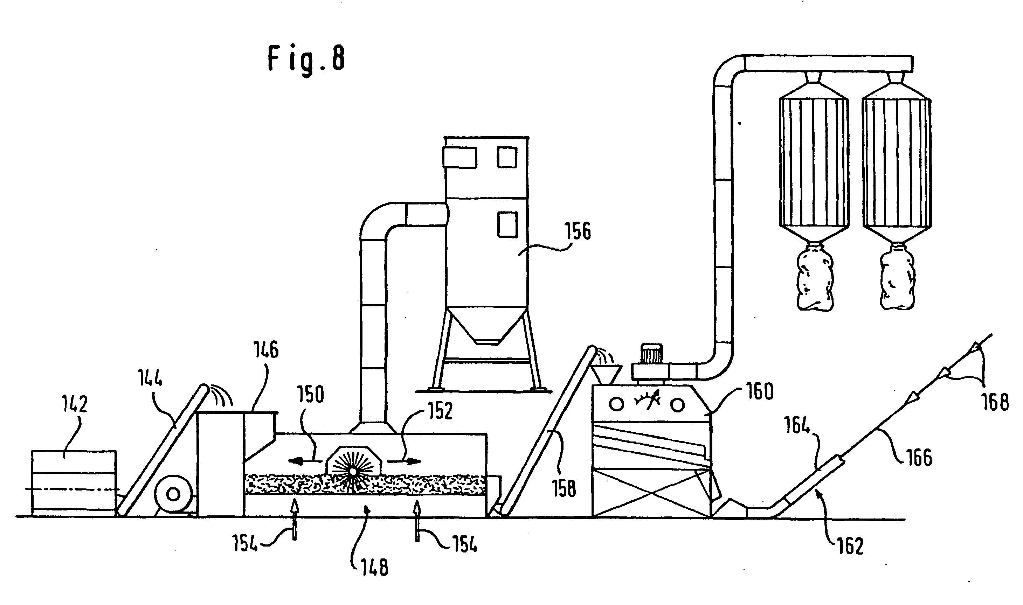

Die Aufbereitung wird im folgenden unter Bezugnahme auf Fig. 8 näher beschrieben. Hier genügt es zu sagen, daß das aufbereitete Fasergut in Form länglicher Fasern von ca. 3 mm Länge vorliegt. Auch dieses Fasergut besitzt bei loser Lagerung eine geringe Packungsdichte. In dem Hochsilo 18 tritt wiederum eine Vergrößerung der Packungsdichte auf, die erneut durch einen Förderstern 20 unterstützt werden kann.

Die Zuförderung des Faserguts zu dem Hochsilo 18 erfolgt durch einen sog. Seilförderer, das ist ein endloses oder ein hin- und hergehendes Seil innerhalb eines Förderkanals, welches eine die Mitnahme des Faserguts bewirkende Oberfläche besitzt.

Die Kompaktierung der Kunststoffteilchen und des Faserguts in den beiden Hochsilos 12,18 ist wesentlich, damit die nachfolgenden Einrichtungen der Mischung und Thermoplastifizierung des Kunststoffs von Kompaktierungsarbeit entlastet werden und deshalb kostengünstiger ausgeführt werden können.

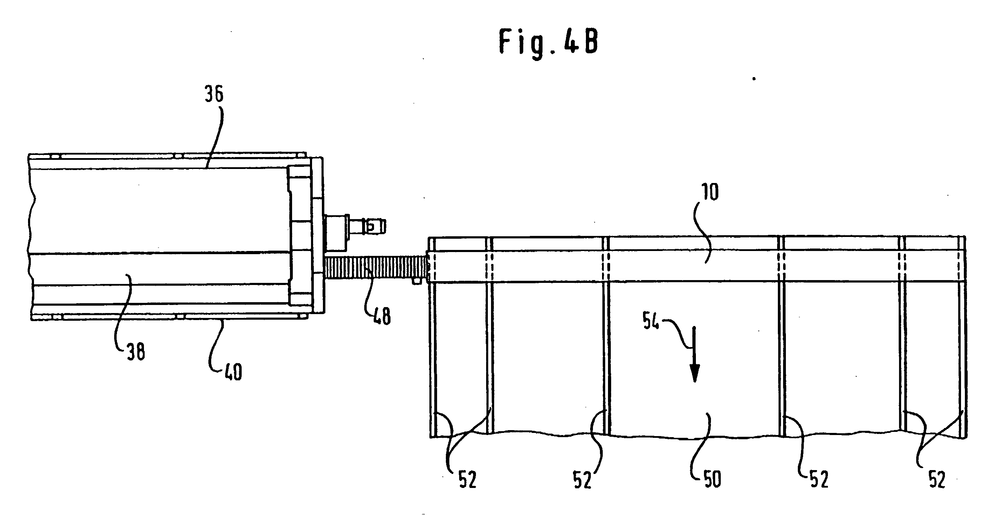

Von den beiden Hochsilos 12,18 gelangen die beiden Mischkomponenten, Kunststoffteilchen und Fasergut, zu einem Mischwerk im Mischpunkt 22, wobei der Transport zu dem Mischpunkt 22 von Schneckenförderern o. dgl. besorgt wird. An den Mischpunkt 22 schließt sich die Förderschnecke 24 an, die von einem Schnelkenzylinder 26 umschlossen ist. Der im Mischpunkt 22 bereits eingeleitete Mischvorgang, der auch im Mischpunkt 22 bereits durch bewegte Mischorgane unterstützt werden kann, wird im Bereich der Förderschnecke 24 fortgesetzt, so daß am Ausgang 32 der Förderschnecke 24 (in Fig. 4A rechts) eine homogene Mischung von Kunststoff und Fasergut vorliegt. In Fig. 4A ist die Förderschnecke 24 nur schematisch dargestellt. Die Förderschnecke 24 kann so ausgebildet sein, daß ihr Durchmesser, jedenfalls ihre radiale Schneckenhöhe, in Förderrichtung zunimmt, entsprechend einer zunehmenden Kompaktierung und Volumenabnahme des Mischguts. Der Kunststoffanteil des Mischguts wird im Laufe der Bewegung längs des Richtungspfeils 28 erwärmt und thermoplastifiziert. Diese Erwärmung kann durch Heizbänder oder Heizkammern 30 geregelt werden. Am Ausgang 32 der Förderschnecke 24 liegt ein homogenes, zähfließendes Gemisch vor, vergleichbar einer kaugummiartigen Knetmasse mit einer Temperatur von ca. 180°C. Dieses Gemisch wird von der Förderschnecke 24 durch eine Strangbildungsdüse 34 hindurchgetrieben. Am Ausgang der Strangbildungsdüse 34 befindet sich eine Revolvertrommel 36 mit einer Vielzahl von über den Umfang verteilten achsparallelen Vorprofilbildungskanälen 38, deren Querschnitt wenigstens annähernd dem der Strangbildungsdüsen 34 entspricht. Zu jedem Zeitpunkt während des kontinuierlichen Verfahrensablaufs wird jeweils nur ein Vorprofilbildungskanal 38 mit dem zähfließenden Gemisch jeweils bis zur vollständigen Auffüllung gefüllt. Nach Eintreten der vollständigen Auffüllung der Vorprofilbildungskanäle 38 - diese sind am jeweils rechten Ende gemäß Fig. 4B während der Auffüllung abgeschlossen - erfolgt durch Drehung der Revolvertrommel 36 eine Fortschaltung auf den in Umfangsrichtung jeweils nächstfolgenden Vorprofilbildungskanal 38. Die Revolvertrommel 36 ist in einem Kühlwassertank 40 aufgenommen, so daß eine Abkühlung des in den Vorprofilbildungskanälen 38 enthaltenen Gemisches und damit eine Erhärtung desselben eintritt. Nach Auffüllung eines bestimmten Vorprofilbildungskanals 38 bleibt dieser gefüllt, solange, bis er nach Auffüllung der übrigen Vorprofilbildungskanäle 38 wieder kurz vor der Anschlußstellung an die Strangbildungsdüse 34 steht, d.h. praktisch während einer Vollumdrehung der Revolvertrommel 36. Dadurch ist eine beträchtliche Verweilzeit des Gemisches innerhalb des Kühlwassertanks 40 gewährleistet, die ausreicht, um eine Erhärtung des Gemisches bis zur Handhabbarkeit des jeweils gebildeten Vorprofils erlauben. Während des Fortschaltens der Revolvertrommel 36 in Umfangsrichung wird die Förderung durch die Förderschnecke 24 in Förderrichtung 28 fortgesetzt, wobei ein schematisch dargestellter Pufferraum 42 während der Umschaltperioden das anfallende Gemisch aufnehmen kann. Dieses kann zum Eingang zurückgeleitet oder elastisch wieder in den Bereich der Strangbildung eingedrückt werden.

Wenn ein Vorprofilbildungskanal 38 nach einem nahezu vollständigen Umlauf der Revolvertrommel 36 von dem inzwischen weitgehend erhärteten Vorprofil 10 geräumt werden soll, dann befindet sich dieser Vorprofilbildungskanal 38 in Flucht mit einem Ausstoßer 44 am stromaufwärtigen Ende der Revolvertrommel 36. Dieser Ausstoßer 44 kann dann in Pfeilrichtung 46 in den betreffenden Vorprofilbildungskanal 38 einfahren und das entstandene Vorprofil 10 so weit aus dem rechten Ende des Vorprofilbildungskanals 38 ausstoßen, daß es dort von einem Raupenabziehwerk 48 erfaßt werden kann. Das Vorprofil ist in Fig. 4B zu erkennen; es ist entsprechend der Bezeichnung in Fig. 1 mit 10 bezeichnet. Durch das Raupenabziehwerk 48 wird das Vorprofil 10 auf einen Fördertisch 50 gebracht, der mit einer Mehrzahl von Förderriemen 52 ausgerüstet ist. Die Förderrichtung dieser Förderriemen 52 ist in Fig. 4B durch den Pfeil 54 angedeutet. Dies bedeutet, daß die Förderrichtung des Vorprofils 10 nunmehr orthogonal zur Längsrichtung des Vorprofils 10 verläuft. Im Bereich des Fördertisches 50 können die Vorprofile 10 während einer ersten Verweilzeit von beispielsweise 5 - 10 Stunden verbleiben. Die Förderriemen 52 können so langsam verlaufen, wie es bei vorgegebener Verweilzeit eben notwendig ist, damit die Vorprofile 10 innerhalb der gegebenen Verweilzeit die nächste Station erreichen können. Es ist ohne weiteres ersichtlich, daß man auf diese Weise auch bei sehr leistungsstarken Anlagen mit einem verhältnismäßig geringen Grundriß der jeweiligen Anlage auskommt. Man benennt die Profilherstellung der vorbeschriebenen Art in Abwandlung des Begriffs "Extrudieren" mit dem Begriff "Intrudieren", weil das thermoplastifizierte Gemisch in dem Vorprofilbildungskanal 38 hineingepreßt wird. Während des Durchgangs durch die Strangbildungsdüse 34 und während des Vorschubs innerhalb des Vorprofilbildungskanals 38 tritt eine überwiegende Parallelstellung der Fasern des Faserguts parallel zur Längsachse des Vorprofilstrangs ein. Dies ist im Hinblick auf die Biegefestigkeit des erhärteten Vorprofilstrangs vorteilhaft.

Für eine annähernd konstante Zusammensetzung des Gemisches und damit des Vorprofils 10 wird dadurch gesorgt, daß die die Hochsilos 12,18 mit dem Mischpunkt 22 verbindenden Förderschnecken als sog. Dosierschnecken ausgebildet sind. Es ist denkbar, die Fördergeschwindigkeit und damit Dosierwirkung der einzelnen Dosierschnecken nach Maßgabe des gemessenen Istwerts der Zusammensetzung durch Rückkopplung von einer Zusammensetzungssensorik auf die Dosierschnecken zu korrigieren und auf gewünschte Werte einzustellen.

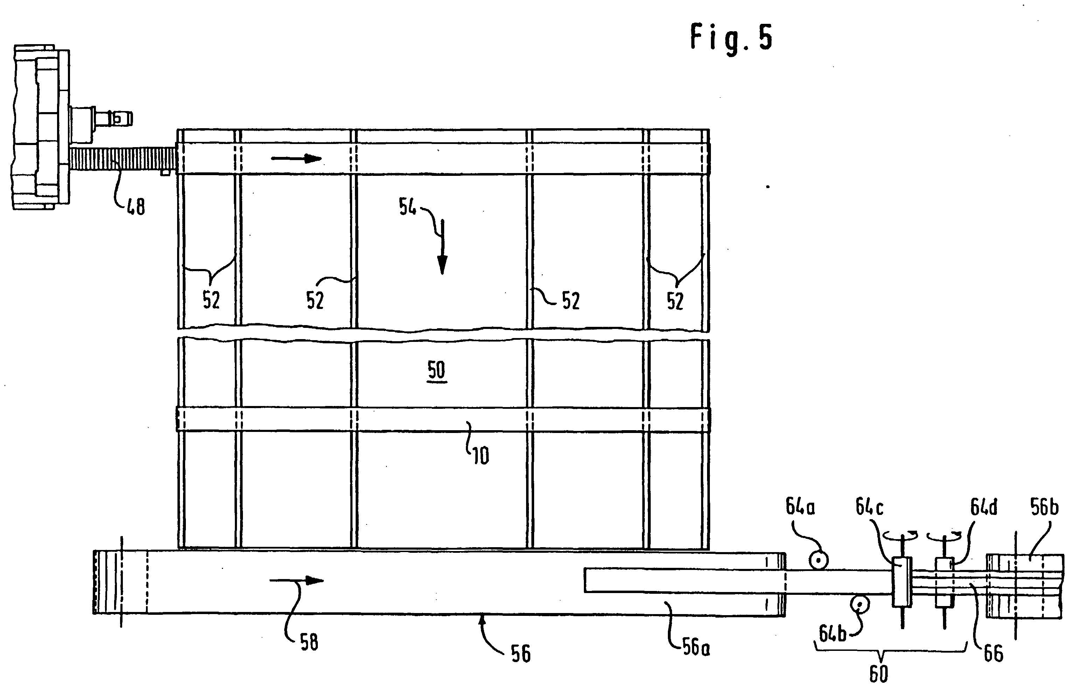

In Fig. 5 erkennt man erneut den Fördertisch 50 mit den Förderriemen 52 und einem im Bereich des Fördertisches 50 befindlichen Vorprofil 10. Dieses Vorprofil 10 erreicht im Zuge seiner Bewegung durch die Förderriemen 52 in Pfeilrichtung 54 nach Ablauf der vorbestimmten ersten Verweilzeit von 5 - 10 Stunden einen Längsförderer 56, der in Pfeilrichtung 58 das Vorprofil 10 weiterbewegt. Der Längsförderer 56 setzt sich aus zwei Abschnitten 56a und 56b zusammen, zwischen denen eine spanabhebende Bearbeitungsstation 60 mit rotierenden Bearbeitungsköpfen 64a-64d eingeschaltet ist. In dieser spanabhebenden Bearbeitungsstation 60 wird aus dem Vorprofil 10 gemäß Fig. 1 das Zwischenprofil 66 gemäß Fig. 2 gewonnen, wobei die einzelnen Bearbeitungsköpfe 64a-64d, die in sehr viel größerer Zahl als in Fig. 5 angedeutet, vorhanden sein können, über den Abstand zwischen den beiden Längsförderern 56a und 56b verteilt angeordnet sind.

Durch die gewollte Verweilzeit auf dem Fördertisch 50 von etwa 5 - 10 Stunden ist von dem insgesamt zu erwartenden Schwund der Vorprofile 10 ein wesentlicher Teil bereits eingetreten, so daß nur noch ein relativ geringer Restschwund zu erwarten ist. Der noch zu erwartende Restschwund hat einen kalkulierbaren aber durchaus endlichen Wert. Dieser Restschwund wird bei der Einstellung der spanabhebenden Bearbeitungsköpfe 64a-64d berücksichtigt, so daß am Ausgang der spanabhebenden Bearbeitungsstation 60 auf dem Längsförderband 56b ein Zwischenprofil 66 mit Übermaß, aber mit kalkulierbarem Übermaß gegenüber dem endgültigen Querschnittsmaß, vorliegt. Wenn die Zwischenprofile 66 dann - vorher wird noch eine Beschichtungsbehandlung durchgeführt - letztlich zu Flügelrahmen oder Blendrahmen von Fenstern oder Türen verarbeitet werden, so mag zwar noch ein Restschwund eintreten, sofern man nicht in Sonderfällen eine sehr viel längere Verweilzeit noch einschaltet, der Restschwund ist aber bei der Fenster- oder Türfertigung so einkalkuliert, daß nach Eintritt dieses Restschwunds - er mag eintreten, wenn die Türen oder Fenster bereits fertiggestellt oder auch schon eingebaut sind - die Funktionsfähigkeit der Fenster bzw. Türen dadurch nicht mehr in Frage gestellt wird.

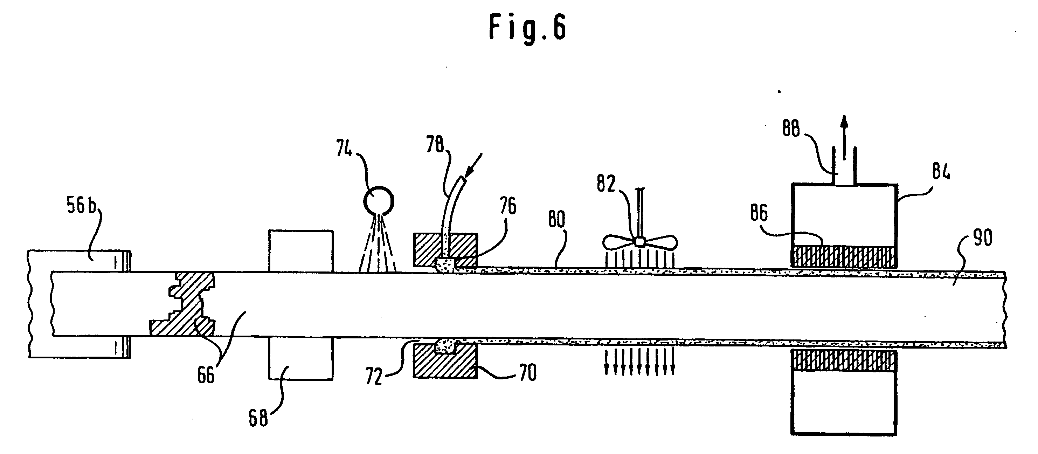

Von dem Förderband 56b kommend kann das durch die spanabhebende Bearbeitung erhaltene Zwischenprofil 66 gemäß Fig. 2 einer Beschichtungsstation gemäß Fig. 6 zugeführt werden. Diese Beschichtungsstation umfaßt zunächst eine Positionierungseinheit 68 in Form einer Positionierungsdüse oder eines Positionierungsrollensystems, welches die Aufgabe hat, das Zwischenprofil 66 gegenüber einer Beschichtungsringdüse 70 so zu positionieren, daß zwischen dem Außenumfang des Zwischenprofils 66 und dem Lumen der Beschichtungsringdüse 70 ein Beschichtungsspalt 72 von annähernd konstanter Spaltstärke über den gesamten Umfang des Zwischenprofils 66 entsteht. Der Beschichtungsringdüse 70 vorgeschaltet ist eine Behandlungseinrichtung 74, in welcher die Oberfläche des Zwischenprofils 66 eine adhesionsfördernde Behandlung für einen Beschichtungsfilm erfährt. Die Behandlung kann beispielsweise mittels Chemikalien oder energiereicher Strahlung erfolgen, die an der Oberfläche des Zwischenprofils 66 freie Radikale für die chemische Anbindung des Beschichtungsfilms zur Verfügung stellt. In der Beschichtungsringdüse 70 ist ein Ringverteilerkanal 76 vorgesehen, der über eine Leitung 78 mit filmbildendem Beschichtungsmaterial versorgt wird. Dieses filmbildende Beschichtungsmaterial wird durch den Ringverteilerkanal 76 über den ganzen Umfang des Zwischenprofils 66 gleichmäßig verteilt und bildet einen das Zwischenprofil 66 allseitig bedeckenden Film 80. Das filmbildende Beschichtungsmaterial kann beispielsweise von aufgeschmolzenem Polyethylen oder Polypropylen gebildet sein, welchem weiße Farbpigmente in solcher Konzentration zugesetzt sind, daß eine vollständige optische Abdeckung der Oberfläche eintritt.

Anschließend an die Beschichtungsringdüse 70 wird das beschichtete Zwischenprofil 66 durch eine Kühleinrichtung 82 so gekühlt, daß eine weitgehende aber nicht vollständige Erstarrung des Films 80 eintritt. Das Zwischenprofil 66 mit dem teilweise erstarrten Film 80 wird dann durch eine Nachbehandlungsprofildüse 84 geschickt, in welcher an der gesamten Oberfläche des Films 80 oder jedenfalls an optisch in Erscheinung tretenden Bereichen davon ein Unterdruck angelegt wird. Die Unterdruckanlegung erfolgt durch mikroporöse Wände 86, an deren Rückseite durch eine Luftabzugsleitung 88 ein Vakuum aufrecht erhalten wird. Der durch die mikroporösen Wände 86 an den Film 80 angelegte Unterdruck einerseits und die noch bestehende plastische Verformbarkeit des Films 80 sind so aufeinander abgestellt, daß der Film 80 beim Durchlauf durch die Nachbehandlungsprofildüse 84 egalisiert wird, wobei gleichzeitig eine Glättung des Films 80 durch die feinbearbeiteten Anlageflächen der mikroporösen Wände 86 eintritt.

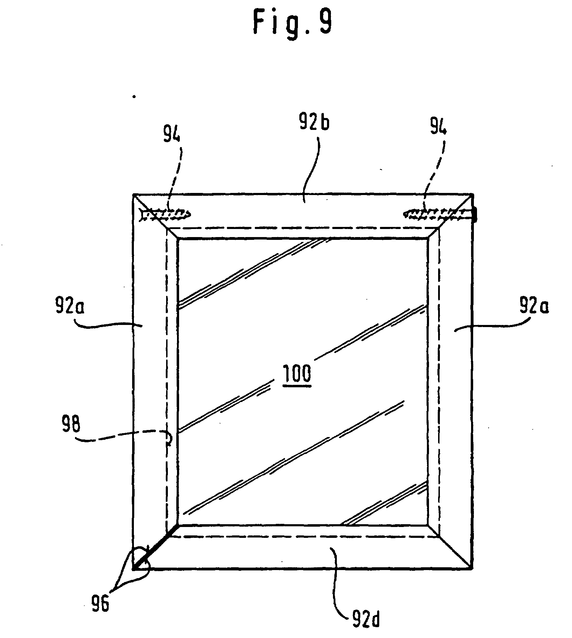

Am Ausgang der Nachbehandlungsprofildüse 84 liegt das Endprofil 90 vor, das in Fig. 3 im einzelnen dargestellt ist, d.h. das Profil mit der Filmbeschichtung 80 an seiner Oberfläche. Dieses Profil kann nun beispielsweise zu Flügelrahmen von Fenstern verarbeitet werden, wie sie in Fig. 9 dargestellt sind. Man erkennt dort einzelne Profilstäbe 92a-92d, die an ihren Enden auf Gehrung geschnitten und durch Holzschrauben 94 miteinander verbunden sind, wobei in den Gehrungsflächen 96 ein erhärtendes Dichtungsmittel eingebracht sein kann. Man erkennt in den einzelnen Stäben eine umlaufende Nut 98, geeignet zur Aufnahme einer Fensterscheibe 100, welche im Zuge des Zusammenbaus in die umlaufende Nut 98 eingelegt und dadurch fixiert wird.

In den Fig. 7A-7C ist die Aufbereitung des Kunststoffs dargestellt. Es sei angenommen, daß Kunststoffabfälle verarbeitet werden, die durch Aussortieren aus Haushalts- oder Kommunalmüll gewonnen sind. Diese werden in Ballen zu der Anlage gebracht und durch einen Ballenförderer 102 in die Anlage eingeführt. Am Ende des Ballenförderers 102 befindet sich ein Ballenaufreißer 104, in welchen die Ballen durch einen Trichter 106 eingeworfen werden. Die Ballen werden in dem Ballenaufreißer 104 aufgerissen und gelockert und gelangen dann durch ein weiteres Förderband 108 zu einer Aussiebtrommel 110, in welcher schwere grobe Teile z.B. Blechverschlußkapseln von Kunststoff-Flaschen ausgesiebt werden. Ein anschlieβendes Förderband 112 bringt die somit von schweren Anteilen befreiten Kunststoffscherben und -fetzen zu einem magnetischen Ausscheider 114, in welchem ferromagnetische Bestandteile abgeschieden werden. Ein weiteres Förderband 116 bringt die Kunststoffteile sodann zu einer Friktionszentrifuge 118. Diese ist als Durchlaufgerät mit einer Durchlaufrichtung gemäß Pfeil 120 ausgebildet. Es handelt sich um eine Siebtrommel, deren Mantel am Innenumfang mit einer Förderschnecke besetzt ist. Diese Förderschnecke bewirkt die Förderung in der Pfeilrichtung 120. Die Drehzahl ist so groß, daß die Papierbestandteile meist angefeuchtet nach radial außen tendieren. Diese Papieranteile werden dann durch Sieböffnungen der Siebtrommel hindurch abgegeben, wobei diese Öffnungen eine Öffnungsweite von ca. 2 mm haben. Die Papierteile werden in einem Sammelraum 122 gesammelt und von dort abgeführt. Von der Friktionszentrifuge 118 gelangt der Abfall, der nun zu ca. 90% aus Kunststoff besteht, auf ein weiteres Förderband 124. Der Kunststoff hat noch im wesentlichen die Originalgröße der im Ballen zusammengefaßten Fetzen und Flaschenteile, wobei auch noch Aluteile enthalten sein können, die von Flaschendeckeln u. dgl. stammen. Das Förderband 124 bringt das Gut nun zu einer in Fig. 7C dargestellten Schneidemühle 126. Diese besteht aus einem Statorgehäuse und einem in dem Statorgehäuse gelagerten Rotor. Statorgehäuse und Rotor sind an ihrer Innenumfangsfläche bzw. Außenumfangsfläche rechenartig mit Schneidemessern bestückt, durch deren Zusammenwirken eine Zerkleinerung der Kunststoffreste auf ein Maß von ca. 16 mm maximale Achslänge erfolgt. Die so durch Zerkleinerung gewonnenen Kunststoffteilchen werden sodann durch Förderleitungen 128 und 130 einem Zyklon 132 tangential zugeführt. In diesem Zyklon 132 werden mit warmer Luft Feinbestandteile nach oben ausgetragen, während die gröberen Kunststoffteile nach unten sinken. In dem Zyklon 132 kann ein Rührwerk eingebaut sein, welches der Verhinderung von Brübkenbildung innerhalb des Zyklons 132 dient. Die mit der warmen Luft ausgetragenen Feinbestandteile können in einem Filter gesammelt werden. Aus dem unteren Teil des Zyklons 132 gelangen die Kunststoffteilchen sodann über Förderschnecken 134 in eine Trockenanlage 136, in der die Kunststoffteilchen mit ca. 70°-80°C warmer Luft im Wirbelschichtverfahren auf eine Restfeuchte von weniger als 1 Gew.% Wassergehalt getrocknet werden. Von der Trockenanlage 136 führen Leitungen 138 mit einem Fördergebläse 140 zu dem in Fig. 4A dargestellten Hochsilo 12 mit dem Einlaß 14.

In Fig. 8 schließlich ist die Aufbereitung der zweiten Mischkomponente, d.h. des Faserguts, dargestellt. Man erkennt dort eine Mühle oder eine Zerfaserungseinrichtung 142, welcher das ungehäckselte Erntegut in Ballenform zugeführt wird. Dort erfolgt eine Mahlung auf ca. 3 mm lineare Teilchenlänge. Das gemahlene Gut ist noch so feucht, wie es auf dem Feld gewonnen wurde. Von der Mühle gelangt das Mahlgut mittels einer Förderschnecke 144 in den Eingangstrichter 146 einer Trocknungsanlage 148, durch welche das Mahlgut hindurchgefördert und gleichzeitig mittels eines in Peilrichtung 150-152 hin- und herfahrenden Auflockerungswerks aufgelockert wird. Das durchgeförderte Gut wird von unten in Pfeilrichtung 154 von Trockenluft durchströmt. Diese nimmt die Feuchtigkeit aus dem Mahlgut auf. Die feuchte Luft gelangt in eine Filteranlage 156, in der mitgerissener Staub und Kondensat-Tröpfchen abgefiltert wurden. Die noch feuchte Luft kann an beliebiger Stelle in den Prozeß wieder eingeführt werden, insbesondere in Pfeilrichtung 154. Das getrocknete Mahlgut wird sodann mit einem Feuchtigkeitsgehalt von 1 Gew.% über eine Förderschnecke 158 zum Eingang einer Fraktioniersiebanordnung 160 gebracht, in der die für die Mischkomponente Fasergut brauchbare Fraktion ausgesiebt und der Rest abgeführt wird, wobei dieser Rest beispielsweise im Rahmen der Energiegewinnung verwertet werden kann. Die brauchbare Fraktion wird schließlich über eine Seilfördereinrichtung 162 zum Eingang des Hochsilos 18 gemäß Fig. 4A gebracht. Die Seilfördereinrichtung 162 umfaßt eine Rohrleitung 164 mit einem hin- und hergehenden oder ständig umlaufenden Förderseil 166. Auf diesem Förderseil 166 sind Mitnahmenoppen 168 angebracht. Diese Seilfördereinrichtung 162 hat sich wegen der relativ geringen Staubentwicklung als vorteilhaft erwiesen.

Untersuchungen haben gezeigt, daß das so hergestellte Profil einer Temperatur von -30° bis +40°C und darüber hinaus standhält und deshalb die an Fenster und Türen gestellten Anforderungen erfüllt. Durch das angewandte "Intrudieren" läßt sich ein hoher Druck aufbauen, der auch bei stark inhomogenem Ausgangsmaterial für homogenes Profilmaterial sorgt.

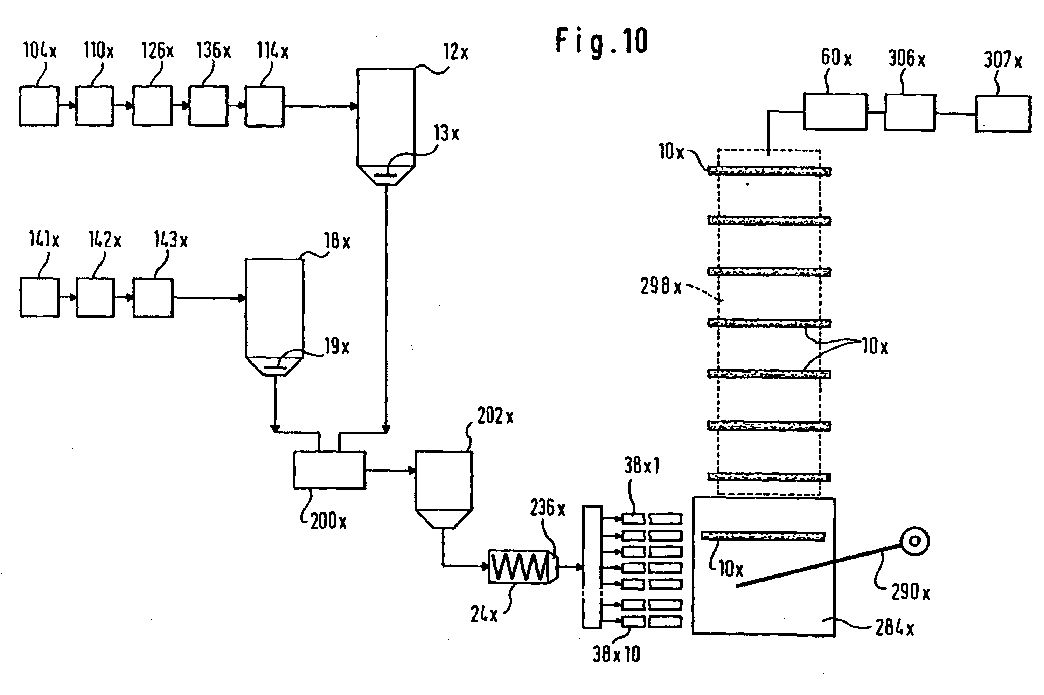

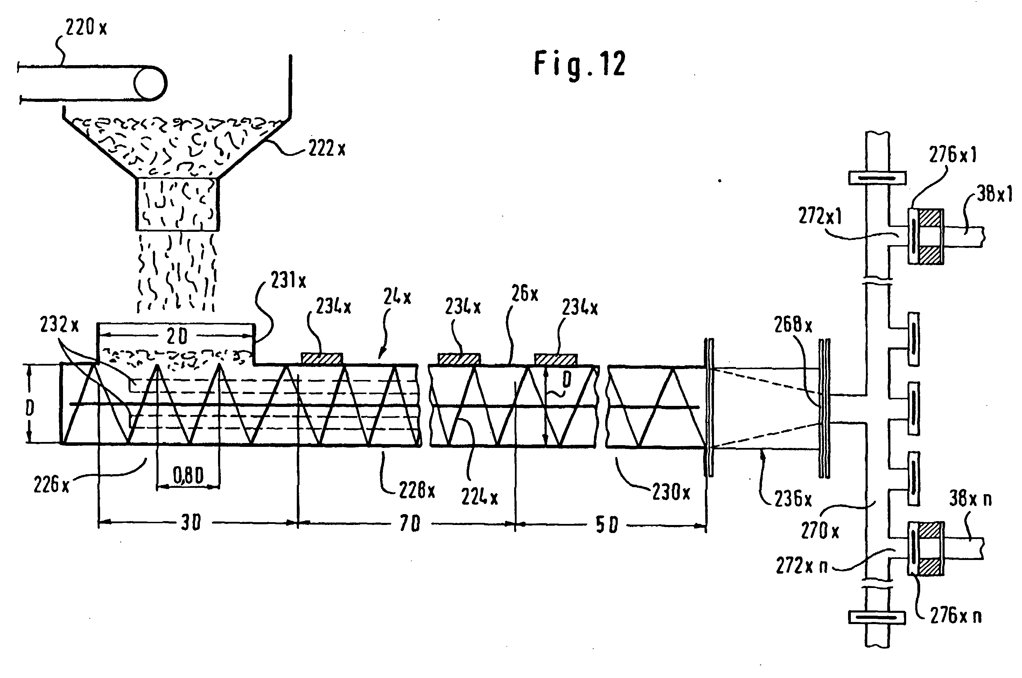

Im folgenden wird eine weitere erfindungsgemäße Verfahrensweise unter Bezugnahme auf die Fig. 10-17 beschrieben. Dabei sind analoge Teile mit den gleichen Bezugszeichen versehen wie in den bisherigen Figuren, jedoch jeweils mit dem Index x.

In Fig. 10 erhält man eine Gesamtübersicht über die alternative Verfahrensweise. Mit 104x ist ein Ballenaufreisser bezeichnet, welchem Kunststoffballen aus Sammlungen des Dualen Systems Deutschland (DSD) zugeführt werden. Von dem Ballenaufreisser 104x gelangen die Kunststoffteile des jeweiligen Ballens zu
einer Aussiebvorrichtung 110x, in welcher schwere Grobteile, z.B. Blechverschlußkapseln von Kunststoff-Flaschen, ausgesondert werden. Von der Aussiebvorrichtung 110x gelangen die so teilweise gereinigten Kunststoffbestandteile zu einer Zerkleinerungsvorrichtung 126x. In der Zerkleinerungsvorrichtung 126x werden die Kunststoffbestandteile auf eine Teilchengröße von ca. 20 mm gebracht. Die so zerkleinerten Kunststoffteilchen gelangen in eine Trocknungsanlage 136x, in welcher eine Trocknung auf ca. 1 Gew.% Wassergehalt erfolgt. Die getrockneten Kunststoffteilchen gelangen weiter in eine magnetische Ausscheidungseinrichtung 114x, in welcher etwaige ferromagnetischen Bestandteile ausgeschieden werden. Schließlich gelangen die Kunststoffteilchen in ein Hochsilo 12x.

Man erkennt weiter in Fig. 10 eine Anlieferungsstation 141x, welcher Getreidestroh in Ballenform zugeführt wird, wobei dort die Ballen zerrissen werden. Von der Anlieferungs- und Zerreißstation 141x gelangt das Getreidestroh in eine Zerfaserungseinrichtung 142x, in welcher das ungehäckselte Erntegut durch eine Mahlung auf ca. 3 mm lineare Teilchenlänge zerkleinert wird. Das so zerkleinerte Getreidestroh gelangt sodann in eine Trocknungseinrichtung 143x, in der es von Trockenluft durchströmt wird und auf einen Wassergehalt von ca. 1 Gew.% getrocknet wird, um schließlich in ein Hochsilo 18x zu gelangen. Im einzelnen können die Behandlungsstrecken 104x-12x und 141x-18x abgewandelt werden, beispielsweise entsprechend der Beschreibung des vorangehenden Ausführungsbeispiels. Die anzuwendenden Behandlungsschritte hängen von der Beschaffenheit der jeweils angelieferten ersten und zweiten Mischkomponenteh ab, die in 104x bzw. 141x in den Verfahrensablauf eingeführt werden.

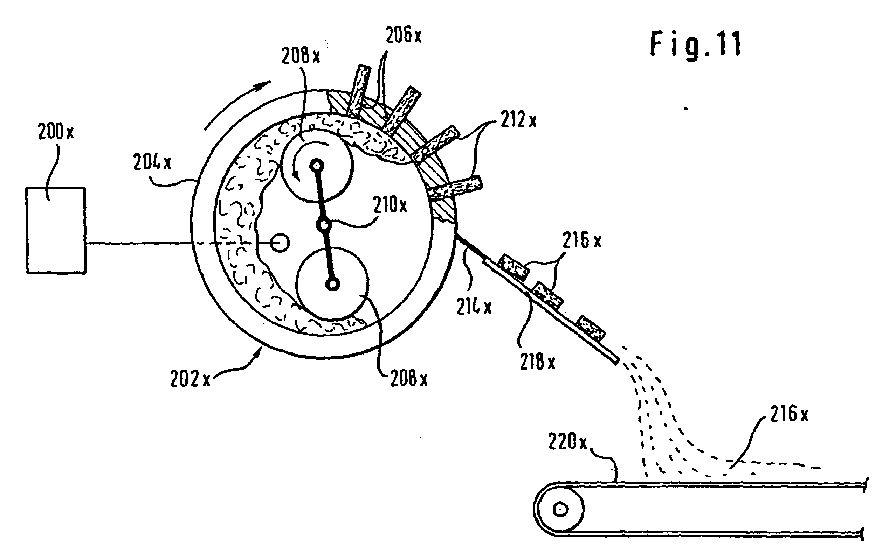

Von den Hochsilos 12x und 18x, die mit Auflockerungseinrichtungen 13x bzw. 19x zur Vergleichmäßigung der Gutabgabe ausgerüstet sein können, gelangen die beiden in dem jeweiligen Hochsilo gelagerten Mischkomponenten in eine Vormischeinrichtung 200x und von dieser in eine Matrizeneinrichtung 202x zur Herstellung von Pellets. Die Matrizeneinrichtung 202x ist schematisch in Fig. 11 dargestellt. Sie umfaßt eine rotierende Matrizentrommel 204x mit einer Vielzahl von über die Umfangsfläche verteilten Matrizenbohrungen 206x. Das in die Matrizentrommel 204x eingeführte Mischgut aus der Vormischeinrichtung 200x wird innerhalb der Matrizentrommel 204x einer Walk- und Knetbehandlung durch Kollerwalzen 208x, ggf. unter Wärmezufuhr, unterworfen, die eine Achse 210x an der Innenumfangsfläche der Matrizentrommel 204x umlaufen und sich dabei um ihre eigene Achse drehen. Durch diese Walk- und Knetbehandlung wird das Mischgut auf eine Temperatur in der Größenordnung von 105°C-130°C gebracht (unter der Voraussetzung, daß die Hauptbestandteile der Mischkomponente Kunststoff Polyethylen und Polypropylen sind).

Auf diese Weise werden die Kunststoffanteile wenigstens teilweise thermoplastifiziert und mit den Getreidestrohfasern vermischt. Das thermoplastifizierte Gemisch wird durch die Matrizenbohrungen 206x ausgedrückt, so daß sich am Ausgang der Bohrungen 206x Würstchen 212x bilden. Diese Würstchen 212x werden im Zuge des Umlaufs der Matrizentrommel 204x durch ein Schabmesser 214x abgeschnitten und damit zu einzelnen Pellets gemacht. Die Pellets 216x gelangen über eine an das Schabmesser 214x anschließende Rutsche 218x auf ein Förderband 220x, durch welches sie einer Extruderschnecke 24x zugeführt werden.

Die Extruderschnecke 24x umfaßt einen Schneckenzylinder 26x mit einem Innendurchmesser D und innerhalb dieses Schneckenzylinders 26x einen eingängigen Schneckenkörper 224x. Der Schneckenkörper 224x bildet in dem Schneckenzylinder 26x eine Einzugszone 226x von der Länge 3D, eine Kompressionszone 228x mit der Länge 7D und eine Austragszone 230x mit der Länge 5D. Die Schneckensteigung beträgt 0,8D.

Das Vorgemisch gelangt von dem Fülltrichter 222x in einen Beschickungsschacht 231x, der in Achsrichtung der Schnecke eine Ausdehnung von ca. 2D und in Richtung senkrecht zur Zeichenebene eine Ausdehnung entsprechend dem Durchmesser D besitzt. Im Einzugsbereich und ggf. darüber hinaus sind an der Innenumfangsfläche des Schneckenzylinders 26x Hemmnuten 232x vorgesehen, die eine Tiefe von etwa 3 mm besitzen. Diese Hemmnuten 232x sind dazu bestimmt, ein Mitdrehen des eingefüllten Mischguts mit dem Schneckenkörper 224x zu verhindern. Die Hemmnuten laufen in Achsrichtung des Schneckenkörpers 224x zum rechten Ende des Schneckenzylinders hin flach aus. Der Schneckenzylinder 26x ist über seine Achslänge verteilt mit ringförmigen Heizkörpern 234x versehen. Diese Heizkörper 234x können elektrisch oder mit Dampf beheizt sein. Sie sind insbesondere bei Arbeitsbeginn der Extruderschnecke 24x von Bedeutung. Im stationären Betrieb können sie unter Umständen abgeschaltet werden, da allein durch die Knetarbeit, welcher das Mischgut unterworfen wird, eine Erwärmung eintritt.

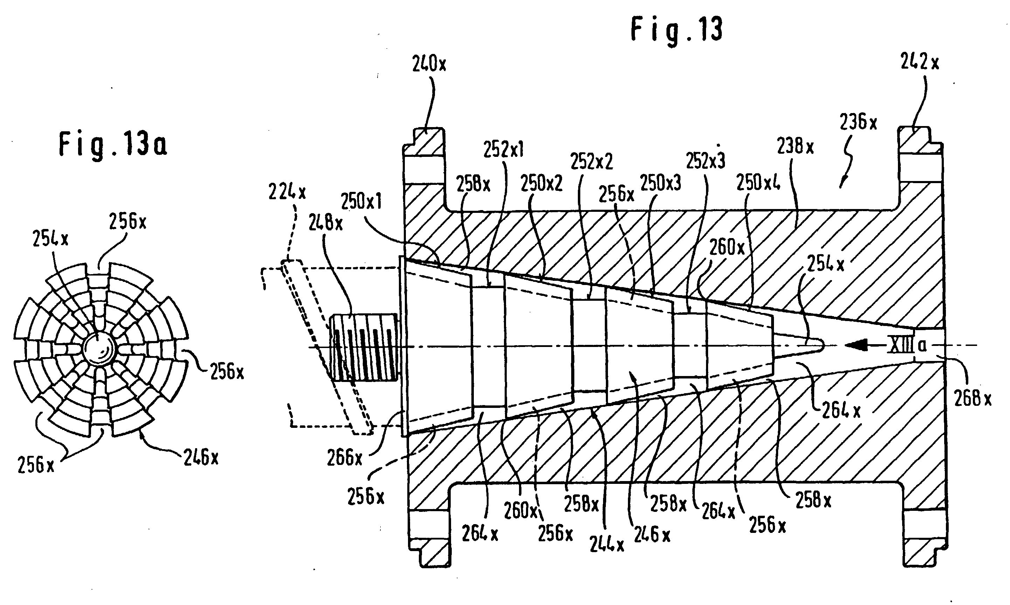

An den Schneckenzylinder schließt sich eine Stau- und Homogenisiereinrichtung 236x an, welche im Detail in den Fig. 13 und 13a dargestellt ist.
Diese Stau- und Homogenisiereinrichtung 236x umfaßt ein Durchflußrohr 238x mit einem Anschlußflansch 240x zum Anschluß an den Schneckenzylinder 26x und einem weiteren Anschlußflansch 242x zur Verbindung mit einer später zu beschreibenden Verteilereinrichtung. Das Durchflußrohr 238x weist einen konischen Durchgangskanal 244x auf, innerhalb welchem ein Kegelstumpfkörper 246x aufgenommen ist. Der Kegelstumpfkörper 246x ist an dem Schneckenkörper 224x durch einen Schraubzapfen 248x lösbar und zum Mitdrehen mit dem Schneckenkörper 224x befestigt. Der Kegelstumpfkörper 246x ist stufenförmig ausgebildet. Seine Mantelfläche setzt sich zusammen aus konischen Abschnitten 250x1, 250x2, 250x3 und 250x4 sowie dazwischenliegenden zylindrischen Abschnitten 252x1, 252x2 und 252x3 sowie einer Spitze 254x. Im Bereich der konischen Abschnitte 250x1-250x4 sind Nuten 256x eingeformt. Diese Nuten 256x sind in ihrer Tiefe so bemessen, daß ihre Sohle jeweils in die angrenzenden zylindrischen Abschnitte 252x1, 252x2 und 252x3 bündig ausläuft. Die konischen Abschnitte 250x1 liegen mit ihren stromaufwärtigen Enden der Innenumfangsfläche des konischen Durchgangskanals 244x unmittelbar benachbart oder in Kontakt mit diesem. Zwischen den konischen Abschnitten 250x1-250x4 und dem konischen Durchgangskanal 244x sind Spaltbereiche 258x definiert.

Die axiale Länge der konischen Abschnitte 250x1-250x4 ist größer als die axiale Länge der zylindrischen Abschnitte 252x1-252x3. Vorzugsweise sind die konischen Abschnitte und die zylindrischen Abschnitte in ihrer axialen Länge jeweils untereinander gleich. Die Nuten 256x entsprechen in ihrem Querschnitt an der jeweils engsten Stelle 260x annähernd den größten nach vorangehender Reinigung der Kunststoffabfälle noch zu erwartenden Fremdkörpern.

In den Spaltbereichen 258x zwischen den konischen Abschnitten 250x1-250x4 und der Innenumfangsfläche des konischen Durchgangskanals 244x sind durch das Zusammenwirken mit den Nuten 256x Intensivscherzonen ausgebildet. An die Intensivscherzonen 258x schließen sich jeweils Entspannungszonen 264x im Bereich der zylindrischen Abschnitte 252x1-252x3 sowie im Bereich der Spitze 254x an. Die Axialposition des Kegelstumpfkörpers 246x innerhalb des Durchgangskanals 244x kann durch eine oder mehrere Beilagscheiben 266x an der Verbindungsstelle zwischen dem Kegelstumpfkörper 246x und dem Schneckenkörper 244x eingestellt werden. Auf diese Weise kann auch der Abstand der durchmessergrößeren stromaufwärtigen Enden der konischen Abschnitte 250x1-250x4 von der Innenumfangsfläche des konischen Durchgangskanals 244x variiert werden. Der Kegelstumpfkörper 246x kann aus einzelnen konischen und zylindrischen Scheiben zusammengesetzt sein.

Die durch den Schneckenextruder 24x thermoplastifizierte Masse wird durch den am Ausgang des Schneckenextruders 24x herrschenden Förderdruck in den konischen Durchgangskanal 244x hineingefördert. Im stromaufwärtigen Bereich des ersten konischen Abschnitts 250x1 wird die gesamte thermoplastifizierte Masse von den Nuten 256x aufgenommen und durch diese hindurchgefördert. Entlang dem konischen Abschnitt 250x1 erfolgt eine periphere, radiale und axiale Durchmischung innerhalb der Intensivscherzone 258x, die mit zunehmender Spaltweite der Intensivscherzone 258x zunimmt. Durch den sich in Extrusionsrichtung öffnenden Spaltbereich 258x (Intensivscherzone) werden Störstoffe, nicht plastifiziertes Material und thermisch geschädigtes Material ständig mitgenommen und es entstehen keine Ablagerungen und Verstopfungen. Produktionsausfälle werden auf diese weise vermieden.

In der Entspannungszone 264x erfolgt eine weitere Durchmischung der Kunststoffschmelze bei geringen Scherbeanspruchungen. Im Bereich der weiteren konischen bzw. zylindrischen Abschnitte wiederholen sich diese Vorgänge.

Besonders vorteilhaft wirkt sich die durch die Konizität des Durchgangskanals 244x und des Kegelstumpfkörpers 246x verursachte fortlaufende Reduktion des Durchflußquerschnitts aus. Aufeinanderfolgende freie Querschnitte reduzieren sich in Extrusionsrichtung und es tritt eine Massedruck- und Temperaturerhöhung und als Folge hiervon eine Fließgeschwindigkeitserhöhung und eine Verbesserung der Fließfähigkeit der Kunststoffschmelze ein. Andererseits nimmt die Umfangsgeschwindigkeit in Extrusionsrichtung wegen des abnehmenden Durchmessers ab, so daß auch die Scherwirkung in Extrusionsrichtung abnimmt. Auf diese Weise wird es möglich, thermisch besonders empfindliche Kunststoffkcmpositionen mit schlechten Fließeigenschaften ohne thermische Schädigung zu verbreiten und stofflich zu homogenisieren. Dadurch, daß die Bodenflächen der Nuten 256x bündig in die Umfangsflächen der zylindrischen Abschnitte 252x1-252x3 übergehen, werden tote Ecken vermieden. Letztlich kann die Qualität der am Ausgang der Stau- und Mischeinrichtung verfügbaren thermoplastifizierten Masse insbesondere bezüglich der Homogenität und der Freiheit von thermisch geschädigten Bestandteilen verbessert werden. Dadurch wird die Einarbeitbarkeit von Naturstoffen, insbesondere Naturfasern wie Getreidestrohfasern, ermöglicht. Im Falle einer heterogenen Kunststoffschmelze schmilzt ein höherer Anteil des Kunststoffgemisches auf und es erfolgt eine Verbesserung der stofflichen Homogenität der Kunststoffschmelze. Durch die Axialverstellbarkeit des Kegelstumpfkörpers lassen sich die Behandlungsbedingungen dem jeweiligen Kunststoffgemisch anpassen. Es ist auch möglich, die Größe der Nuten 256x zu variieren. Dadurch, daß diese im Querschnitt größer gemacht werden, als die zu erwartenden harten Fremdkörper, wird ein Festsetzen von Störstoffen verhindert.

Eine besonders feinfühlige Anpassung an unterschiedliche Verfahrensbedingungen wird dadurch ermöglicht, daß die zylindrischen Abschnitte und die konischen Abschnitte in ihrer Form und Länge verändert werden. Hierzu ist besonders vorteilhaft, wenn der Kegelstumpfkörper 246x aus einzelnen austauschbaren Abschnitten zusammengesetzt ist.

Die Homogenisierungswirkung der Stau- und Homogenisiereinrichtung erlaubt es, die Länge des Schneckenextruders zu verkürzen und damit den Investitionsaufwand durch den Schneckenextruder zu verringern.

Die Stau- und Homogenisiereinrichtung ist für die Druckhöhe am Eingang der nachfolgenden Vorprofilbildungskanäle verantwortlich.

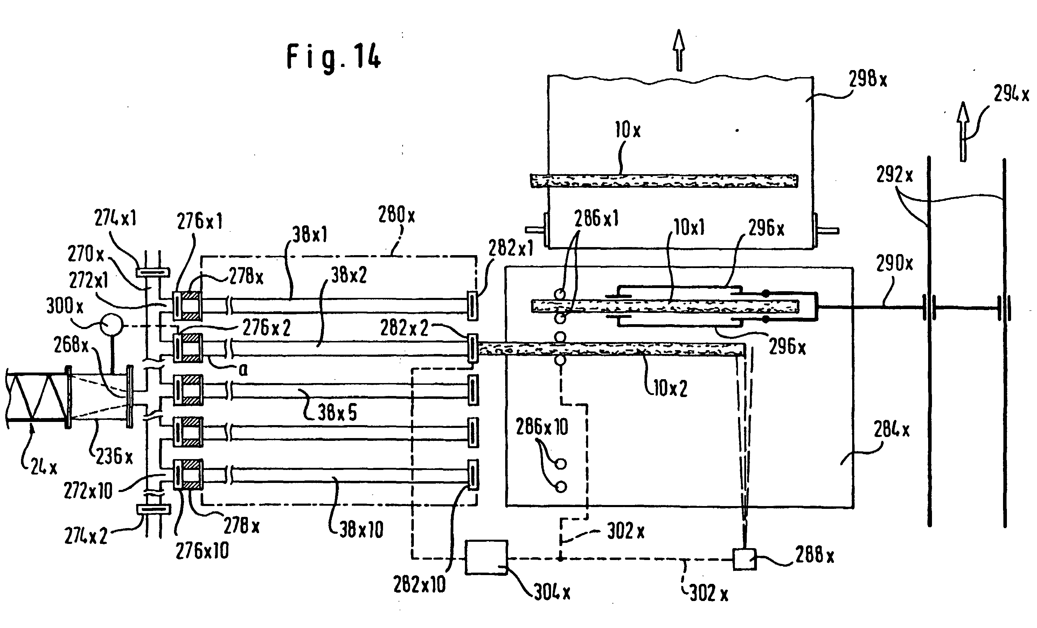

In Fig. 14 erkennt man einen Teil des Schneckenextruders 24x und die Stau- und Homogenisiereinrichtung 236x wieder. Der Ausgang der Stau- und Homogenisiereinrichtung 236x ist mit 268x bezeichnet. Hier ist vermittels des in Fig. 13 mit 242x bezeichneten Flansches eine Verteilerleitung 270x angeschlossen. Die Verteilerleitung 270x besitzt über ihre Länge verteilt eine Mehrzahl von, z.B. 10, Kanalbeschickungsanschlüssen 272x1-272x10. An den beiden Enden der Verteilerleitung 270x sind Reinigungsventile 274x1 und 274x2 angebracht. An jeden der Kanalbeschickungsanschlüsse 272x1 ist ein Vorprofilbildungskanal 38x1-38x10 angeschlossen und zwar jeweils über ein zugehöriges Anschlußventil 276x1-276x10. Die Anschlußventile 276x1-276x10 sind dabei mit dem jeweils zugehörigen Vorprofilbildungsknal 38x1-38x10 über eine thermische Isolierung 278x verbunden. Die Vorprofilbildungskanäle 38x1-38x10 sind stationär in einem Kühlbad 280x aufgenommen. An den Enden der Vorprofilbildungskanäle 38x1-38x10 sind Austrittsschieber 282x1-282x10 angebracht. An die Austrittsschieber 282x1-282x10 schließt sich eine Ablagefläche 284x an, welche bündig mit der Bodenfläche der Vorprofilbildungskanäle 38x1-38x10 liegt. Im Bereich der Ablagefläche 284x ist zu jedem Vorprofilbildungskanal 38x1-38x10 eine Gruppe von Abzugswalzen 286x1-286x10 vorgesehen.

Die Auffüllung der einzelnen Vorprofilbildungskanäle 38x1-38x10 geschieht folgendermaßen:
Zunächst soll der oberste Vorprofilbildungskanal 38x1 betrachtet werden. Es wird angenommen, daß dieser von einem vorangehenden Füllvorgang bereits gefüllt ist und daß sich in ihm ein Vorprofil gebildet hat, welches durch Abkühlung in dem Wasserbad 280x abgekühlt und verfestigt worden ist. Sobald dieses Vorprofil eine ausreichende Abkühlung erfahren hat, wird zunächst das obere Reinigungsventil 274x1 kurzzeitig geöffnet, so daß in dem oberen Teil der Verteilerleitung 270x etwa enthaltene erstarrte Masse ausgestossen werden kann. Dann wird das Anschlußventil 276x1 geöffnet, während alle anderen Anschlußventile 276x2-276x10 geschlossen sind. Gleichzeitig wird der Austrittsschieber 282x1 geöffnet, während alle anderen Austrittsschieber 282x2-282x10 geschlossen bleiben. Nunmehr steht der Druck der Schmelze an dem linken Ende des Vorprofilbildungskanals 38x1 an und kann das in diesem bereits erhärtete Vorprofil durch den Austrittsschieber 282x1 ausschieben. Der Vorprofilbildungskanal 38x1 wird dabei in seinem Abschnitt a intensiv gekühlt, so daß sich am Vorlaufende der neu in den Vorgrofilbildungskanal 38x1 eintretenden Schmelze rasch ein erhärteter Pfropfen bildet. Die neuzufließende Schmelze schiebt das in dem Vorprofilbildungskanal vorher gebildete und erhärtete Vorprofil 10x1 vor sich her. Dabei gelangt dieses Vorprofil 10x1 in den Bereich der Abzugswalzengruppe 286x1. Sobald das Vorprofil 10x1 diejenige Stellung erreicht hat, in der sich nach Fig. 14 das Vorprofil 10x2 befindet, wird diese Stellung durch eine Fotozelle 288x sensiert (man beachte, daß die Position des Vorprofils 10x2 hier nicht dem realistischen Verfahrensablauf entspricht, sondern nur eingezeichnet ist, um den Sensiervorgang zu erläutern). Wenn die Fotozelle 288x feststellt, daß das Vorprofil 10x1 mit seinem Vorlaufende in den Bereich des von der Fotozelle 288x ausgesendeten Lichtstrahls eingetreten ist, so beginnt der Abzug des Vorprofils 10x1 durch die Abzugswalzengruppe 286x1. Die Abzugsgeschwindigkeit der Abzugswalzengruppe 286x1 wird dabei so eingestellt, daß das Vorprofil 10x1 schneller abgezogen wird als das Vorlaufende der neu in den Vorprofilbildungskanal 38x1 einfliessenden Schmelze nach rechts wandert. Auf diese Weise wird ein Abstand zwischen dem aus dem Vorprofilbildungskanal 38x1 abgezogenen Vorprofil 10x1 und dem Vorlaufende des in den Vorprofilbildungskanal 38x1 neueintretenden Schmelzflusses gewonnen. Aufgrund dieser Abstandsbildung überschreitet das Nachlaufende des Vorprofils 10x1 den Austrittsschieber 282x1 bevor die neueintretende Schmelze in dem Vorprofilbildungskanal 38x1 den Ort des Austrittsschiebers 282x1 erreicht hat. Der Austrittsschieber 282x1 wird dann geschlossen. Nach Schließen des Austrittsschiebers 282x1 wird das Vorprofil 10x1 durch die Abzugswalzengruppe 286x1 weiter in diejenige Position gebracht, in der es in Fig. 14 gezeigt ist. Ein Fördergerät 290x ist auf Führungsschienen 292x in Pfeilrichtung 294x verschiebbar. In Fig. 14 befindet sich dieses Fördergerät 290x in Aufnahmestellung gegenüber dem soeben ausgeschobenen Vorprofil 10x1, so daß das Fördergerät 290x mit Klemmbacken 296x das Vorprofil 10x1 erfassen und auf einem Förderband 298x ablegen kann. Mittels des Förderbands 298x werden die Vorprofile 10x der Weiterverarbeitung zugeführt.

Andererseits wird nach erfolgter Schließung des Absperrschiebers 282x1 der Vorprofilbildungskanal 38x1 vollständig aufgefüllt. Die Auffüllung erfolgt solange, bis am Ausgang 268x der Stau- und Homogenisiereinrichtung 236x mittels eines Drucksensors 300x ein bestimmter Schaltdruck erreicht wird. Ist dieser Schaltdruck erreicht, wird das Anschlußventil 276x1 geschlossen. Nunmehr wird die in dem Vorprofilbildungskanal 38x1 eingetretene Schmelze während einer vorbestimmten Zeit durch das Kühlbad 280x abgekühlt, solange, bis auch diese neue Schmelzfüllung als ausgehärtetes Vorprofil ausgestossen werden kann.

Das Isolierelement 278x sorgt dafür, daß eine thermische Trennung zwischen der hohen Temperatur der im Kanalbeschikkungsanschluß 272x1 anstehenden Schmelze und der Intensivkühlzone a innerhalb des Kühlbads 280x aufrecht erhalten wird.

Nach Schließung des Anschlußventils 276x1 fördert der Schnekkenextruder 24x weiter. Es wird deshalb nunmehr das Anschlußventill 276x2 gleichzeitig mit dem Austrittsschieber 282x2 geöffnet und es wiederholt sich der vorher für den Vorprofilbildungskanal 38x1 beschriebene Vorgang im Vorprofilbildungskanal 38x2. Es werden nacheinander sämtliche Vorprofilbildungskanäle 38x1-38x5 unter Ausstoßung des in ihnen jeweils gebildeten Vorprofils mit Schmelze neu befüllt. Der Übergang von der Schmelzbefüllung in einen der Vorprofilbildungskanäle 38x1 zur Schmelzbefüllung des jeweils nächsten Vorprofilbildungskanals kann sehr rasch erfolgen, so daß die stetige Förderung durch den Schneckenextruder 24x nicht unterbrochen werden muß. Falls eine Verzögerung nicht zu verhindern ist, so kann am Ende des Schneckenextruders 24x oder am Ende der Stau- und Homogenisiereinrichtung 236x oder im Bereich der Verteilerleitung 270x eine Puffereinrichtung vorgesehen sein, welche während der Schließung sämtlicher Anschlußventile Schmelze aufnimmt und diese nach erfolgter Öffnung des jeweils nächst zu öffnenden Anschlußventils wieder abgibt. Diese Puffereinrichtung kann von einem Rezipienten gebildet sein, der einen gegen Federdruck verschiebbaren Kolben enthält. Nach Neubefüllung der Vorprofilbildungskanäle 38x1-38x5 wird das Reinigungsventil 274x2 geöffnet, so daß der untere Abschnitt der Verteilerleitung 270x gereinigt wird. Nach erfolgter Reinigung beginnt die Füllung des Vorprofilbildungskanals 38x10 unter gleichzeitigem Ausschub des in ihm vorher erhärteten Vorprofils. Anschließend werden dann die Vorprofilbildungskanäle 38x9-38x6 neu beschickt. Auf diese Weise ist sichergestellt, daß die Vorprofilbildungskanäle nicht mit zu früh erstarrter Schmelze beschickt werden.

Die Fotozelle 288x ist über eine Signalleitung 302x mit den Abzugswalzengruppen verbunden, so daß die jeweils geforderte Abzugswalzengruppe wirksam wird, sobald ein Vorprofil die Stellung erreicht hat, in welcher das Vorprofil 10x2 gemäß Fig. 14 gezeigt ist. Weiterhin ist die Fotozelle 288x über einen Verzögerungsschalter 304x mit den Absperrschiebern 282x1-282x10 verbunden, so daß der jeweils geforderte Absperrschieber in Schließstellung gebracht wird, wenn eine vorbestimmte Zeit seit dem Abzugsbeginn durch die zugehörige Abzugswalzengruppe vergangen ist.

In Fig. 10 erkennt man die Ablageflächen 284x und das an diesen anschließende Förderband 298x. Das Fördergerät 290x zum Umsetzen der Vorprofile 10x ist in Fig. 10 nur schematisch dargestellt. Die Vorprofile 10x bewegen sich auf dem Förderband 298x quer zu ihrer Achsrichtung. Durch entsprechend langsamen Antrieb des Förderbands 298x kommt die Verweilzeit von ca. 5-10 Stunden und mehr zustande, die benötigt wird, um die Vorprofile 10x dem Schwundprozeß zu unterwerfen, an den anschließend dann erst die spanabhebende Bearbeitung stattfindet.

In Fig. 10 erkennt man bei 60x eine spanabhebende Bearbeitungsstation, die so ausgebildet sein kann, wie unter Bezugnahme auf Fig. 5 beschrieben. An die spanabhebende Bearbeitungsstation 60x schließt sich gewünschtenfalls unter Einschaltung eines Zwischenlagers eine Station 306x zum Aufbringen der Oberflächenvergütungsschicht an. Hieran anschließend kann ggf. nach einem weiteren Zwischenlager eine Rahmenfertigungsstation 307x vorgesehen sein.

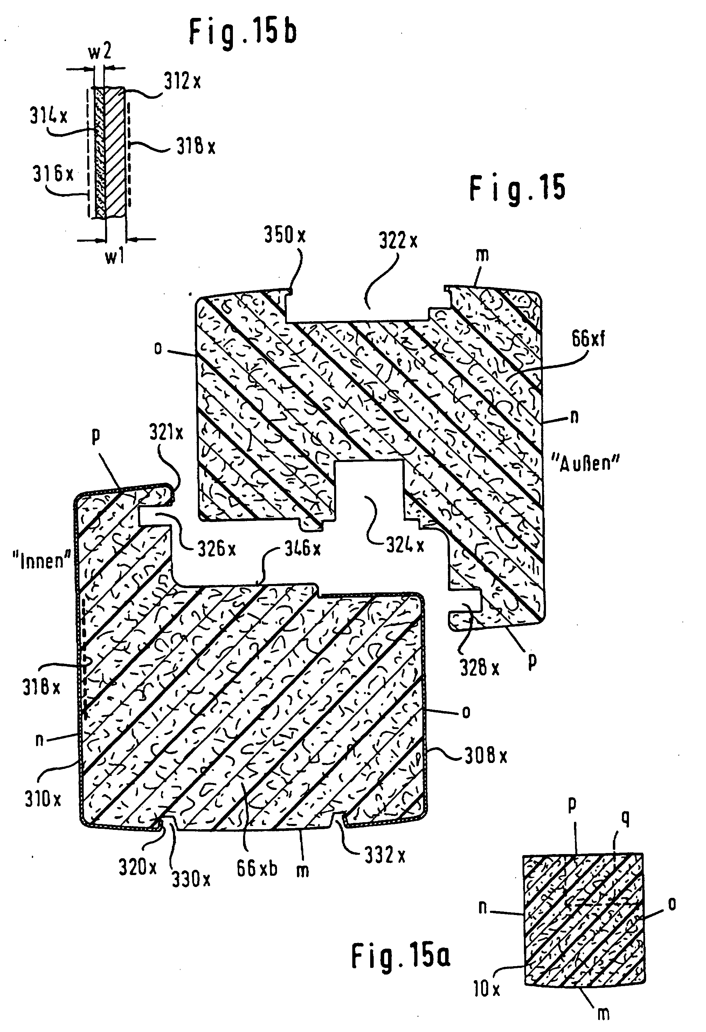

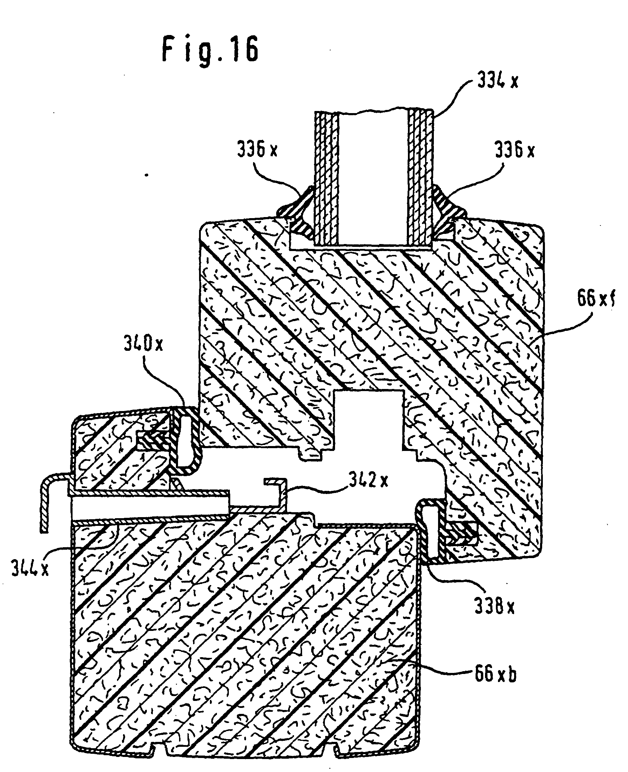

Zur näheren Erläuterung der Vergütungsschicht wird nun auf die Fig. 15 und 16 verwiesen. In Fig. 15 und 16 erkennt man ein Blendrahmenzwischenprofil 66xb und ein Flügelrahmenzwischenprofil 66xf. Die beiden Zwischenprofile 66xb und 66xf sind aus einem einzigen Vorprofiltyp 10x hergestellt, welches in Fig. 15a verkleinert dargestellt ist. Das dort dargestellte Vorprofil 10x kann auch mit der gestrichelt eingegrenzten Aussparung q in den Vorprofilbildungskanälen hergestellt werden, so daß sich der Aufwand an spanabhebender Bearbeitung verringert. Dennoch können die Zwischenprofile 66xb und 66xf aus ein und demselben Vorprofiltyp hergestellt werden, wie der Vergleich der Fig. 15 und 15a ohne weiteres erkennen läßt. Um deutlich zu machen, welche Seitenflächen des Vorprofils 10x welchen Seitenflächen der Zwischenprofile 66xb und 66xf entsprechen, sind in den Fig. 15 und 15a die einzelnen Seitenflächen mit übereinstimmenden Buchstaben n,m,o und p bezeichnet.

Wenn man in Fig. 15 das Blendrahmenzwischenprofil 66xb als den unteren Blendrahmenschenkel eines Blendrahmens und das Flügelrahmenzwischenprofil 66xf als den unteren Flügelrahmenschenkel eines Flügelrahmens versteht, so ergibt sich bei Einbau des Fensters eine Zuordnung, die durch die Legenden "außen" und "innen" in Fig. 15 gekennzeichnet ist. Das Blendrahmenprofil 66xb ist an seinen Seitenflächen o und n mit je einer Profilschale 308x bzw. 310x beschichtet. Das Material der Profilschalen ist in Fig. 15b ausschnittweise dargestellt, wobei 312x eine Aluminiumschicht, 314x eine Farbschicht und 316x eine Kunststoff-Folie darstellt. Die Wandstärke der Aluminiumschicht ist mit w1 bezeichnet und die Wandstärke der Anstrichschicht mit w2. Die Wandstärke w1 beträgt beispielsweise 0,5 mm und die Wandstärke der Farbschicht beträgt beispielsweise 0,2 mm. Die Schutzfolie 316x kann eine übliche Verpackungsfolie oder Schutzfolie auf Polyethylen- oder Polypropylenbasis mit einer Wandstärke von ca. 0,1 mm sein.

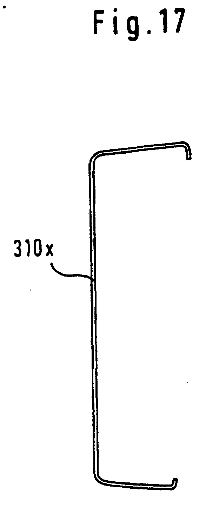

Die Profilschale 310x ist in Fig. 17 isoliert dargestellt. In Fig. 15 ist durch die gestrichelte Linie 318x angedeutet, daß die Aluminiumschale 310x auf dem Zwischenprofil 66xb festgeklebt sein kann. Außerdem erkennt man, daß die Profilschale 310x mit dem Zwischenprofil 66xb formschlüssig verbunden ist durch Randflansche 320x und 321x.

Die Zwischenprofile 66xb und 66xf können allseitig spanabhebend bearbeitet sein oder auch nur in bestimmten Bereichen, z.B. im Bereich der Scheibenaufnahmenut 322x der Treibstangenaufnahmenut 324x und der Dichtungsaufnahmenuten 326x und 328x sowie der Nuten 330x und 332x für die formschlüssige Befestigung der Profilschalen 310x und 308x.

Zur Herstellung der Profilschalen 310x und 308x wird von einem Blechband ausgegangen, das im Coil an die Profilfabrik angeliefert wird. Das Aluminiumblechband, das bereits mit der Anstrichschicht 314x und auch mit der Kleberschicht 318x beschichtet sein kann, ggf. auch mit der Schutzfolie 316x, wird durch übliche Walzenanordnungen auf die Zwischenprofile 66xb und 66xf aufgewalzt. Dabei ist es denkbar, einen Teil der Profilgebung bereits vor der Herstellung des Kontakts mit den jeweiligen Zwischenprofilen 66xb und 66xf vorzunehmen.

In Fig. 16 ist zur Herstellung eines besseren Überblicks angedeutet, wie in den Flügelrahmenschenkel 66xf eine Glasscheibe 334x sowie Glasabdichtungsleisten 336x und eine Falzraumabdichtungsleiste 338x eingebaut sind.

Weiter erkennt man an dem Blendrahmenschenkel 66xb eine Falzraumabdichtungsleiste 340x, eine Regenfangrinne 342x und eine Wasserabführung 344x.

Man erkennt weiter aus Fig. 15, daß die Profilschalen 308x und 310x einander nicht berühren, so daß sie keine Kältebrücke bilden können. Die von den Profilschalen nicht bedeckten Flächen, z.B. 346x, sind durch Farbpigmentzusatz, insbesondere Rußzugabe zu dem Vorprofilmaterial, eingefärbt, so daß sie ein ebenmäßiges optisches Erscheinungsbild bieten, gleichgültig ob sie spanabhebend bearbeitet sind oder nicht.

Aus Fig. 15 kann man weiter erkennen, daß das Zwischenprofil des Flügelrahmenschenkels 66xf in den Bereich der Scheibenaufnahmenut 322x mit einem Überstand 350x frei auslädt, so daß, wie aus Fig. 16 ersichtlich, für die Dichtleiste 336x ein formschlüssiger Halt geschaffen wird.

## Patentansprüche

1. Verfahren zur Herstellung von, insbesondere zur Weiterverarbeitung in der Fenster- und Türproduktion geeignetem, Profilmaterial (10,10x) unter Verwendung von thermoplastischem Werkstoff durch Thermoplastifizieren des Werkstoffs und Strangverformung des thermoplastifizierten Werkstoffs umfassend die folgenden Maßnahmen:
a) es wird eine erste Mischkomponente aus thermoplastischen Kunststoffabfällen gebildet;
b) es wird eine zweite Mischkomponente mit einem Gehalt von Zuschlagstoffen bereitgestellt;
c) die erste und die zweite Mischkomponente werden intensiv miteinander vermischt, kompaktiert und durch Thermoplastifizieren der ersten Mischkomponente zu einem strangbildungsfähigen Gemisch vermischt, und **gekennzeichnet durch** die folgenden weiteren Maßnahmen:
d) das strangbildungsfähige Gemisch wird unter Druck in einen Vorprofilbildungskanal (38,38x) bis zu dessen Auffüllung eingeleitet, dort zu einem starkwandigen Vorprofil (10,10x) ausgeformt, **durch** Abkühlung wenigstens teilweise ausgehärtet und danach aus dem Vorprofilbildungskanal (38,38x) als ein der Länge des Vorprofilbildungskanals entsprechender Längsabschnitt entnommen;
e) das Vorprofil (10) wird während einer Verweilzeit abschnittweise einem Schwundprozeß überlassen, welche Verweilzeit ausreicht, um einen wesentlichen Teil des insgesamt zu erwartenden Schwunds eintreten zu lassen;
f) nach Ablauf dieser Verweilzeit wird das Vorprofil (10,10x) abschnittweise **durch** spanabhebende Materialabtragung auf mindestens Teilen seines Umfangs zu einem Zwischenprofil (66;66xf,66xb) ausgeformt;
g) das Zwischenprofil (66;66xf,66xb) wird wenigstens auf einem Teil seines Profilumfangs mit einer Oberflächenvergütungsschicht (80,308x,310x) beschichtet.

2. Verfahren nach Anspruch 1,
**dadurch gekennzeichnet,**
**daß** als thermoplastische Kunststoffabfälle industrielle oder/und kommunale oder/und Haushaltskunststoffabfälle verwendet werden.

3. Verfahren nach Anspruch 1 oder 2,
**dadurch gekennzeichnet,**
**daß** als Kunststoffabfälle überwiegend Kunststoffabfälle auf Polyolefin-Basis (PE-Basis oder/und PP-Basis) oder/und Kunststoffabfälle auf ABS-Basis, verwendet werden.

4. Verfahren nach einem der Ansprüche 1-3,
**dadurch gekennzeichnet,**
**daß** überwiegend Folien oder dünnschichtförmige Folienabfälle, wie Abfall von Verpackungsfolien, Abdeckfolien, Bedachungsfolien oder Bechermaterial, verwendet werden.

5. Verfahren nach einem der Ansprüche 1-4,
**dadurch gekennzeichnet,**
**daß** die Kunststoffabfälle in Form von Ballen bereitgestellt werden.

6. Verfahren nach einem der Ansprüche 1-5,
**dadurch gekennzeichnet,**
**daß** als Kunststoffabfälle aussortierte Fraktionen von Mischabfällen, insbesondere kommunalen Mischabfällen
oder Haushaltsmischabfällen, verwendet werden.

7. Verfahren nach einem der Ansprüche 1-6,
**dadurch gekennzeichnet,**
**daß** die Kunststoffabfälle einer Zerkleinerung unterworfen werden.

8. Verfahren nach Anspruch 7,
**dadurch gekennzeichnet,**
**daß** die Kunststoffabfälle einer Zerkleinerung auf eine Größe von weniger als 80 mm, vorzugsweise weniger als 20 mm, maximaler Achslänge unterworfen werden.

9. Verfahren nach einem der Ansprüche 1-8,
**dadurch gekennzeichnet,**
**daß** die Kunststoffabfälle, soweit sie stark verunreinigt sind, mindestens einer Reinigungsbehandlung unterworfen werden.

10. Verfahren nach Anspruch 9,
**dadurch gekennzeichnet,**
**daß** die mindestens eine Reinigungsbehandlung ohne Nasswaschung erfolgt.

11. Verfahren nach einem der Ansprüche 9 oder 10,
**dadurch gekennzeichnet,**
**daß** die mindestens eine Reinigungsbehandlung auf eine Entfernung von Metallteilen wie Eisenteilen und etwaigen anderen Hartstoffteilen abgestellt wird.

12. Verfahren nach einem der Ansprüche 1-11,
**dadurch gekennzeichnet,**
**daß** die Kunststoffabfälle auf eine Restfeuchte von weniger als 3 Gew.%, vorzugsweise weniger als 1 Gew.%, Wassergehalt getrocknet werden.

13. Verfahren nach Anspruch 12,
**dadurch gekennzeichnet,**
**daß** die Trocknung nach erfolgter Zerkleinerung durchgeführt wird.

14. Verfahren nach Anspruch 13,
**dadurch gekennzeichnet,**
**daß** im Zuge der Zerkleinerung oder unmittelbar nach erfolgter Zerkleinerung eine erste Reinigungsbehandlung durchgeführt wird und daß im Zuge der Trocknung oder nach erfolgter Trocknung eine weitere Reinigungsbehandlung durchgeführt wird.

15. Verfahren nach einem der Ansprüche 1-14,
**dadurch gekennzeichnet,**
**daß** die zweite Mischkomponente wenigstens zum Teil aus Fasergut besteht.

16. Verfahren nach Anspruch 15,
**dadurch gekennzeichnet,**
**daß** die zweite Mischkomponente wenigstens zum Teil aus landwirtschaftlichem Erntegut in gemahlener oder zerfaster Form besteht, insbesondere aus Getreidestroh oder Chinagras (miskanthus).

17. Verfahren nach einem der Ansprüche 1-16,
**dadurch gekennzeichnet,**
**daß** die zweite Mischkomponente auf eine Teilchengröße von höchstens 5 mm, vorzugsweise höchstens 3 mm, maximale Achslänge zerkleinert wird, vorzugsweise durch Mahlen oder Zerfasern.

18. Verfahren nach einem der Ansprüche 1-17,
**dadurch gekennzeichnet,**
**daß** die zweite Mischkomponente auf einen Wassergehalt von höchstens 3 Gew.%, vorzugsweise von höchstens 1 Gew.%, getrocknet wird.

19. Verfahren nach einem der Ansprüche 1-18,
**dadurch gekennzeichnet,**
**daß** die erste oder/und die zweite Mischkomponente in einem Vorratssilo (12,18;12x,18x) in unmittelbarer Nähe des Orts der Zusammenführung gelagert wird.

20. Verfahren nach einem der Ansprüche 1-19,
**dadurch gekennzeichnet,**
**daß** die Kunststoffabfälle, so wie sie in Industrie, Haushalt oder Kommune anfallen, ggf. zerkleinert, ohne Zwischenumformung durch Zwischenthermoplastifizierung, Zwischenausformung, Zwischenabkühlung und Zwischenverkleinerung, mit der zweiten Mischkomponente vermischt werden.

21. Verfahren nach einem der Ansprüche 1-20,
**dadurch gekennzeichnet,**
**daß** die Kunststoffabfälle oder/und die zweite Mischkomponente unter Kompaktierungsdruck der Vermischung zugeführt werden.

22. Verfahren nach Anspruch 21,
**dadurch gekennzeichnet,**
**daß** die erste oder/und die zweite Mischkomponente in einem Vorratssilo (12,18) in unmittelbarer Nähe des Orts der Zusammenführung gelagert wird, so daß der statische Druck der Vorratshöhe in dem jeweiligen Vorratssilo (12,18) ggf. unterstützt durch mechanische Kompaktierungsmittel (16,20) der Kompaktierung der jeweiligen Mischkomponente am Ort der Zusammenführung dient.

23. Verfahren nach einem der Ansprüche 1-22,
**dadurch gekennzeichnet,**
**daß** das Gewichtsverhältnis zwischen der ersten Mischkomponente und der zweiten Mischkomponente in einem Verhältnis von 6 Gewichtsteilen Kunststoffabfall : 1 Gewichtsteil Zuschlagstoffe bis 4 Gewichtsteile Kunststoffabfall : 1 Gewichtsteil Zuschlagstoffe, vorzugsweise ca. 5 Gewichtsteile Kunststoffabfall : 1 Gewichtsteil Zuschlagstoffe gehalten wird.

24. Verfahren nach einem der Ansprüche 1-23,
**dadurch gekennzeichnet,**
**daß** die beiden Mischkomponenten gewünschtenfalls über eine vorgeschaltete Vormischstufe (22) einem Schneckenextruder (24) zugeführt werden, welcher der weiteren Mischung und Kompaktierung der beiden Mischkomponenten und der Thermoplastifizierung der ersten Mischkomponente dient.

25. Verfahren nach einem der Ansprüche 1-19, 21-24,
**dadurch gekennzeichnet,**
**daß** die Mischkomponenten unter wenigstens teilweiser Aufschmelzung der ersten Mischkomponente gemischt, danach pelletiert und in Pelletform weiterverarbeitet werden.

26. Verfahren nach Anspruch 25,
**dadurch gekennzeichnet,**
**daß** zur Mischung und Pelletierung eine Ringmatrize (204x) mit Kollerwalzen (208x) verwendet wird.

27. Verfahren nach Anspruch 25 oder 26,
**dadurch gekennzeichnet,**
**daß** die pelletierten Mischkomponenten mit einer Temperatur von 105°C bis 130°C, vorzugsweise 112°C, gewonnen und in einer nachfolgenden Kühleinrichtung auf unter 80°C heruntergekühlt werden.

28. Verfahren nach einem der Ansprüche 25-27,
**dadurch gekennzeichnet,**
**daß** die erste oder/und zweite Mischkomponente in einem Vorratssilo mit aktiven Rühr- bzw. Auflockerungseinrichtungen in unmittelbarer Nähe des Orts der Zusammenführung gelagert wird, so daß der statische Druck der Vorratshöhe den Produktaustrag nicht negativ beeinflußt.

29. Verfahren nach einem der Ansprüche 1-28,
**dadurch gekennzeichnet,**
**daß** das strangbildungsfähige Gemisch in einem Schneckenextruder (24;24x) erzeugt und durch diesen in den Vorprofilbildungskanal (38;38x) unter Druck eingeführt wird.

30. Verfahren nach Anspruch 29,
**dadurch gekennzeichnet,**
**daß** ein EIN-Schneckenextruder (24;24x) verwendet wird.

31. Verfahren nach Anspruch 30,
**dadurch gekennzeichnet,**
**daß** ein EIN-Schneckenextruder (24;24x) mit einer DREI-Stufenschnecke verwendet wird, welche eine Einzugszone (226x), eine Kompressionszone (228x) und eine Austragszone (230x) aufweist.

32. Verfahren nach einem der Ansprüche 29-31,
**dadurch gekennzeichnet,**
**daß** das strangbildungsfähige Gemisch von dem Schneckenextruder (24;24x) über eine Staustrecke (34;236x) an den Vorprofilbildungskanal abgegeben wird.

33. Verfahren nach Anspruch 32,
**dadurch gekennzeichnet,**
**daß** die Staustrecke (236x) als Homogenisierstrecke ausgebildet ist.

34. Verfahren nach einem der Ansprüche 1-33,
**dadurch gekennzeichnet,**
**daß** der Vorprofilbildungskanal (38;38x) an seinem befüllungsfernen Ende bis zur vollständigen Auffüllung geschlossen gehalten wird.

35. Verfahren nach Anspruch 34,
**dadurch gekennzeichnet,**
**daß** die Entnahme des wenigstens teilweise ausgehärteten Vorprofils (10;10x) durch Ausschieben mittels einer vom befüllungsseitigen Ende des Vorprofilbildungskanals (38;38x) her einwirkenden Ausschubkraft oder/und durch Ausziehen des Vorprofils (10;10x) mittels einer stromabwärts des befüllungsfernen Endes angelegten Auszugskraft erfolgt.

36. Verfahren nach Anspruch 35,
**dadurch gekennzeichnet,**
**daß** die Entnahme des wenigstens teilweise ausgehärteten Vorprofils (10x) teilweise durch erneutes Auffüllen des Vorprofilbildungskanals (38x) von seinem befüllungsseitigen Ende her mit strangbildungsfähigem Gemisch erfolgt und teilweise durch Abziehen des bereits teilweise ausgestoßenen Vorprofils (10x).

37. Verfahren nach Anspruch 36,
**dadurch gekennzeichnet,**
**daß** das Ausziehen des wenigstens teilweise ausgehärteten Vorprofils (10x) mittels Ausziehwalzen (268x) erfolgt.

38. Verfahren nach Anspruch 36 oder 37,
**dadurch gekennzeichnet,**
**daß** nach Vorbeigang des nachlaufenden Endes eines mindestens teilweise ausgehärteten Vorprofils (10x) an einer ausgangsnahen Grenzstelle (288x) des Vorprofilbildungskanals (38x) der Abzug des Vorprofils (10x) mit einer dem Vorrücken der Neuauffüllung des Vorprofilbildungskanals (38x) übersteigenden Geschwindigkeit eingeleitet wird, dadurch ein Abstand zwischen dem Nachlaufende des austretenden, wenigstens teilweise ausgehärteten Vorprofils (10x) und der Vorlauffront der Neuauffüllung erzeugt wird, im Bereich dieses Abstands das befüllungsferne Ende des Vorprofilbildungskanals (38x) abgeschlossen wird und hierauf der Vorprofilbildungskanal (38x) bis zum Erreichen eines vorbestimmten Fülldrucks aufgefüllt wird, worauf der Vorprofilbildungskanal (38x) an seinem befüllungsseitigen Ende von dem Zufluß weiteren strangbildungsfähigen Gemisches abgetrennt wird und die im Vorprofilbildungskanal (38x) enthaltene neue Füllung von strangbildungsfähigem Gemisch der wenigstens teilweisen Aushärtung ausgesetzt wird.

39. Verfahren nach einem der Ansprüche 29-38,
**dadurch gekennzeichnet,**
**daß** das strangbildungsfähige Gemisch von dem Schneckenextruder (24x) kommend durch eine thermische Isolierstrecke (278x) hindurch in den Vorprofilbildungskanal (38x) eingeleitet wird.

40. Verfahren nach einem der Ansprüche 36-39,
**dadurch gekennzeichnet,**
**daß** der Vorprofilbildungskanal (38x) im Bereich seines befüllungsseitigen Endes zumindest bei Beginn der Einführung einer neuen Charge von strangbildungsfähigem Gemisch derart gekühlt wird, daß eine rasche Durchhärtung des Vorlaufendes der neuen Charge eintritt.

41. Verfahren nach Anspruch 40,
**dadurch gekennzeichnet,**
**daß** der Vorprofilbildungskanal (38x) im Bereich seines befüllungsseitigen Endes stärker gekühlt wird als im stromabwärts anschließenden Teil seiner Länge.

42. Verfahren nach einem der Ansprüche 38-41,
**dadurch gekennzeichnet,**
**daß** die Abzugsbewegung dann eingeleitet wird, wenn das Vorlaufende des jeweils teilweise ausgeschobenen Vorprofils (10x) eine vorbestimmte Position (288x) überläuft, wobei dieser Zeitpunkt vorzugsweise mittels einer Fotozelle (288x) ermittelt wird.

43. Verfahren nach Anspruch 42,
**dadurch gekennzeichnet,**
**daß** das Verschließen des befüllungsfernen Endes des Vorprofilbildungskanals (38x) mit vorgegebener Zeitverzögerung (304x) nach Beginn der Abzugsbewegung des jeweiligen Vorprofils (10x) erfolgt.

44. Verfahren nach einem der Ansprüche 38-43,
**dadurch gekennzeichnet,**
**daß** das Abtrennen des Vorprofilbildungskanals (38x) vom Zufluß (272x) des strangbildungsfähigen Gemisches nach Maßgabe des Druckaufbaus im Vorprofilbildungskanal (38x) erfolgt, wobei der Druckaufbau vorzugsweise nahe dem befüllungsseitigen Ende des Vorprofilbildungskanals (38x) gemessen wird.

45. Verfahren nach einem der Ansprüche 1-44,
**dadurch gekennzeichnet,**
**daß** nacheinander in periodischer Wiederholung eine Mehrzahl von Vorprofilbildungskanälen (38x1-38x10) in Anschluß an eine Zuflußstelle (268x) von strangbildungsfähigem Gemisch gebracht werden.

46. Verfahren nach Anspruch 45,
**dadurch gekennzeichnet,**
**daß** die an einem Umlaufträger (36) angeordneten mehreren Vorprofilbildungskanäle (38) nacheinander in Flucht zu der Zuflußstelle (34) gebracht werden.

47. Verfahren nach Anspruch 45,
**dadurch gekennzeichnet,**
**daß** das strangbildungsfähige Gemisch von der Zuflußstelle (268x) aus in ein Verteilerleitungssystem (270x) eingeleitet wird, welches an eine Mehrzahl von Vorprofilbildungskanälen (38x1-38x10) über eine entsprechende Mehrzahl von Anschlußventilen (276x1-276x10) angeschlossen ist und daß nacheinander, vorzugsweise nach einem periodisch wiederholbarem Programm, jeweils mindestens und vorzugsweise ein Anschlußventil (276x1-276x10) geöffnet wird.

48. Verfahren nach Anspruch 47,
**dadurch gekennzeichnet,**
**daß** das strangbildungsfähige Gemisch von der Zufluß-stelle (268x) in eine Verteilerleitung (270x) eingeführt wird, zwischen deren zuflußseitigem Ende und deren zuflußfernem Ende in Längsrichtung der Verteilerleitung (270x) verteilt eine Mehrzahl von Anschlußventilen (276x1-276x5) vorgesehen sind, daß zu Beginn eines Befüllungszyklus der an die Anschlußventile (276x1-276x5) angeschlossenen Vorprofilbildungskanäle (38x1-38x5) zunächst die Verteilerleitung (270x) an ihrem zuflußfernen Ende durch Öffnen eines Reinigungsventils (274x1) gereinigt wird und hierauf nacheinander von dem zuflußfernen Ende zum zuflußnahen Ende hin fortschreitend die Anschlußventile (276x1-276x5) geöffnet werden, wobei dieser Vorgang bei Vorhandensein eines oder mehrerer weiterer an die Zuflußstelle (268x) angeschlossener entsprechender Verteilerleitungen (270x unterer Abschnitt) nacheinander für die verschiedenen Verteilerleitungen (270x oberer Abschnitt;270x unterer Abschnitt) durchgeführt wird.

49. Verfahren nach einem der Ansprüche 1-48,
**dadurch gekennzeichnet,**
**daß** die Vorprofile (10,10x) in dem jeweiligen Vorprofilbildungskanal (38,38x) in einer Länge von ca, 0,5 - 6 m, vorzugsweise ca. 4,5 m, hergestellt werden.

50. Verfahren nach einem der Ansprüche 1-49,
**dadurch gekennzeichnet, daß** die Vorprofile (10;10x) mit Vollquerschnitt hergestellt werden.

51. Verfahren nach einem der Ansprüche 1-50,
**dadurch gekennzeichnet,**
**daß** die Auffüllung des Vorprofilbildungskanals (38,38x) bei solchen Strömungsverhältnissen des strangbildungsfähigen Gemisches erfolgt, daß im Falle der Anwesenheit länglicher faserartiger Partikel in der zweiten Mischkomponente diese Partikel sich überwiegend parallel zu der jeweiligen Profillängsrichtung einstellen.

52. Verfahren nach einem der Ansprüche 1-51,
**dadurch gekennzeichnet,**
**daß** die Vorprofile (10,10x) im Zuge des Austritts aus dem jeweiligen Vorprofilbildungskanal (38;38x) auf eine Vorprofilablagefläche (50;284x) aufgelegt werden und nach vollständigem Austritt aus dem jeweiligen Vorprofilbildungskanal (38;38x) zu einer spanabhebenden Bearbeitungsstation (60;60x) transportiert und dabei einem Schwundprozeß überlassen werden.

53. Verfahren nach Anspruch 52,
**dadurch gekennzeichnet,**
**daß** der Transport wenigstens auf einem Teil des Transportwegs in einer Richtung quer zur Längsachse des jeweiligen Vorprofils (10;10x) erfolgt.

54. Verfahren nach einem der Ansprüche 29-53,
**dadurch gekennzeichnet,**
**daß** der Schneckenextruder (24;24x) fortlaufend betrieben wird und daß im Bereich des Anschlusses des Schneckenextruders (24;24x) an den Vorprofilbildungskanal (38;38x) bzw. eine Mehrzahl von Vorprofilbildungskanälen (38x1-38x10) ein Puffervolumen (42) vorgesehen ist, welches strangbildungsfähiges Gemisch jeweils dann aufnimmt, wenn der Zufluß des Gemisches zu dem Vorprofilbildungskanal (38;38x) bzw. den Vorprofilbildungskanälen (38x1-38x10) reduziert oder unterbrochen ist.

55. Verfahren nach einem der Ansprüche 25-54,
**dadurch gekennzeichnet,**
**daß** die Pellets in angewärmtem Zustand von beispielsweise 60°C einem Schneckenextruder (24x) zugeführt werden.

56. Verfahren nach Anspruch 55,
**dadurch gekennzeichnet,**
**daß** die Pellets von ihrer bei der Pelletierung erreichten Temperatur auf eine Extruderbeschickungstemperatur herabgekühlt und mit dieser Extruderbeschickungstemperatur dem Extruder (24x) zugeführt werden.

57. Verfahren nach einem der Ansprüche 1-56,
**dadurch gekennzeichnet,**
**daß** dem strangbildungsfähigen Gemisch Kleinkomponenten wie Gleitmittel, Farbpigmente und Stabilisatoren zugesetzt werden.

58. Verfahren nach Anspruch 57,
**dadurch gekennzeichnet,**
**daß** die Kleinkomponenten der ersten oder der zweiten Mischkomponente oder - sofern Pellets gebildet werden - den Pellets zugesetzt werden.

59. Verfahren nach einem der Ansprüche 57 und 58,
**dadurch gekennzeichnet,**
**daß** ein schwarzes Farbpigment, insbesondere Ruß zugesetzt wird.

60. Verfahren nach einem der Ansprüche 1-59,
**dadurch gekennzeichnet,**
**daß** die spanabhebende Bearbeitung des Vorprofils (10;10x) in einer spanabhebenden Bearbeitungsstation (60,60x)) mit einer Mehrzahl von über den Umfang des Vorprofils (10,10x) verteilt angeordneten rotierenden Bearbeitungsköpfen (64a-d) erfolgt, welche gewünschtenfalls in Durchlaufrichtung des Vorprofils (10,10x) hintereinander angeordnet sind.

61. Verfahren nach einem der Ansprüche 1-60,
**dadurch gekennzeichnet,**
**daß** die dem Vorprofil (10,10x) bei der spanabhebenden Bearbeitung zugeführte Zerspanungsleistung derart beschränkt wird, daß im wesentlichen keine Thermoplastifizierung des Thermoplastgehalts in dem jeweils bearbeiteten Vorprofil (10,10x)) eintritt.

62. Verfahren nach einem der Ansprüche 1-61,
**dadurch gekennzeichnet,**
**daß** das durch die zerspanende Bearbeitung gewonnene Zwischenprofil (66) durch einen profilangepaßten Zentrierungskanal (68) einem Beschichtungskanal zugeführt wird, welcher ein der Beschichtungsdicke entsprechendes Übermaß gegenüber dem Vorprofil (10) besitzt und mit mindestens einer Zuführungsleitung (78) für Beschichtungsmasse und gewünschtenfalls Verteilermitteln (70,72, 76) versehen ist.

63. Verfahren nach Anspruch 62,
**dadurch gekennzeichnet,**
**daß** das mit Beschichtungsmasse (80) beschichtete Zwischenprofil (66) in einem Nachprofilierungskanal nach teilweiser Aushärtung, insbesondere während des Durchlaufs durch ein Kühlbad (bei 82), einem oberflächenegalisierenden Unterdruck ausgesetzt wird (bei 84).

64. Verfahren nach einem der Ansprüche 1-63,
**dadurch gekennzeichnet,**
**daß** Beschichtungsmasse (80) in einer Schichtstärke von ca. 0,1 - ca. 2,0 mm, vorzugsweise 0,7 mm - 0,8 mm, aufgetragen wird.

65. Verfahren nach einem der Ansprüche 1-64,
**dadurch gekennzeichnet,**
**daß** eine thermoplastische Beschichtungsmasse (80) etwa auf Polyolefinbasis, ABS-Basis oder PVC-Basis aufgetragen wird.

66. Verfahren nach einem der Ansprüche 1-65,
**dadurch gekennzeichnet,**
**daß** Beschichtungsmasse (80) mit einem Gehalt an Farbpigment, insbesondere weißem Farbpigment, eingesetzt wird, so daß die Oberfläche des Zwischenprofils (66) im wesentlichen unsichtbar wird.

67. Verfahren nach einem der Ansprüche 1-66,
**dadurch gekennzeichnet,**
**daß** das Zwischenprofil (66xf,66xb) wenigstens auf einem Teil seines Profilumfangs mit einem Vergütungsprofil (308x,310x) belegt wird.

68. Verfahren nach Anspruch 67,
**dadurch gekennzeichnet,**
**daß** als Vergütungsprofil (308x,310x) ein Metallprofil verwendet wird.

69. Verfahren nach Anspruch 68,
**dadurch gekennzeichnet,**
**daß** als Vergütungsprofil (308x,310x) ein Aluminiumprofil verwendet wird.

70. Verfahren nach einem der Ansprüche 67-69,
**dadurch gekennzeichnet,**
**daß** das Vergütungsprofil (308x,310x) aus einer Trägerschicht (312x) und einer Dekorschicht (314x) besteht, z.B. einer Aluminiumschicht (312x) und einer auf der Sichtseite der Aluminiumschicht (312x) aufgebrachten Farb- oder Lackschicht (314x).

71. Verfahren nach einem der Ansprüche 67-70,
**dadurch gekennzeichnet,**
**daß** das Vergütungsprofil (308x,310x) auf seiner Sichtseite mit einer Schutzfolie (316x) versehen wird.

72. Verfahren nach einem der Ansprüche 67-71,
**dadurch gekennzeichnet,**
**daß** das Vergütungsprofil (308x,310x) aus einem flachen Vormaterialband am Zwischenprofil (66xb, 66xf) geformt wird.

73. Verfahren nach einem der Ansprüche 67-72,
**dadurch gekennzeichnet,**
**daß** das Vergütungsprofil (308x,310x) unmittelbar vor der Aufbringung auf das Zwischenprofil (66xf,66xb) wenigstens teilweise vorgeformt und in vorgeformtem Zustand auf das Zwischenprofil (66xf,66xb) aufgebracht wird.

74. Verfahren nach einem der Ansprüche 67-73,
**dadurch gekennzeichnet,**
**daß** das Vergütungsprofil (308x,310x) auf dem Zwischenprofil (66xf,66xb) durch Kleben befestigt wird.

75. Verfahren nach Anspruch 74,
**dadurch gekennzeichnet,**
**daß** Klebstoff (318x) als vorgeformte Klebstoffschicht zum Einsatz gebracht wird.

76. Verfahren nach Anspruch 75,
**dadurch gekennzeichnet,**
**daß** der Klebstoff (318x) als Beschichtung des Vergütungsprofils (308x,310x) zum Einsatz gebracht wird.

77. Verfahren nach Anspruch 75,
**dadurch gekennzeichnet, daß** der Klebstoff als gesondertes Bandmaterial zum Einsatz gebracht wird und unmittelbar vor der Vereinigung des Vergütungsprofils (308x,310x) mit dem Zwischenprofil (66xf,66xb) entweder auf das Vormaterial des Vergütungsprofils (308x,310x) oder auf das Zwischenprofil (66xf,66xb) aufgebracht wird.

78. Verfahren nach einem der Ansprüche 67-77,
**dadurch gekennzeichnet,**
**daß** das Vergütungsprofil (308x,310x) am Zwischenprofil (66xf,66xb) wenigstens teilweise formschlüssig befestigt wird.

79. Verfahren nach Anspruch 78,
**dadurch gekennzeichnet,**
**daß** die Vergütungsschicht (308x,310x) an wenigstens einem Rand mit einem Formschlußflansch (322x) ausgeführt wird.

80. Verfahren nach einem der Ansprüche 67-79,
**dadurch gekennzeichnet,**
**daß** im Falle von Flügelrahmen- oder Blendrahmenprofilen (66xf,66xb) das Vergütungsprofil in Form von zwei Teilprofilschalen (310x;308x) aufgebracht wird, welche an den der Innenumfangsfläche und der Außenumfangsfläche des jeweiligen Rahmens (66xf,66xb) entsprechenden Profilseiten des Zwischenprofils (66xf,66xb) voneinander Abstand haben.

81. Verfahren nach einem der Ansprüche 67-80,
**dadurch gekennzeichnet,**
**daß** das Vergütungsprofil an mindestens einem seiner Profilränder zur Bildung von Haltekanten (350x), z.B. für Dichtungsoder Kittmaterial verwendet wird.

82. Verfahren nach einem der Ansprüche 1-81,
**dadurch gekennzeichnet, daß** im Falle der Weiterverarbeitung eines durch Aufbringen der Vergütungsschicht (308x,310x) gewonnenen Endprofils (90) zu einem Fenster oder einer Tür ein Profilmaterialabschnitt des Endprofils an einer jeweiligen Eckbildungsstelle auf Gehrung geschnitten und mit einem entsprechend auf Gehrung geschnittenen anstoßenden Profilmaterialabschnitt (96) durch mindestens eine die Gehrungsebene querende Schraube (94) verbunden wird, welche gewünschtenfalls die Vergütungsschicht durchsetzt.

83. Verfahren nach Anspruch 82,
**dadurch gekennzeichnet,**
**daß** man an den Gehrungsflächen (96) zusammenstoßender Profilmaterialabschnitte (92) eine härtende Dichtungsmasse vor dem Zusammenschrauben einbringt.

84. Verfahren nach einem der Ansprüche 1-83,
**dadurch gekennzeichnet,**
**daß** man das zu einem Endprofil vervollständigte Profilmaterial mit einer Fixiernut (98) für eine Glasscheibe (100) oder sonstige Füllungsplatte herstellt und diese im Zuge der Zusammenfügung der Profilmaterialabschnitte (92) zum jeweiligen Rahmen in den Fixiernuten (98) fixiert.

85. Verfahren nach einem der Ansprüche 1-84,
**dadurch gekennzeichnet,**
**daß** man Beschlagteile an dem jeweiligen Rahmen durch übliche Holzschrauben (94), gewünschtenfalls ohne Vorbohrung, anbringt.

86. Verfahren nach Anspruch 85,
**dadurch gekennzeichnet,**
**daß** man die Holzschrauben durch die Vergütungsschicht (308x,310x) hindurch in das jeweilige Zwischenprofil (66xf,66xb) einbringt.

87. Verfahren nach einem der Ansprüche 1-86,
**dadurch gekennzeichnet,**
**daß** man die von Vergütungsschicht unbedeckten Profilbereiche (346x) des Endprofils in dem nach der Vorprofilfertigung oder der Zwischenprofilfertigung erreichten Oberflächenzustand beläßt.

88. Verfahren nach Anspruch 87,
**dadurch gekennzeichnet,**
**daß** man bei der Vorprofilfertigung einen Zusatz an Farbpigmenten in solcher Menge zugibt, daß die bei der Vorprofilbildung entstehenden und ggf. bei der Zwischenprofilbildung spanabhebend bearbeiteten Oberflächen ein einheitliches Farbbild, insbesondere schwarzes Farbbild ergeben.

89. Einrichtung zur Herstellung eines Profilmaterials, insbesondere eines Vorprofils im Rahmen des Verfahrens nach einem der Ansprüche 1-88,
umfassend einen Schneckenextruder (24x) mit einer Püllstelle (231x) zum Einfüllen der Mischkomponenten eines thermoplastischen Gemisches und mit einer Ausfluß-stelle (268x) zur Abgabe eines strangbildungsfähigen thermoplastifizierten Gemisches,
**gekennzeichnet durch** eine stationäre Verteilerleitung (270x) mit einer Zuflußstelle (268x) in Verbindung mit der Ausflußstelle (268x) des Schneckenextruders, eine Mehrzahl von Kanalbeschickungsanschlüssen (272x1-272x10) an der stationären Verteilerleitung (270x), diese Kanalbeschickungsanschlüsse (272x1-272x10) in Verbindung mit jeweils einem Profilbildungskanal (38x1-38x10), Anschlußventile (276x1-276x10) zwischen den einzelnen Profilbildungskanälen (38x1-38x10) und der Verteilerleitung (270x), Profilaustrittsschieber (282x1-282x10) an den stromabwärtigen Enden der Profilbildungskanäle (38x1-38x10), eine Abzugseinrichtung (286x1-286x10) stromabwärts des jeweiligen stromabwärtigen Endes der Profilbildungskanäle (38x1-38x10) sowie Programmsteuerungsmittel mit einer Füllzustands-, Ausschubs-, Abzugs- und Zeitablaufsensorik, welche
- nach Auffüllung eines Profilbildungskanals (38x1) das jeweilige Anschlußventil (276x1) schließen;
- nach einer Kühlperiode zur Abkühlung der im Profilbildungskanal (38x1) enthaltenen Gemischfüllung den zugehörigen Profilaustrittsschieber (282x1) und das zugehörige Anschlußventil (276x1) öffnen;
- nach teilweisem Ausschieben des bereits gehärteten Profils (10x1) **durch** über das Anschlußventil (276x1) nachfließendes Gemisch das teilweise ausgeschobene Profil (10x1) der Einwirkung der Abzugseinrichtung (286x1) unterwerfen und von der Vorlauffront des nachgefüllten Gemischs trennen;
- nach erfolgter Trennung des Nachlaufendes des Profils (10x1) und der Vorlauffront des nachfließenden Gemischs den Austrittsschieber (282x1) innerhalb des so gebildeten Trennspalts schließen und
- den Profilbildungskanal (38x1) hierauf wieder vollständig auffüllen bis zum Erreichen eines für die Bildung eines weiteren Profils (10x1) erforderlichen Füllzustands.

90. Einrichtung nach Anspruch 89,
**dadurch gekennzeichnet,**
**daß** die Profilbildungskanäle (38x1-38x10) in einem Kühlflüssigkeitsbad (280x) angeordnet sind.

91. Einrichtung nach einem der Ansprüche 89 und 90, **gekennzeichnet durch** eine Ausgestaltung der Steuerung dahingehend, daß die Abzugseinrichtung (286x1) wirksam wird, wenn das Vorlaufende des jeweils der Ausschiebung unterliegenden Profils (10x1) eine vorbestimmte Stelle (288x) stromabwärts des Austrittsschiebers (282x1) erreicht und daß der Austrittsschieber (282x1) geschlossen wird, wenn das Nachlaufende des der Ausschiebung unterworfenen Profils (10x1) einen vorbestimmten Abstand von der Vorlauffront des nachgefüllten Gemischs erreicht hat.

92. Einrichtung nach einem der Ansprüche 89-91, **gekennzeichnet durch** eine Ausgestaltung der Steuerung dahingehend, daß das Anschlußventil (276x1) eines Profilbildungskanals geschlossen wird, wenn ein vorbestimmter Fülldruck in dem Profilbildungskanal sensiert wird.

93. Einrichtung nach einem der Ansprüche 89-92,
**dadurch gekennzeichnet,**
**daß** anschließend an den Austrittsschieber (282x1-282x10) der Profilbildungskanäle (38x1-38x10) eine Ablagefläche (284x) zur Ablage der jeweils ausgestoßenen Profile (10x) vorgesehen ist und daß an den Ablagetisch ggf. unter Zwischenschaltung eines Umsetzgeräts (290x) ein Förderer (298x) mit quer zur Profilachse verlaufender Förderrichtung anschließt.

94. Einrichtung nach einem der Ansprüche 89-93,
**dadurch gekennzeichnet,**
**daß** die Ausflußstelle des Schneckenextruders (24x) mit einer Stau- oder Homogenisiereinrichtung (236x) ausgeführt ist, an welche sich die Verteilerleitung (270x) anschließt.

95. Einrichtung nach einem der Ansprüche 89-94,
**dadurch gekennzeichnet,**
**daß** der Schneckenextruder (24x) zur Verarbeitung von pelletiertem Gemisch ausgebildet ist.

96. Einrichtung nach Anspruch 95,
**dadurch gekennzeichnet,**
**daß** der Schneckenextruder (24x) mit einem im wesentlichen radialen und im Querschnitt im wesentlichen rechteckigen Beschickungsschacht (231x) ausgeführt ist.

97. Einrichtung nach einem der Ansprüche 89-96,
**dadurch gekennzeichnet,**
**daß** der Zylinder (26x) des Schneckenextruders (24x) zumindest im Bereich einer Einzugszone (226x) mit Hemm-Mitteln (232x) zur Hemmung des Mitdrehens des Beschikkungsguts ausgeführt ist.

98. Einrichtung nach Anspruch 97,
**dadurch gekennzeichnet,**
**daß** die Hemm-Mittel (232x) von im wesentlichen axialgerichteten Nuten (232x) an der Innenumfangsfläche des Zylinders (226x) gebildet sind.

99. Einrichtung nach Anspruch 98,
**dadurch gekennzeichnet,**
**daß** die Nuten (232x) in Achsrichtung des Zylinders zum Ausflußende (268x) hin an Tiefe abnehmen.

100. Profilmaterial, hergestellt nach dem Verfahren nach einem der Ansorüche 1-88, insbesondere für die Herstellung von Profilrahmen der Fenster- und Türproduktion, bestehend aus einem Vollprofil (66xf, 66xb), welches neben thermoplastischen Bestandteilen Füllstoffe enthält und zumindest auf Teilen seines Profilumfangs mit mindestens einer Vergütungsschicht (310x, 308x) in Form eines Blechprofils versehen ist.

101. Profilmaterial nach Anspruch 100,
**dadurch gekennzeichnet,**
**daß** das Blechprofil (310x,308x) von einem Aluminiumprofil gebildet ist.

102. Profilmaterial nach einem der Ansprüche 100 oder 101,
**dadurch gekennzeichnet,**
**daß** das Blechprofil (310x,308x) an seiner Sichtseite mit einer Farb- oder Lackschicht (314x) versehen ist.

103. Profilmaterial nach einem der Ansprüche 100-102,
**dadurch gekennzeichnet,**
**daß** das Blechprofil (310x,308x) mit dem Vollprofil (66xf,66xb) verklebt ist.

104. Profilmaterial nach einem der Ansprüche 100-103,
**dadurch gekennzeichnet,**
**daß** das Blechprofil (310x,308x) mit dem Vollprofil (66xf,66xb) formschlüssig in Eingriff gehalten ist.

105. Profilmaterial nach einem der Ansprüche 100-104,
**dadurch gekennzeichnet,**
**daß** mindestens ein Rand (350x) des Blechprofils als Haltekante, z.B. für Dicht- oder Kittmaterial (336x), ausgebildet ist.

106. Profilmaterial nach einem der Ansprüche 100-105,
**dadurch gekennzeichnet,**
**daß** das Blechprofil (308x, 310x) von zwei Profilschalen (308x,310x) gebildet ist, deren eine - bezugnehmend auf die Gestaltung eines fertigen Fensters - einen rauminneren Bereich der Profiloberfläche und deren andere einen raumäußeren Bereich der Profiloberfläche bedeckt, wobei die beiden Profilschalen im Falle eines Flügelrahmenprofils (66xf) im Profilbereich des Scheibenbetts (322x) und im Profilbereich des Rahmenfalzes voneinander Abstand haben und im Falle eines Blendrahmenprofils (66xb) im Profilbereich des Blendrahmenfalzes und der maueröffnungsseitigen Umfangsfläche voneinander Abstand haben.

107. Profilmaterial nach einem der Ansprüche 100-106,
**dadurch gekennzeichnet,**
**daß** die Umfangsfläche (346x) des Vollprofils (66xb) in den von dem Blechprofil (308x,310x) nicht bedeckten Bereichen (346x) unbehandelt oder nur durch spanabhebende Behandlung bearbeitet ist.

108. Profilmaterial nach Anspruch 107,
**dadurch gekennzeichnet,**
**daß** der von dem Blechprofil nicht bedeckte Bereich (346x) durch entsprechenden Farbpigmentgehalt auf ein farblich einheitliches, insbesondere schwarzes, Farbbild gestellt ist.

109. Fensterrahmen, nämlich Flügelrahmen oder Blendrahmen, hergestellt aus einem Profilmaterial nach einem der Ansprüche 100-108,
**dadurch gekennzeichnet,**
**daß** aneinander anschließende Profilschenkel auf Gehrung geschnitten aneinander anschließen und miteinander im Gehrungsbereich verschraubt oder verklebt sind.

110. Rahmenkombination bestehend aus einem Flügelrahmen und einem Blendrahmen, diese jeweils hergestellt aus einem Profilmaterial nach einem der Ansprüche 100-108,
**dadurch gekennzeichnet,**
**daß** für die Herstellung des Flügelrahmens und des Blendrahmens einheitliche Vorprofile verwendet sind, die sich voneinander nur durch unterschiedliche spanabhebende Bearbeitung oder/und unterschiedliche Beschichtung mit Blechprofilen unterscheiden.

## Claims

1. Process for producing profile material (10, 10x), suitable in particular for further processing in window and door production, using thermoplastic material by thermoplasticising the material and extrusion of the thermoplasticised material, comprising the following measures:
a) a first blend component is formed from thermoplastic waste;
b) a second blend component with an additive content is prepared;
c) the first and second blend components are intensively mixed with one another, compacted and, by thermoplasticising the first blend component, are mixed to form an extrudable mixture, and **characterised by** the following further measures:
d) the extrudable mixture is introduced under pressure into a preprofile-forming duct (38, 38x) until it is full, is shaped there into a thick-walled preprofile (10, 10x), is at least partially cured by cooling and is then removed from the preprofile-forming duct (38, 38x) as a longitudinal section corresponding to the length of the preprofile-forming duct;
e) during a dwell time the preprofile (10) is passed in sections to a shrinkage process, the dwell time being sufficient to allow a substantial portion of the total expected shrinkage to occur;
f) after this dwell time has elapsed, the preprofile (10, 10x) is shaped in sections by material removing machining on at least portions of its periphery to form an intermediate profile (66; 66xf, 66xb);
g) the intermediate profile (66; 66xf, 66xb) is coated on at least part of its profiled periphery with a surface hardening layer (80; 308x, 310x).

2. Process according to claim 1, **characterised in that** industrial and/or municipal and/or household plastics waste can be used as thermoplastic waste.

3. Process according to claim 1 or 2, **characterised in that** plastics waste based on polyolefin (PE and/or PP) and/or plastics waste based on ABS are predominantly used as plastics waste.

4. Process according to one of claims 1 to 3, **characterised in that** films or thin-layer film waste, such as waste from packaging films, backing films, covering films or beaker material are predominantly used.

5. Process according to one of claims 1 to 4, **characterised in that** the plastics waste is prepared in the form of balls.

6. Process according to one of claims 1 to 5, **characterised in that** sorted-out fractions of mixed waste, in particular municipal mixed waste or household mixed waste are used as plastics waste.

7. Process according to one of claims 1 to 6, **characterised in that** the plastics waste is subjected to size reduction.

8. Process according to claim 7, **characterised in that** the plastics waste is reduced to a size of less than 80 mm, preferably less than 20 mm, maximum axial length.

9. Process according to one of claims 1 to 8, **characterised in that** the plastics waste, if heavily soiled, is subjected to at least one cleaning treatment.

10. Process according to claim 9, **characterised in that** the at least one cleaning treatment is carried out without wet washing.

11. Process according to one of claims 9 or 10, **characterised in that** the at least one cleaning treatment is geared towards removal of metal parts such as iron parts and any other hard material parts.

12. Process according to one of claims 1 to 11, **characterised in that** the plastics waste is dried to a residual moisture content of less than 3 wt.%, preferably less than 1 wt.%, water.

13. Process according to claim 12, **characterised in that** drying is carried out after size reduction.

14. Process according to claim 13, **characterised in that** a first cleaning treatment is carried out in the course of size reduction or immediately after size reduction and **in that** a further cleaning treatment is carried out in the course of drying or after drying.

15. Process according to one of claims 1 to 14, **characterised in that** the second blend component consists at least partially of fibre material.

16. Process according to claim 15, **characterised in that** the second blend component consists at least partially of harvested agricultural crops in ground or shredded form, in particular of straw or China grass fibre (miscanthus).

17. Process according to one of claims 1 to 16, **characterised in that** the second blend component is reduced to a particle size of at most 5 mm, preferably at most 3 mm, maximum axial length, preferably by grinding or shredding.

18. Process according to one of claims 1 to 17, **characterised in that** the second blend component is dried to a water content of at most 3 wt.%, preferably at most 1 wt.%.

19. Process according to one of claims 1 to 18, **characterised in that** the first and/or second blend component is stored in a silo (12, 18; 12x, 18x) close to where they are brought together.

20. Process according to one of claims 1 to 19, **characterised in that** the plastics waste, as produced in industry, in the home or municipality, optionally reduced in size, is mixed with the second blend component without intermediate thermoforming by intermediate thermoplasticisation, intermediate extrusion, intermediate cooling and intermediate size reduction.

21. Process according to one of claims 1 to 20, **characterised in that** the plastics waste and/or the second blend component is/are supplied to the mixing stage under compacting pressure.

22. Process according to claim 21, **characterised in that** the first and/or second blend component is/are stored in a silo (12, 18) in the immediate vicinity of the bringing-together site, so the static pressure of the supply level in the respective silo (12, 18), optionally assisted by mechanical compacting means (16, 20), serves to compact the respective blend component at the bringing-together site.

23. Process according to one of claims 1 to 22, **characterised in that** the weight ratio between the first blend component and the second blend component is kept at a ratio of 6 parts by weight plastics waste : 1 part by weight additives to 4 parts by weight plastics waste : 1 part by weight additives, preferably approximately 5 parts by weight plastics waste : 1 part by weight additive.

24. Process according to one of claims 1 to 23, **characterised in that** the two blend components are optionally supplied to an extruder (24) via a preceding premixing stage (22), which extruder (24) serves to further mix and compact the two blend components and to thermoplasticise the first blend component.

25. Process according to one of claims 1 to 19, 21 to 24, **characterised in that** the blend components are mixed with at least partial melting of the first blend component, then pelletised and further processed in pellet form.

26. Process according to claim 25, **characterised in that** an annular die (204x) with milling rollers (208x) is used for mixing and pelletising.

27. Process according to claim 25 or 26, **characterised in that** the pelletised blend components are obtained at a temperature of 105°C to 130°C, preferably 112°C, and are cooled in a subsequent cooling device to less than 80°C.

28. Process according to one of claims 25 to 27, **characterised in that** the first and/or second blend component is stored in a silo with active stirring and loosening devices in the immediate vicinity of the bringing-together site, so the static pressure of the supply level does not adversely affect the product delivery.

29. Process according to one of claims 1 to 28, **characterised in that** the extrudable mixture is produced in an extruder (24; 24x) and is introduced thereby and under pressure into the preprofile forming duct (38; 38x).

30. Process according to claim 29, **characterised in that** a single-screw extruder (24; 24x) is used.

31. Process according to claim 30, **characterised in that** a single-screw extruder (24; 24x) with a three-stage screw is used, which has an intake zone (226x), a compression zone (228x) and a discharge zone (230x).

32. Process according to one of claims 29 to 31, **characterised in that** the extrudable mixture is released by the extruder (24; 24x) via a restricted section (34; 236x) to the preprofile forming duct.

33. Process according to claim 32, **characterised in that** the restricted section (236x) is designed as a homogenising section.

34. Process according to one of claims 1 to 33, **characterised in that** the preprofile forming duct (38; 38x) is kept closed at its end remote from the filling location until it is completely filled.

35. Process according to claim 34, **characterised in that** the at least partially cured preprofile (10; 10x) is removed by being pushed out by means of an expulsion force acting from the filling location end of the preprofile forming duct (38; 38x) and/or by extracting the preprofile (10; 10x) by means of an extraction force applied downstream of the end remote from the filling location.

36. Process according to claim 35, **characterised in that** the at least partially cured preprofile (10x) is removed partly by refilling of the preprofile forming duct (38x) from its filling location end with extrudable mixture, and partly by withdrawing the already partially expelled preprofile (10x).

37. Process according to claim 36, **characterised in that** the at least partially cured preprofile (10x) is removed by means of drawing rollers (268x).

38. Process according to claim 36 or 37, **characterised in that** withdrawal of the preprofile (10x) is initiated at a speed exceeding the progress of refilling of the preprofile forming duct (38x) after the trailing end of an at least partially cured preprofile (10x) has passed a boundary point (288x) of the preprofile forming duct (38x) close to the outlet, such that a spacing is produced between the trailing end of the at least partially cured preprofile (10x) which is emerging and the leading face of the refilling, the end of the preprofile forming duct (38x) remote from the filling location is closed in the region of this spacing and the preprofile forming duct (38x) is then filled until a predetermined filling pressure is reached, whereupon the preprofile forming duct (38x) is separated at its filling location end from the inflow of a further quantity of extrudable mixture and the new filling of extrudable mixture contained in the preprofile forming duct (38x) is exposed to at least partial curing.

39. Process according to one of claims 29 to 38, **characterised in that** the extrudable mixture is introduced from the extruder (24x), through a thermal insulating section (278x) into the preprofile forming duct (38x).

40. Process according to one of claims 36 to 39, **characterised in that** the preprofile forming duct (38x) is cooled in the region of its filling location end at least at the start of the introduction of a new batch of extrudable mixture in such a way that rapid curing of the leading end of the new batch is initiated.

41. Process according to claim 40, **characterised in that** the preprofile forming duct (38x) is cooled more intensely in the region of its filling location end than in the part of its length adjoining downstream.

42. Process according to one of claims 38 to 41, **characterised in that** the withdrawal movement is initiated when the leading end of the respective partially expelled preprofile (10x) overruns a predetermined position (288x), this moment preferably being determined by means of a photocell (288x).

43. Process according to claim 42, **characterised in that** the end of the preprofile forming duct (38x) remote from the filling location is closed with a predetermined time delay (304x) after the start of the withdrawal movement of the respective preprofile (10x).

44. Process according to one of claims 38 to 43, **characterised in that** the preprofile forming duct (38x) is separated from the inflow (272x) of the extrudable mixture in accordance with the pressure build-up in the preprofile forming duct (38x), the pressure build-up preferably being measured in the vicinity of the filling location end of the preprofile forming duct (38x).

45. Process according to one of claims 1 to 44, **characterised in that** a plurality of preprofile forming ducts (38x1 to 38x10) are successively connected in periodic repetition to an inflow point (268x) of extrudable mixture.

46. Process according to claim 45, **characterised in that** the plurality of preprofile forming ducts (38) arranged on a rotary carrier (36) are successively aligned with the inflow point (34).

47. Process according to claim 45, **characterised in that** the extrudable mixture is introduced from the inflow point (268x) into a distribution line system (270x) which is connected to a plurality of preprofile forming ducts (38x1 to 38x10) by a corresponding plurality of connection valves (276x1 to 276x10) and **in that** at least and preferably one connection valve (276x1 to 276x10) respectively is opened in succession, preferably according to a periodically repeatable programme.

48. Process according to claim 47, **characterised in that** the extrudable mixture is introduced from the inflow point (268x) into a distribution line (270x), between the inflow-side end and the inflow-remote end of which a plurality of connection valves (276x1 to 276x5) are distributed in the longitudinal direction of the distribution line (270x), **in that** at the start of a filling cycle of the preprofile forming ducts (38x1 to 38x5) connected to the connection valves (276x1 to 276x5) the distribution line (270x) is initially cleaned at its inflow-remote end by opening a cleaning valve (274x1) and the connection valves (276x1 to 276x5) are then opened in succession from the inflow-remote end through to the inflow end, this process being carried out in succession for the various distribution lines (270x upper section; 270x lower section) in the presence of one or more further appropriate distribution lines (270x lower section) connected to the inflow point (268x).

49. Process according to one of claims 1 to 48, **characterised in that** the preprofiles (10, 10x) are produced in the respective preprofile forming duct (38, 38x) with a length of approximately 0.5 to 6 m, preferably approximately 4.5 m.

50. Process according to one of claims 1 to 49, **characterised in that** the preprofiles (10; 10x) are produced with solid cross-section.

51. Process according to one of claims 1 to 50, **characterised in that** the preprofile forming duct (38, 38x) is filled during such flow conditions of the extrudable mixture that in the event of elongate fibre-like particles being present in the second blend component these particles are arranged predominantly parallel to the respective longitudinal direction of the profile.

52. Process according to one of claims 1 to 51, **characterised in that** the preprofiles (10, 10x) are placed on a preprofile depositing surface (50; 284x) in the course of discharge from the respective preprofile forming duct (38; 38x) and after complete discharge from the respective preprofile forming duct (38; 38x) are transported to a machining station (60; 60x) and are subjected to a shrinkage process there.

53. Process according to claim 52, **characterised in that** the transportation takes place, at least over part of the transportation distance, in a direction transverse to the longitudinal axis of the respective preprofile (10; 10x).

54. Process according to one of claims 29 to 53, **characterised in that** the extruder (24; 24x) is operated continuously and **in that** a buffer volume (42) is provided in the region of the connection of the extruder (24; 24x) to the preprofile forming duct (38; 38x) or a plurality of preprofile forming ducts (38x1 to 38x10), which buffer volume (42) respectively receives extrudable mixture when the inflow of the mixture to the preprofile forming duct (38; 38x) or the preprofile forming ducts (38x1 to 38x10) is reduced or interrupted.

55. Process according to one of claims 25 to 54, **characterised in that** the pellets are supplied to an extruder (24x) in the preheated state of, for example, 60°C.

56. Process according to claim 55, **characterised in that** the pellets are cooled down from their temperature attained during pelletisation to an extruder feed temperature and are supplied to the extruder (24x) at this extruder feed temperature.

57. Process according to one of claims 1 to 56, **characterised in that** small components, such as lubricants, pigments and stabilisers are added to the extrudable mixture.

58. Process according to claim 57, **characterised in that** the small components are added to the first or second blend components or, if pellets have been formed, to the pellets.

59. Process according to one of claims 57 and 58, **characterised in that** a black pigment, in particular carbon black, is added.

60. Process according to one of claims 1 to 59, **characterised in that** the preprofile (10; 10x) is machined in a machining station (60, 60x) with a plurality of rotating machining heads (64a to d) distributed over the periphery of the preprofile (10, 10x), which machining heads (64a to d) are optionally arranged one behind the other in the direction of passage of the preprofile (10, 10x).

61. Process according to one of claims 1 to 60, **characterised in that** the volume of removed material which is supplied to the preprofile (10, 10x) during machining is limited in such a way that substantially no thermoplasticisation of the thermoplastic content occurs in the respective machined preprofile (10, 10x).

62. Process according to one of claims 1 to 61, **characterised in that** the intermediate profile (66) obtained by the machining is supplied through a centring duct (68) adapted to the profile to a coating duct which is larger than the preprofile (10) by an amount corresponding to the coating thickness and is provided with at least one supply line (78) for coating compound and optionally distribution means (70, 72, 76).

63. Process according to claim 62, **characterised in that** after partial curing the intermediate profile (66) coated with coating compound (80) is exposed in a post-profiling duct, in particular during passage through a cooling bath (at 82), to a surface-levelling vacuum (at 84).

64. Process according to one of claims 1 to 63, **characterised in that** the coating compound (80) is applied in a layer thickness of approximately 0.1 to approximately 2.0 mm, preferably 0.7 mm to 0.8 mm.

65. Process according to one of claims 1 to 64, **characterised in that** a thermoplastic coating compound (80), for example based on polyolefin, ABS or PVC, is applied.

66. Process according to one of claims 1 to 65, **characterised in that** coating compound (80) containing pigment, in particular white pigment, is used so the surface of the intermediate profile (66) is substantially invisible.

67. Process according to one of claims 1 to 66, **characterised in that** the intermediate profile (66xf, 66xb) is covered at least on part of its profile periphery by a hardening profile (308x, 310x).

68. Process according to claim 67, **characterised in that** a metal profile is used as hardening profile (308x, 310x).

69. Process according to claim 68, **characterised in that** an aluminium profile is used as hardening profile (308x, 310x).

70. Process according to one of claims 67 to 69, **characterised in that** the hardening profile (308x, 310x) consists of a supporting layer (312x) and a decorative layer (314x), for example an aluminium layer (312x) and a paint or lacquer layer (314x), applied to the visible side of the aluminium layer (312x).

71. Process according to one of claims 67 to 70, **characterised in that** the hardening profile (308x, 310x) is provided with a protective film (316x) on its visible side.

72. Process according to one of claims 67 to 71, **characterised in that** the hardening profile (308x, 310x) is formed on the intermediate profile (66xb, 66xf) from a flat strip of intermediate material.

73. Process according to one of claims 67 to 72, **characterised in that** the hardening profile (308x, 310x) is at least partially pre-formed immediately prior to application to the intermediate profile (66xf, 66xb) and is applied in the pre-formed state to the intermediate profile (66xf, 66xb).

74. Process according to one of claims 67 to 73, **characterised in that** the hardening profile (308x, 310x) is secured to the intermediate profile (66xf, 66xb) by gluing.

75. Process according to claim 74, **characterised in that** adhesive (318x) is used as a pre-formed adhesive layer.

76. Process according to claim 75, **characterised in that** the adhesive (318x) is used as a coating of the hardening profile (308x, 310x).

77. Process according to claim 75, **characterised in that** the adhesive is used as a separate strip material and is applied immediately prior to joining of the hardening profile (308x, 310x) to the intermediate profile (66xf, 66xb) either to the intermediate material of the hardening profile (308x, 310x) or to the intermediate profile (66xf, 66xb).

78. Process according to one of claims 67 to 77, **characterised in that** the hardening profile (308x, 310x) is secured to the intermediate profile (66xf, 66xb) at least partially in an interlocking manner.

79. Process according to claim 78, **characterised in that** the hardening layer (308x, 310x) is designed with an interlocking flange (322x) at least at one edge.

80. Process according to one of claims 67 to 79, **characterised in that** in the case of casement or door or window frame profiles (66xf, 66xb), the hardening profile is applied in the form of two partial profile shells (310x; 308x) which are spaced apart from one another at the profile sides of the intermediate profile (66xf, 66xb) corresponding to the internal peripheral face and the external peripheral face of the respective frame (66xf, 66xb).

81. Process according to one of claims 67 to 80, **characterised in that** the hardening profile is used at least at one of its profile edges to form holding edges (350x), for example for sealant or putty.

82. Process according to one of claims 1 to 81, **characterised in that** in the case of further processing of an end profile (90) obtained by applying the hardening profile (308x, 310x) to form a window or door, a profile material section of the end profile is mitred at a respective corner-forming point and is connected to a correspondingly mitred abutting profile material section (96) by at least one screw (94) which traverses the mitre plane and optionally penetrates the hardening layer.

83. Process according to claim 82, **characterised in that** a curing sealing compound is placed on the mitred faces (96) of abutting profile material sections (92) prior to them being screwed together.

84. Process according to one of claims 1 to 83, **characterised in that** the profile material completed to form an end profile is produced with a fixing groove (98) for a pane of glass (100) or other filling panel and this is fixed in the fixing grooves (98) when joining the profile material sections (92) to form the respective frame.

85. Process according to one of claims 1 to 84, **characterised in that** fittings are attached to the respective frame by conventional wood screws (94), optionally without predrilled holes.

86. Process according to claim 85, **characterised in that** the wood screws are introduced through the hardening layer (308x, 310x) into the respective intermediate profile (66xf, 66xb).

87. Process according to one of claims 1 to 86, **characterised in that** the profile regions (346x) of the end profile not covered by the hardening layer are left in the surface condition achieved after preprofile production or intermediate profile production.

88. Process according to claim 87, **characterised in that** during preprofile production a quantity of pigment is added such that the surfaces produced during preprofile formation and optionally machined during intermediate profile formation have a uniform colour, in particular black colour.

89. Device for producing a profile material, in particular a preprofile in the context of the process according to one of claims 1 to 88, comprising an extruder (24x) with a filling point (231x) for feeding in the blend components of a thermoplastic mixture and with an outflow point (268x) for discharging a thermoplasticised extrudable mixture, **characterised by** a stationary distribution line (270x) with an inflow point (268x) connected to the outflow point (268x) of the extruder, a plurality of duct feed connections (272x1 to 272x10) on the stationary distribution line (270x), these duct feed connections (272x1 to 272x10) in conjunction with a respective profile forming duct (38x1 to 38x10), connection valves (276x1 to 276x10) between the individual profile forming ducts (38x1 to 38x10) and the distribution line (270x), profile discharge slides (282x1 to 282x10) at the downstream ends of the profile forming ducts (38x1 to 38x10), a withdrawal device (286x1 to 286x10) downstream of the respective downstream end of the profile forming ducts (38x1 to 38x10) and programme control means with a filling status, expulsion, withdrawal and time lapse sensor system, which
- close the respective connection valve (276x1) after filling of a profile forming duct (38x1) ;
- open the relevant profile discharge slide (282x1) and the relevant connection valve (276x1) after a cooling period for cooling the mixed filling contained in the profile forming duct (38x1) ;
- subject the partially expelled profile (10x1) to the action of the withdrawal device (286x1) and separate it from the leading face of the topped up mixture after partial expulsion of the already cured profile (10x1) by the mixture subsequently flowing via the connection valve (276x1);
- after separation of the trailing end of the profile (10x1) and the leading face of the subsequently flowing mixture, close the discharge slide (282x1) inside the separating gap formed in this way and
- then completely fill the profile forming duct (38x1) again until a filling status required for the formation of a further profile (10x1) is attained.

90. Device according to claim 89, **characterised in that** the profile forming ducts (38x1 to 38x10) are arranged in a cooling liquid bath (280x).

91. Device according to one of claims 89 and 90, **characterised by** a design of the control to the effect that the withdrawal device (286x1) becomes active when the leading end of the profile (10x1) respectively subjected to expulsion reaches a predetermined point (288x) downstream of the discharge slide (282x1) and in that the discharge slide (282x1) is closed if the trailing end of the profile (10x1) subjected to expulsion has reached a predetermined distance from the leading face of the topped up mixture.

92. Device according to one of claims 89 to 91, **characterised by** a design of the control to the effect that the connection valve (276x1) of a profile forming duct is closed if a predetermined filling pressure is detected in the profile forming duct.

93. Device according to one of claims 89 to 92, **characterised in that** a depositing area (284x) for depositing the respectively ejected profiles (10x) is provided adjacent to the discharge slides (282x1 to 282x10) of the profile forming ducts (38x1 to 38x10) and **in that** a conveyor (298x) with conveying direction extending transversely to the profile axis is connected to the depositing table, optionally with interposition of a converter (290x).

94. Device according to one of claims 89 to 93, **characterised in that** the outflow point of the extruder (24x) is designed with a restricting or homogenising device (236x) to which the distribution line (270x) is connected.

95. Device according to one of claims 89 to 94, **characterised in that** the extruder (24x) is designed for processing pelletised mixture.

96. Device according to claim 95, **characterised in that** the extruder (24x) is designed with a substantially radial and, in cross-section, substantially rectangular feed shaft (231x).

97. Device according to one of claims 89 to 96, **characterised in that** the cylinder (26x) of the extruder (24x) is designed at least in the region of an intake zone (226x) with impeding means (232x) for impeding co-rotation of the feed material.

98. Device according to claim 97, **characterised in that** the impeding means (232x) are formed from substantially axially aligned grooves (232x) on the internal peripheral face of the cylinder (226x).

99. Device according to claim 98, **characterised in that** the grooves (232x) in the axial direction of the cylinder decrease in depth toward the outflow end (268x).

100. Profile material, produced by the process according to one of claims 1 to 88, in particular for producing profile frames for window and door production, consisting of a solid profile (66xf, 66xb), which in addition to thermoplastic components contains fillers and is provided on at least portions of its profile periphery with at least one hardening layer (310x, 308x) in the form of a sheet metal profile.

101. Profile material according to claim 100, **characterised in that** the sheet metal profile (310x, 308x) is formed from an aluminium profile.

102. Profile material according to one of claims 100 or 101, **characterised in that** the sheet metal profile (310x, 308x) is provided on its visible side with a paint or lacquer layer (314x).

103. Profile material according to one of claims 100 to 102, **characterised in that** the sheet metal profile (310x, 308x) is glued to the solid profile (66xf, 66xb).

104. Profile material according to one of claims 100 to 103, **characterised in that** the sheet metal profile (310x, 308x) is held in interlocking engagement with the solid profile (66xf, 66xb).

105. Profile material according to one of claims 100 to 104, **characterised in that** at least one edge (350x) of the sheet metal profile is designed as a retaining edge, for example for sealant or putty (336x).

106. Profile material according to one of claims 100 to 105, **characterised in that** the sheet metal profile (308x, 310x) is formed from two profile shells (308x, 310x), of which one, with reference to the design of a finished window, covers a spatially internal region of the profile surface and of which the other covers a spatially external region of the profile surface, the two profile shells being spaced apart in the case of a casement profile (66xf) in the profile region of the pane bed (322x) and in the profile region of the frame rebate, and being spaced apart in the case of a door or window frame profile (66xb) in the profile region of the door or window frame rebate and the wall opening-side peripheral face.

107. Profile material according to one of claims 100 to 106, **characterised in that** the peripheral face (346x) of the solid profile (66xb) is untreated or merely machined in the regions (346x) not covered by the sheet metal profile (308x, 310x).

108. Profile material according to claim 107, **characterised in that** the region (346x) not covered by the sheet metal profile is adjusted by appropriate pigment content to a uniform, in particular black, colour.

109. Window frame, namely casement or window frame, produced from a profile material according to one of claims 100 to 108, **characterised in that** profile limbs adjacent to one another are mitred adjacent to one another and are screwed or glued to one another in the mitred region.

110. Frame combination consisting of a casement and a window or door frame, each produced from a profile material according to one of claims 100 to 108, **characterised in that** uniform preprofiles are used for producing the casement and the window or door frame, which preprofiles differ from one another merely by different degrees of machining and/or a different coating with sheet metal profiles.

## Revendications

1. Procédé pour la fabrication d'un matériau profilé (10,10x) convenant en particulier pour être ensuite transformé dans la production de fenêtres et de portes, en utilisant un matériau thermoplastique avec thermoplastification du matériau et extrusion du matériau thermoplastifié, comprenant les dispositions suivantes :
a) on forme un premier composant de mélange constitué de déchets de matière synthétique thermoplastique ;
b) on prépare un deuxième composant de mélange contenant des additifs ;
c) le premier et le deuxième composant du mélange sont intimement mélangés l'un avec l'autre, compactés et mélangés en un mélange apte à être extrudé par thermoplastification du premier composant du mélange,
le procédé étant **caractérisé par** les autres dispositions suivantes :
d) le mélange apte à être extrudé est introduit sous pression dans un canal (38, 38x) de formation de préprofilé jusqu'à remplir ce dernier, y est façonné en un préprofilé (10, 10x) à paroi épaisse, est durci au moins partiellement par refroidissement et ensuite est retiré du canal (38, 38x) de formation de préprofilé sous la forme d'un tronçon allongé dont la longueur correspond au canal de formation de préprofilé ;
e) on laisse le retrait se développer dans le tronçon de préprofilé (10) pendant un temps d'attente qui suffit pour que se développe la majeure partie du retrait auquel on peut globalement s'attendre ;
f) après écoulement de ce temps d'attente, le préprofilé (10, 10x) est façonné par tronçon en un profilé intermédiaire (66 ; 66xf, 66xb), par enlèvement de matière sur au moins des parties de sa périphérie ; et
g) le profilé intermédiaire (66 ; 66xf, 66xb) est recouvert d'une couche de finition de surface (80 ; 308x, 310x) au moins sur une partie de sa périphérie.

2. Procédé selon la revendication 1, **caractérisé en ce que** l'on utilise comme déchets de matière synthétique thermoplastique des déchets de matière synthétique d'origine industrielle et/ou urbaine et/ou domestique.

3. Procédé selon la revendication 1 ou 2, **caractérisé en ce que** l'on utilise comme déchets de matière synthétique principalement des déchets de matière synthétique à base de polyoléfine (à base de PE et/ou à base de PP) et/ou des déchets de matière synthétique à base d'ABS.

4. Procédé selon l'une des revendications 1 à 3,
**caractérisé en ce que** l'on utilise principalement des feuilles ou des déchets de feuilles en couche mince, par exemple des déchets de feuilles d'emballage, de feuilles de recouvrement, de feuilles de toiture ou de matériaux pour récipients.

5. Procédé selon l'une des revendications 1 à 4,
**caractérisé en ce que** les déchets de matière synthétique sont fournis sous forme de ballots.

6. Procédé selon l'une des revendications 1 à 5,
**caractérisé en ce que** l'on utilise comme déchets de matière synthétique des fractions triées de déchets mixtes, en particulier de déchets urbains ou de déchets domestiques.

7. Procédé selon l'une des revendications 1 à 6,
**caractérisé en ce que** les déchets de matière synthétique subissent un déchiquetage.

8. Procédé selon la revendication 7, **caractérisé en ce que** les déchets de matière synthétique subissent un déchiquetage à une taille inférieure à 80 mm, de préférence inférieure à 20 mm de longueur axiale maximale.

9. Procédé selon l'une des revendications 1 à 8,
**caractérisé en ce que** dans la mesure où ils sont fortement encrassés, les déchets de matière synthétique subissent au moins un traitement de nettoyage.

10. Procédé selon la revendication 9, **caractérisé en ce que** le traitement de nettoyage au moins prévu s'effectue sans lavage humide.

11. Procédé selon l'une des revendications 9 ou 10, **caractérisé en ce que** le traitement de nettoyage au moins prévu vise à éliminer des pièces métalliques telles que des pièces de fer et d'autres pièces en matières dures quelconques.

12. Procédé selon l'une des revendications 1 à 11, **caractérisé en ce que** les déchets de matière synthétique sont séchés à une humidité résiduelle inférieure à 3 % en poids, de préférence inférieure à 1 % en poids de teneur en eau.

13. Procédé selon la revendication 12, **caractérisé en ce que** le séchage est réalisé lorsque le déchiquetage est terminé.

14. Procédé selon la revendication 13, **caractérisé en ce qu'**au cours du déchiquetage ou immédiatement après que le déchiquetage est terminé, on exécute un premier traitement de nettoyage, et **en ce qu'**au cours du séchage ou lorsque le séchage est terminé, on exécute un autre traitement de nettoyage.

15. Procédé selon l'une des revendications 1 à 14, **caractérisé en ce que** le deuxième composant du mélange est au moins en partie constitué d'un produit fibreux.

16. Procédé selon la revendication 15, **caractérisé en ce que** le deuxième composant du mélange est au moins en partie constitué de produits agricoles sous forme broyée ou défibrée, en particulier de la paille de céréales ou de la ramie (miskanthus).

17. Procédé selon l'une des revendications 1 à 16, **caractérisé en ce que** le deuxième composant du mélange est déchiqueté en particules d'une taille d'au plus 5 mm, de préférence d'au plus 3 mm de longueur axiale maximale, de préférence par broyage ou défibrage.

18. Procédé selon l'une des revendications 1 à 17, **caractérisé en ce que** le deuxième composant du mélange est séché à une teneur en eau d'au plus 3 % en poids, de préférence d'au plus 1 % en poids.

19. Procédé selon l'une des revendications 1 à 18, **caractérisé en ce que** le premier et/ou le deuxième composant du mélange sont entreposés dans un silo de réserve (12, 18 ; 12x, 18x) à proximité immédiate du lieu du rassemblement.

20. Procédé selon l'une des revendications 1 à 19,
**caractérisé en ce que** les déchets de matière synthétique d'origine industrielle, domestique ou urbaine, éventuellement déchiquetés, sont mélangés avec le deuxième composant du mélange sans façonnage intermédiaire par thermoplastification intermédiaire, déformation intermédiaire, refroidissement intermédiaire ou réduction intermédiaire de taille.

21. Procédé selon l'une des revendications 1 à 20, **caractérisé en ce que** les déchets de matière synthétique et/ou le deuxième composant du mélange sont amenés au mélange sous une pression de compactage.

22. Procédé selon la revendication 21, **caractérisé en ce que** le premier et/ou le deuxième composant du mélange sont entreposés dans un silo de réserve (12, 18) à proximité immédiate du lieu du rassemblement, de telle sorte que la pression statique de la hauteur de stockage dans le silo de réserve (12, 18) concerné, éventuellement soutenue par des moyens de compactage mécaniques (16, 20), sert au compactage de chaque composant du mélange sur le site du rassemblement.

23. Procédé selon l'une des revendications 1 à 22, **caractérisé en ce que** le rapport pondéral entre le premier composant du mélange et le deuxième composant du mélange est maintenu dans un rapport de 6 parties en poids de déchets de matière synthétique pour 1 partie en poids d'additif à 4 parties en poids de déchets de matière synthétique pour 1 partie en poids d'additif, de préférence d'environ 5 parties en poids de déchets de matière synthétique pour une partie en poids d'additif.

24. Procédé selon l'une des revendications 1 à 23, **caractérisé en ce que** les deux composants du mélange sont facultativement amenés par l'intermédiaire d'un étage de prémélange (22) situé en amont à une extrudeuse à vis (24) qui sert à poursuivre le mélange et le compactage des deux composants du mélange et à thermoplastifier le premier composant du mélange.

25. Procédé selon l'une des revendications 1 à 19, 21 à 24, **caractérisé en ce que** les composants du mélange sont mélangés avec fusion au moins partielle du premier composant du mélange, et ensuite pelletisés et transformés plus avant sous forme de pellets.

26. Procédé selon la revendication 25, **caractérisé en ce que** pour le mélange et la pelletisation, on utilise une matrice annulaire (204x) dotée de cylindres de pétrissage (208x).

27. Procédé selon la revendication 25 ou 26,
**caractérisé en ce que** les composants du mélange pelletisés sont recueillis à une température de 105° C à 130° C, de préférence de 112° C, et refroidis en dessous de 80° C dans un dispositif de refroidissement situé en aval.

28. Procédé selon l'une des revendications 25 à 27, **caractérisé en ce que** le premier et/ou le deuxième composant du mélange sont entreposés dans un silo de réserve doté de dispositifs actifs de brassage ou de flocage et situé à proximité immédiate du site du rassemblement, de telle sorte que la pression statique de la hauteur de stockage n'influence pas négativement l'extraction du produit.

29. Procédé selon l'une des revendications 1 à 28, **caractérisé en ce que** le mélange apte à être extrudé est créé dans une extrudeuse à vis (24 ; 24x) et est introduit sous pression par cette dernière dans le canal (38 ; 38x) de formation de préprofilé.

30. Procédé selon la revendication 29, **caractérisé en ce que** l'on utilise une extrudeuse à une vis (24 ; 24x).

31. Procédé selon la revendication 30, **caractérisé en ce que** l'on utilise une extrudeuse à une vis (24 ; 24x) dotée d'une vis à trois étages, qui présente une zone d'introduction (226x), une zone de compression (228x) et une zone d'extraction (230x).

32. Procédé selon l'une des revendications 29 à 31, **caractérisé en ce que** l'extrudeuse à vis (24 ; 24x) délivre le mélange apte à étre extrudé au canal de formation de préprofilé par l'intermédiaire d'une zone d'accumulation (34 ; 236x).

33. Procédé selon la revendication 32, **caractérisé en ce que** la zone d'accumulation (236x) est configurée comme zone d'homogénéisation.

34. Procédé selon l'une des revendications 1 à 33, **caractérisé en ce que** l'un des canaux (38 ; 38x) de formation de préprofilé est maintenu fermé à son extrémité éloignée du remplissage jusqu'à être rempli complètement.

35. Procédé selon la revendication 34, **caractérisé en ce que** l'enlèvement du préprofilé (10 ; 10x) au moins partiellement durci s'effectue par avancement au moyen d'une force d'expulsion agissant depuis l'extrémité située du côté du remplissage du canal (38 ; 38x) de formation de préprofilé et/ou par extraction du préprofilé (10 ; 10x) au moyen d'une force de traction appliquée en aval de l'extrémité éloignée du remplissage.

36. Procédé selon la revendication 35, **caractérisé en ce que** l'enlèvement du préprofilé (10x) au moins partiellement durci s'effectue en partie par reprise du remplissage du canal (38x) de formation de préprofilé à son extrémité située du côté du remplissage par du mélange apte à être extrudé, et en partie par extraction du préprofilé (10x) qui a déjà été partiellement extrait.

37. Procédé selon la revendication 35, **caractérisé en ce que** l'extraction du préprofilé (10x) au moins partiellement durci s'effectue au moyen de cylindres d'extraction (268x).

38. Procédé selon la revendication 36 ou 37,
**caractérisé en ce qu'**après que l'extrémité aval d'un préprofilé (10x) au moins partiellement durci est passée en un emplacement frontière (288x) proche de la sortie du canal (38x) de formation de préprofilé, l'extraction du préprofilé (10x) est lancée à une vitesse qui dépasse l'avancement de la nouvelle charge de remplissage du canal (38x) de formation de préprofilé, de manière à créer un écart entre l'extrémité arrière du préprofilé (10x) au moins partiellement durci qui sort et le front avant de la nouvelle charge, l'extrémité éloignée du remplissage du canal (38x) de formation du préprofilé étant fermée dans la zone de cet écart, et le canal (38x) de formation de préprofilé étant rempli jusqu'à l'obtention d'une pression de remplissage prédéterminée, suite à quoi le canal (38x) de formation de préprofilé est séparé à son extrémité située du côté du remplissage de l'amenée de mélange apte à être extrudé, et la nouvelle charge de mélange apte à être extrudé contenue dans le canal (38x) de formation de préprofilé subit un durcissement au moins partiel.

39. Procédé selon l'une des revendications 29 à 38, **caractérisé en ce que** le mélange apte à être extrudé provenant de l'extrudeuse à vis (24x) est introduit dans le canal (38x) de formation de préprofilé après avoir traversé une zone thermiquement isolée (278x).

40. Procédé selon l'une des revendications 36 à 39, **caractérisé en ce que** dans la région de son extrémité située du côté du remplissage, au moins au début de l'introduction d'une nouvelle charge de mélange apte à être extrudé, le canal (38x) de formation de préprofilé est refroidi de manière à obtenir un durcissement rapide de l'extrémité avant de la nouvelle charge.

41. Procédé selon la revendication 40, **caractérisé en ce que** dans la région de son extrémité située du côté du remplissage, le canal (38x) de formation de préprofilé est refroidi plus fort que dans la partie de sa longueur qui s'y raccorde en aval.

42. Procédé selon l'une des revendications 38 à 41, **caractérisé en ce que** le déplacement d'extraction est amorcé lorsque l'extrémité avant du préprofilé (10x) qui est chaque fois sorti partiellement dépasse une position (288x) prédéterminée, cet instant étant détecté de préférence au moyen d'une photocellule (288x).

43. Procédé selon la revendication 42, **caractérisé en ce que** la fermeture de l'extrémité éloignée du remplissage du canal (38x) de formation de prëprofilé s'effectue avec un retard temporel prédéterminé (304x) après le début du déplacement d'extraction du préprofilé (10x) concerné.

44. Procédé selon l'une des revendications 38 à 43, **caractérisé en ce que** la séparation du canal (38x) de formation de préprofilé par rapport à l'amenée (272x) du mélange apte à être extrudé s'effectue après détermination de la pression qui s'est établie dans le canal (38x) de formation de préprofilé, l'établissement de la pression étant mesuré de préférence à proximité de l'extrémité située du côté du remplissage du canal (38x) de formation de préprofilé.

45. Procédé selon l'une des revendications 1 à 44, **caractérisé en ce qu'**une pluralité de canaux (38x1-38x10) de formation de préprofilé est raccordée successivement dans une répétition périodique à un emplacement d'amenée (268x) de mélange apte à être extrudé.

46. Procédé selon la revendication 45, **caractérisé en ce que** les différents canaux (38) de formation de préprofilé disposés sur un support périphérique (36) sont amenés successivement à s'aligner sur l'emplacement d'amenée (34).

47. Procédé selon la revendication 45, **caractérisé en ce que** le mélange apte à être extrudé provenant de l'emplacement d'amenée (268x) est introduit dans un système (270x) à conduit de répartition qui est raccordé à une pluralité de canaux (38x1-38x10) de formation de préprofilé par une pluralité correspondante de vannes de raccordement (276x1-276x10), et **en ce que** chaque fois au moins et de préférence une vanne de raccordement (276x1-276x10) est ouverte successivement, de préférence selon un programme répété périodiquement.

48. Procédé selon la revendication 47, **caractérisé en ce que** le mélange apte à être extrudé provenant de l'emplacement d'amenée (268x) est introduit dans un conduit de répartition (270x), une pluralité de vannes de raccordement (276x1-276x5) étant répartie dans le sens de la longueur du conduit de répartition (270x) entre son extrémité située du côté de l'amenée et son extrémité éloignée de l'amenée, **en ce qu'**au début d'un cycle de remplissage des canaux (38x1-38x5) de formation de préprofilés raccordés aux vannes de raccordement (276x1-276x5), le conduit de répartition (270x) est d'abord nettoyé à son extrémité éloignée de l'amenée par ouverture d'une vanne de nettoyage (274x1), et ensuite les vannes de raccordement (276x1-276x5) sont ouvertes successivement en avançant de l'extrémité éloignée de l'amenée vers l'extrémité proche de l'amenée, et lorsqu'un ou plusieurs autres conduits de répartition (270x partie inférieure) correspondants sont raccordés à l'emplacement de l'amenée (268x), cette opération est exécutée successivement pour les différents conduits de répartition (270x partie supérieure ; 270x partie inférieure).

49. Procédé selon l'une des revendications 1 à 48, **caractérisé en ce que** les préprofilés (10, 10x) sont fabriqués dans chaque canal (38, 38x) de formation de préprofilé à une longueur d'environ 0,5 à 6 m, de préférence d'environ 4,5 m.

50. Procédé selon l'une des revendications 1 à 49, **caractérisé en ce que** les préprofilés (10 ; 10x) sont fabriqués avec une section transversale pleine.

51. Procédé selon l'une des revendications 1 à 50,
**caractérisé en ce que** le remplissage du canal (38, 38x) de formation de préprofilë s'effectue dans des conditions d'écoulement du mélange apte à être extrudé telles qu'en cas de présence de particules fibreuses allongées dans le deuxième composant du mélange, ces particules s'orientent principalement en parallèle au sens de la longueur de chaque profilé.

52. Procédé selon l'une des revendications 1 à 51, **caractérisé en ce que** les préprofilés (10, 10x) sont déposés sur une surface (50 ; 284x) de pose de préprofilé au cours de leur sortie du canal (38 ; 38x) de formation de prëprofilé concerné, et après être complètement sortis du canal (38 ; 38x) de formation de préprofilé respectif, ils sont transportés vers un poste (60 ; 60x) de traitement par enlèvement de matière, et à cette occasion peuvent subir un retrait.

53. Procédé selon la revendication 52, **caractérisé en ce qu'**au moins sur une partie du parcours de transport, le transport s'effectue dans une direction transversale à l'axe longitudinal de chaque préprofilé (10 ; 10x).

54. Procédé selon l'une des revendications 29 à 53, **caractérisé en ce que** l'extrudeuse à vis (24 ; 24x) est utilisée en continu, et **en ce que** dans la région du raccordement de l'extrudeuse à vis (24 ; 24x) au canal (38 ; 38x) de formation de préprofilé ou à une pluralité de canaux (38x1-38x10) de formation de préprofilé, il est prévu un volume tampon (42) qui reçoit le mélange apte à étre extrudé chaque fois que l'amenée du mélange au canal (38 ; 38x) de formation de préprofilé ou aux canaux (38x1-38x10) de formation de préprofilé est réduite ou interrompue.

55. Procédé selon l'une des revendications 25 à 54, **caractérisé en ce que** les pellets sont amenés dans une extrudeuse à vis (24x) à l'état chaud, par exemple à 60°C.

56. Procédé selon la revendication 55, **caractérisé en ce que** les pellets sont refroidis depuis la température qu'ils ont atteint lors de la pelletisation jusqu'à une température d'alimentation d'extrudeuse et sont amenés à l'extrudeuse (24x) à cette température d'alimentation d'extrudeuse.

57. Procédé selon l'une des revendications 1 à 56, **caractérisé en ce que** des composants mineurs tels que des agents lubrifiants, des pigments colorés et des agents de stabilisation sont ajoutés au mélange apte à étre extrudé.

58. Procédé selon la revendication 57, **caractérisé en ce que** les composants mineurs sont ajoutés au premier ou au deuxième composant du mélange ou, dans la mesure où l'on forme des pellets, aux pellets.

59. Procédé selon l'une des revendications 57 et 58, **caractérisé en ce que** l'on ajoute un pigment coloré en noir, en particulier de la suie.

60. Procédé selon l'une des revendications 1 à 59, **caractérisé en ce que** le traitement par enlèvement de matière du préprofilé (10 ; 10x) s'effectue dans un poste (60, 60x) de traitement par enlèvement de matière comportant une pluralité de têtes de traitement (64a-d) rotatives réparties à la périphérie du préprofilé (10, 10x) et qui sont facultativement disposées l'une derrière l'autre dans la direction d'avancement du préprofilé (10, 10x).

61. Procédé selon l'une des revendications 1 à 60,
**caractérisé en ce que** la puissance d'enlèvement de matière appliquée sur le préprofilé (10, 10x) lors du traitement d'enlèvement de matière est limitée de telle sorte qu'essentiellement aucune thermoplastification du thermoplastique contenu n'a lieu dans le préprofilé (10, 10x) traité concerné.

62. Procédé selon l'une des revendications 1 à 61,
**caractérisé en ce que** le profilé intermédiaire (66) obtenu après le traitement d'enlèvement de matière est amené, par l'intermédiaire d'un canal de centrage (68) dont le profil lui est adapté, à un canal de recouvrement qui présente par rapport au préprofilé (10) un surdimensionnement qui correspond à l'épaisseur du recouvrement, et qui est doté d'au moins un conduit d'amenée (78) pour une pâte de recouvrement et facultativement de moyens de répartition (70, 72, 76).

63. Procédé selon la revendication 62, **caractérisé en ce que** le profilé intermédiaire (66) revêtu d'une pâte de revêtement (80) est exposé (en 84) à une dépression d'égalisation de surface dans un canal de profilage secondaire, après son durcissement partiel, et en particulier pendant sa traversée d'un bain de refroidissement (en 82).

64. Procédé selon l'une des revendications 1 à 63, **caractérisé en ce que** la pâte de revêtement (80) est appliquée en couche d'une épaisseur d'environ 0,1 à environ 2,0 mm, de préférence de 0,7 mm à 0,8 mm.

65. Procédé selon l'une des revendications 1 à 64,
**caractérisé en ce que** l'on applique une pâte de revêtement (80) thermoplastique, par exemple à base de polyoléfine, à base d'ABS ou à base de PVC.

66. Procédé selon l'une des revendications 1 à 65,
**caractérisé en ce que** la pâte de revêtement (80) utilisée contient une teneur en pigments colorés, en particulier en pigments colorés en blanc, de sorte que la surface du profilé intermédiaire (66) soit essentiellement invisible.

67. Procédé selon l'une des revendications 1 à 66,
**caractérisé en ce que** le profilé intermédiaire (66xf, 66xb) est revêtu d'un profilé de finition (308x, 310x) au moins sur une partie de son périmètre.

68. Procédé selon la revendication 67, **caractérisé en ce que** l'on utilise comme profilé de finition (308x, 310x) un profilé métallique.

69. Procédé selon la revendication 68, **caractérisé en ce que** l'on utilise comme profilé de finition (308x, 310x) un profilé d'aluminium.

70. Procédé selon l'une des revendications 67 à 69, **caractérisé en ce que** le profilé de finition (308x, 310x) est constitué d'une couche de support (312x) et d'une couche décorative (314x), par exemple une couche d'aluminium (312x) et une couche de couleur ou de vernis (314x) appliquée sur le côté visible de la couche d'aluminium (312x).

71. Procédé selon l'une des revendications 67 à 70,
**caractérisé en ce que** le profilé de finition (308x, 310x) est doté d'une feuille de protection (316x) sur son côté visible.

72. Procédé selon l'une des revendications 67 à 71, **caractérisé en ce que** le profilé de finition (308x, 310x) est formé sur le profilé intermédiaire (66xb, 66xf) à partir d'une bande plane de matériau de départ.

73. Procédé selon l'une des revendications 67 à 72, **caractérisé en ce que** le profilé de finition (308x, 310x) est préformé au moins en partie immédiatement avant d'être appliqué sur le profilé intermédiaire (66xf, 66xb) et est appliqué sur le profilé intermédiaire (66xf, 66xb) à l'état préformé.

74. Procédé selon l'une des revendications 67 à 73, **caractérisé en ce que** le profilé de finition (308x, 310x) est fixé sur le profilé intermédiaire (66xf, 66xb) par collage.

75. Procédé selon la revendication 74, **caractérisé en ce que** l'adhésif (318x) est utilisé sous forme d'une couche d'adhésif préformée.

76. Procédé selon la revendication 75, **caractérisé en ce que** l'adhésif (318x) est utilisé en tant que recouvrement du profilé de finition (308x, 310x).

77. Procédé selon la revendication 75, **caractérisé en ce que** l'adhésif est utilisé sous la forme d'un matériau en bande séparée et est appliqué immédiatement avant l'assemblage du profilé de finition (308x, 310x) avec le profilé intermédiaire (66xf, 66xb), soit sur le matériau de départ du profilé de finition (308x, 310x) soit sur le profilé intermédiaire (66xf, 66xb).

78. Procédé selon l'une des revendications 67 à 77, **caractérisé en ce que** le profilé de finition (308x, 310x) est fixé sur le profilé intermédiaire (66xf, 66xb) au moins en partie en correspondance géométrique.

79. Procédé selon la revendication 78, **caractérisé en ce que** la couche de finition (308x, 310x) est configurée avec une bride de mise en correspondance géométrique (322x) sur au moins un bord.

80. Procédé selon l'une des revendications 67 à 79, **caractérisé en ce que** dans le cas de profilés (66xf, 66xb) pour cadre d'ouvrant ou cadre dormant, le profilé de finition est appliqué sous la forme de deux coquilles profilées partielles (310x ; 308x) qui, sur les côtés du profilé intermédiaire (66xf, 66xb), présentent l'une par rapport à l'autre un écart qui correspond à la surface périphérique intérieure et à la surface périphérique extérieure du cadre (66xf, 66xb) concerné.

81. Procédé selon l'une des revendications 67 à 80, **caractérisé en ce que** sur au moins un de ses bords, le profilé de finition est utilisé pour former des bords de retenue (350x), par exemple pour un matériau d'étanchéité ou un matériau de masticage.

82. Procédé selon l'une des revendications 1 à 81,
**caractérisé en ce que** dans le cas de la poursuite du traitement d'un profilé final (90) obtenu par application de la couche de finition (308x, 310x) en une fenêtre ou une porte, un tronçon du profilé final est découpé à onglet à l'emplacement d'un coin et est relié à un tronçon de matériau profilé (96) jointif et découpé de manière correspondante à onglet par au moins une vis (94) qui traverse le plan de l'onglet et qui traverse facultativement la couche de finition.

83. Procédé selon la revendication 82, **caractérisé en ce qu'**avant l'assemblage par vissage, on applique une pâte d'étanchéité durcissante sur la surface à onglet (96) de tronçons (92) jointifs de matériau profilé.

84. Procédé selon l'une des revendications 1 à 83, **caractérisé en ce que** l'on ménage dans le matériau profilé terminé en un profilé final une rainure de fixation (98) pour une vitre (100) ou une autre plaque de fermeture, et qu'on fixe ces dernières dans les rainures de fixation (98) des cadres correspondants au cours de l'assemblage des tronçons (92) de matériau profilé.

85. Procédé selon l'une des revendications 1 à 84, **caractérisé en ce que** l'on installe des pièces de ferrure sur le cadre concerné par des vis à bois (94) habituelles, facultativement sans préforage.

86. Procédé selon la revendication 85, **caractérisé en ce que** l'on installe les vis à bois à travers la couche de finition (308x, 310x) dans le profilé intermédiaire (66xf, 66xb) concerné.

87. Procédé selon l'une des revendications 1 à 86, **caractérisé en ce que** les zones (346x) du profilé final qui ne sont pas recouvertes par la couche de finition sont laissées dans l'état de surface obtenu après la fabrication du préprofilé ou après la fabrication du profilé intermédiaire.

88. Procédé selon la revendication 87, **caractérisé en ce que** lors de la préparation du préprofilé, on apporte une addition de pigments colorés en quantité telle que les surfaces obtenues lors de la formation du préprofilé et éventuellement travaillées par enlèvement de matière lors de la formation du profilé intermédiaire aient une coloration homogène, en particulier une couleur noire.

89. Dispositif pour la fabrication de matériau profilé, en particulier d'un préprofilé, dans le cadre du procédé selon l'une des revendications 1 à 88,
comprenant une extrudeuse à vis (24x) présentant un emplacement de remplissage (231x) pour l'introduction des composants d'un mélange thermoplastique et un emplacement de sortie (268x) pour délivrer un mélange thermoplastifié apte à être extrudé,
**caractérisé par** un conduit stationnaire de répartition (270x) doté d'un emplacement d'amenée (268x) relié à l'emplacement de sortie (268x) de l'extrudeuse à vis, une pluralité de raccordements d'alimentation de canal (272x1-272x10) au conduit stationnaire de répartition (270x), ces raccordements d'alimentation de canal (272x1-272x10) étant reliés chacun à un canal (38x1-38x10) de formation de profilé, des vannes de raccordement (276x1-276x10) entre les canaux individuels (38x1-38x10) de formation de profilé et le conduit de répartition (270x), des glissières (282x1-282x10) de sortie de profilé aux extrémités aval des canaux (38x1-38x10) de formation de profilé, un dispositif d'extraction (286x1-286x10) situé en aval de chaque extrémité aval des canaux (38x1-38x10) de formation de profilé, ainsi que des moyens de commande programmée avec des détecteurs de niveau de remplissage, de sortie, d'extraction et de déroulement dans le temps, qui
- lorsqu'un canal (38x1) de formation de profilé a été rempli, ferment la vanne de raccordement (276x1) concernée ;
- après une période de refroidissement destinée à refroidir la charge de mélange contenue dans le canal (38x1) de formation de profilé, ouvrent la glissière (282x1) de sortie de profilé associée et la vanne de raccordement (276x1) associée ;
- après sortie partielle du profilé (10x1) déjà durci par le mélange qui s'écoule par la vanne de raccordement (276x1), soumettent le profilé (10x1) partiellement sorti à l'action du dispositif d'extraction (286x1) et le séparent du front avant de la charge suivante du mélange ;
- lorsque la séparation de l'extrémité arrière du profilé (10x1) et du front avant de la charge suivante du mélange est terminée, ferment la glissière de sortie (282x1) à l'intérieur de l'interstice de séparation ainsi formé, et
- remplissent alors de nouveau complètement le canal (38x1) de formation de profilé jusqu'à l'obtention d'un niveau de remplissage nécessaire pour la formation d'un autre profilé (10x1).

90. Dispositif selon la revendication 89, **caractérisé en ce que** les canaux (38x1-38x10) de formation de profilé sont disposés dans un bain (280x) de liquide de refroidissement.

91. Dispositif selon l'une des revendications 89 et 90, **caractérisé par** une configuration de la commande telle que le dispositif d'extraction (286x1) est activé lorsque l'extrémité avant du profilé (10x1) en train de sortir atteint un endroit prédéterminé (288x) situé en aval de la glissière de sortie (282x1) et en ce que la glissière de sortie (282x1) est fermée lorsque l'extrémité arrière du profilé (10x1) en train de sortir a atteint une distance prédéterminée par rapport au front avant de la charge de mélange suivante.

92. Dispositif selon l'une des revendications 89 à 91, **caractérisé par** une configuration de la commande telle que la vanne de raccordement (276x1) d'un canal de formation de profilé est fermée lorsqu'une pression prédéterminée de remplissage a été détectée dans le canal de formation de profilé.

93. Dispositif selon l'une des revendications 89 à 92, **caractérisé en ce qu'**une surface de dépôt (284x) pour la pose du profilé (10x) chaque fois expulsé se raccorde aux glissières de sortie (282x1-282x10) des canaux (38x1-38x10) de formation de profilé, et **en ce qu'**un transporteur (298x) dont la direction de transport s'étend transversalement par rapport à l'axe du profilé se raccorde à la table de pose, éventuellement avec interposition d'un appareil de conversion (290x).

94. Dispositif selon l'une des revendications 89 à 93, **caractérisé en ce que** l'emplacement de sortie de l'extrudeuse à vis (24x) est configuré avec un dispositif d'accumulation ou d'homogénéisation (236x) auquel se raccorde le conduit de répartition (270x).

95. Dispositif selon l'une des revendications 89 à 94, **caractérisé en ce que** l'extrudeuse à vis (24x) est configurée pour le traitement d'un mélange pelletisé.

96. Dispositif selon la revendication 95, **caractérisé en ce que** l'extrudeuse à vis (24x) est configurée avec un puits d'alimentation (231x) essentiellement radial et de section transversale essentiellement rectangulaire.

97. Dispositif selon l'une des revendications 89 à 96, **caractérisé en ce qu'**au moins dans la région d'une zone d'introduction (226x), le cylindre (26x) de l'extrudeuse à vis (24x) est configuré avec des moyens de freinage (232x) pour le freinage de l'entraînement en rotation de la matière introduite.

98. Dispositif selon la revendication 97, **caractérisé en ce que** les moyens de freinage (232x) sont formés de rainures (232x) orientées essentiellement axialement et ménagées sur la surface périphérique intérieure du cylindre (226x).

99. Dispositif selon la revendication 98, **caractérisé en ce que** les rainures (232x) diminuent de profondeur dans la direction axiale du cylindre et vers l'extrémité de sortie (268x).

100. Matériau profilé, préparé selon le procédé de l'une des revendications 1 à 88, en particulier pour la fabrication de cadres profilés en production de fenêtres et de portes, constitué d'un profilé plein (66xf, 66xb) qui, en plus d'un composant thermoplastique, contient des charges et qui, au moins sur des parties de son périmètre, est doté d'au moins une couche de finition (310x, 308x) qui présente la forme d'un profilé en tôle.

101. Matériau profilé selon la revendication 100,
**caractérisé en ce que** le profilé en tôle (310x, 308x) est formé d'un profilé d'aluminium.

102. Matériau profilé selon l'une des revendications 100 ou 101, **caractérisé en ce que** sur sa couche visible, le profilé en tôle (310x, 308x) est doté d'une couche de peinture ou de vernis (314x).

103. Matériau profilé selon l'une des revendications 100 à 102, **caractérisé en ce que** le profilé en tôle (310x, 308x) est collé sur le profilé plein (66xf, 66xb).

104. Matériau profilé selon l'une des revendications 100 à 103, **caractérisé en ce que** le profilé en tôle (310x, 308x) est maintenu en engagement en correspondance géométrique sur le profilé plein (66xf, 66xb).

105. Matériau profilé selon l'une des revendications 100 à 104, **caractérisé en ce qu'**au moins un bord (350x) du profilé en tôle est configuré comme bord de retenue, par exemple pour un matériau d'étanchéité ou de masticage (336x).

106. Matériau profilé selon l'une des revendications 100 à 105, **caractérisé en ce que** le profilé en tôle (308x, 310x) est formé de deux coquilles profilées (308x, 310x) dont l'une recouvre une région de la surface du profilé située à l'intérieur en référence à la configuration d'une fenétre terminée et dont l'autre recouvre une zone de la surface du profilé située à l'extérieur, les deux coquilles de profilé présentant dans le cas d'un profilé (66xf) de cadre d'ouvrant une distance l'une par rapport à l'autre dans la région du profilé du lit de vitre (322x) et dans la région du profilé de la feuille de cadre, et dans le cas d'un profilé (66xb) de cadre dormant, elles présentent une distance l'une par rapport à l'autre dans la région du profilé de la feuille de cadre dormant et de la surface périphérique située du côté de la maçonnerie.

107. Matériau profilé selon l'une des revendications 100 à 106, **caractérisé en ce que** la surface périphérique (346x) du profilé plein (66xb) n'est pas traitée dans les zones (346x) non revêtues par le profilé en tôle (308x, 310x), ou n'est traitée que par un traitement d'enlèvement de matière.

108. Matériau profilé selon la revendication 107,
**caractérisé en ce que** la zone (346x) non recouverte par des profilés en tôle est colorée de manière homogène, en particulier en noir, par une teneur appropriée en pigments colorés.

109. Cadre de fenêtre, à savoir cadre d'ouvrant ou cadre dormant, réalisé en un matériau profilé selon l'une des revendications 100 à 108, **caractérisé en ce que** les ailes mutuellement adjacentes du profilé, découpées à onglet, se raccordent l'une à l'autre et sont vissées ou collées l'une à l'autre dans la région de l'onglet.

110. Combinaison de cadres constituée d'un cadre d'ouvrant et d'un cadre dormant, chacun d'eux fabriqué en un matériau profilé selon l'une des revendications 100 à 108, **caractérisée en ce que** pour la fabrication du cadre d'ouvrant et du cadre de dormant, on utilise des préprofilés identiques qui se distinguent les uns des autres uniquement par un traitement différent d'enlèvement de matière et/ou par un revêtement par différents profilés en tôle.
